(19) Europäisches Patentamt / European Patent Office / Office européen des brevets

(11) **EP 3 812 083 A1**

(12) **EUROPEAN PATENT APPLICATION**
published in accordance with Art. 153(4) EPC

(43) Date of publication:
**28.04.2021 Bulletin 2021/17**

(51) Int Cl.:
**B23K 31/00** (2006.01)   **B21C 37/08** (2006.01)
**C22C 38/00** (2006.01)   **C22C 38/58** (2006.01)
**C23C 2/12** (2006.01)

(21) Application number: **19823212.6**

(22) Date of filing: **15.05.2019**

(86) International application number:
**PCT/JP2019/019417**

(87) International publication number:
**WO 2019/244524 (26.12.2019 Gazette 2019/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.06.2018   JP 2018119189**
**22.06.2018   JP 2018119190**
**06.09.2018   JP 2018167169**
**26.10.2018   JP 2018202087**
**08.11.2018   PCT/JP2018/041553**
**22.01.2019   PCT/JP2019/001922**

(71) Applicant: **NIPPON STEEL CORPORATION**
**Chiyoda-ku**
**Tokyo 100-8071 (JP)**

(72) Inventors:
• **FUJIMOTO Hiroki**
**Tokyo 100-8071 (JP)**
• **YASUYAMA Masanori**
**Tokyo 100-8071 (JP)**
• **TATSUMI Yujiro**
**Tokyo 100-8071 (JP)**
• **FUKUCHI Hiroshi**
**Tokyo 100-8071 (JP)**
• **KOBAYASHI Shintaro**
**Tokyo 100-8071 (JP)**
• **FUJITA Soshi**
**Tokyo 100-8071 (JP)**
• **ZENIYA Tasuku**
**Tokyo 100-8071 (JP)**
• **SUZUKI Yuki**
**Tokyo 100-8071 (JP)**
• **ISHIDA Yoshinari**
**Tokyo 100-8071 (JP)**

(74) Representative: **Vossius & Partner**
**Patentanwälte Rechtsanwälte mbB**
**Siebertstrasse 3**
**81675 München (DE)**

(54) **STEEL SHEET, TAILORED BLANK, HOT-PRESS FORMED ARTICLE, STEEL PIPE, HOLLOW QUENCHING FORMED ARTICLE, METHOD FOR MANUFACTURING STEEL SHEET, METHOD FOR MANUFACTURING TAILORED BLANK, METHOD FOR MANUFACTURING HOT-PRESS FORMED ARTICLE, METHOD FOR MANUFACTURING STEEL PIPE, AND METHOD FOR MANUFACTURING HOLLOW QUENCHING FORMED ARTICLE**

(57) This steel sheet includes a first coated portion in which an intermetallic compound layer and an aluminum coating layer are provided on a surface of a base steel sheet in order from the base steel sheet side, a first exposed portion in which the base steel sheet is exposed, and a second coated portion in which the intermetallic compound layer and the aluminum coating layer are provided on the surface of the base steel sheet in order from the base steel sheet side, in which in a first direction which is perpendicular to a thickness direction of the steel sheet and is directed from the first coated portion to one end edge of the steel sheet, the first coated portion, the first exposed portion, the second coated portion, and the end edge of the steel sheet are disposed in this order on one surface of the base steel sheet, at least the first coated portion, the first exposed portion, and the end edge of the steel sheet are disposed in this order on the other surface of the base steel sheet in the first direction, and when viewing a cross section parallel to each of the first direction and the thickness direction of the steel sheet, the second coated portion is provided in a lower region which is located on the surface of the base steel sheet and on an inner side of the base steel sheet in the thickness direction of the steel sheet from a virtual line ex-

EP 3 812 083 A1

tending in the first direction from a boundary between the first exposed portion and the second coated portion.

FIG. 1

**Description**

[Technical Field of the Invention]

The present invention relates to a steel sheet, a tailored blank, a hot stamped product, a steel pipe, a hollow hot stamped product, a method of manufacturing a steel sheet, a method of manufacturing a tailored blank, a method of manufacturing a hot stamped product, a method of manufacturing a steel pipe, and a method of manufacturing a hollow hot stamped product.

The present application claims the priority based on Japanese Patent Application No. 2018-119189, filed on Jun. 22, 2018, Japanese Patent Application No. 2018-119190 filed in Japan on Jun. 22, 2018, Japanese Patent Application No. 2018-167169, filed on Sep. 6, 2018, Japanese Patent Application No. 2018-202087 filed on Oct. 26, 2018, International Application PCT/JP2018/041553, filed on Nov. 8, 2018, and International application PCT/JP2019/001922, filed on Jan. 22, 2019, the contents of which are incorporated herein.

[Related Art]

In recent years, in order to protect the global environment by reducing the emission amount of $CO_2$ gas, in the automotive field, the weight reduction of vehicle bodies has been an urgent problem. In order to solve this problem, studies on the application of high strength steel sheets have been actively carried out. The strength of steel sheets (coated steel sheets) has been gradually increasing.

As one of techniques for forming vehicle members, hot pressing (hereinafter sometimes referred to as "hot stamping") has attracted attention. In hot stamping, a steel sheet is heated to a high temperature and is press-formed in a temperature range of $Ar_3$ transformation temperature or higher. Further, in the hot stamping, the press-formed steel sheet is rapidly cooled through heat transfer using a die, and transformation is caused simultaneously with forming in a state of application of a pressing pressure. The hot stamping is a technique capable of manufacturing a hot stamped product (hereinafter, sometimes referred to as "hot-stamping formed product") having high strength and excellent shape fixability by the above steps.

In addition, in order to improve the yield and functionality of press-formed products for vehicle members, a tailored blank obtained by butting the end surfaces of at least two steel sheets and joining the end surfaces of the steel sheets by laser welding, plasma welding, or the like is suitably applied as a material for pressing. Since a plurality of steel sheets are joined according to the purpose in the tailored blank, the use of the tailored blank enables free change in the sheet thickness or the strength in a single product. As a result, the functionality of the vehicle member can be improved and the number of parts in the vehicle member can be reduced by using the tailored blank. In addition, it is possible to manufacture a high strength press-formed product in which the sheet thickness, strength, and the like are freely changed by performing hot stamping on the tailored blank.

In a case where a vehicle member is formed by hot stamping using a tailored blank as a material for pressing, the tailored blank is heated in a temperature range of, for example, 800°C to 1000°C. Therefore, for the tailored blank for hot stamping, a coated steel sheet coated with an aluminum coating such as Al-Si coating having a higher coating boiling point than Zn-based coating is often used.

Until now, as a steel sheet for forming a tailored blank, for example, a steel sheet for butt welding having a coating layer has been studied in various ways (for example, refer to Patent Documents 1 to 5).

The steel sheets for butt welding disclosed in Patent Documents 1 to 5 each have a base steel sheet, an aluminum coating layer provided on both surfaces of the base steel sheet, and an intermetallic compound layer formed between the base steel sheet and the aluminum coating layer.

In the steel sheet for butt welding disclosed in Patent Document 1, the aluminum coating layer is removed in a predetermined range from the end edge of the steel sheet for butt welding, and the intermetallic compound layer remains in the predetermined range. Then, a first coated portion in which the intermetallic compound layer and the aluminum coating layer are provided on the base steel sheet is formed adjacent to the predetermined range. The aluminum coating layer is removed using laser processing.

In the steel sheets for butt welding disclosed in Patent Documents 2 and 4, the aluminum coating layer and the intermetallic compound layer in the predetermined range are removed by a brush or laser processing.

In the steel sheet for butt welding disclosed in Patent Document 3, by forming a flat notch surface on the steel sheet for butt welding, the thickness is gradually reduced from the middle portion of the steel sheet for butt welding to the end edge of the steel sheet for butt welding such that the thickness of the aluminum coating layer is first reduced and subsequently, the thickness of the intermetallic compound layer is reduced. As a result, at the end edge of the steel sheet for butt welding, the base steel sheet is exposed to the outside.

In the steel sheet for butt welding disclosed in Patent Document 4, one or more metal layers are removed by laser ablation, and the steel sheet is cut in a region from which the metal layer is removed to form a notch for welding.

Therefore, at the end portion of the steel sheet for butt welding, a metal layer thinner than the metal layer present in a region other than the end portion remains uniformly, or the entire base metal is exposed without the metal layer remaining.

In the steel sheet for butt welding disclosed in Patent Document 5, the aluminum coating layer and the intermetallic compound layer are removed such that an angle β formed between the normal line of the surface of the base steel sheet and the end surface of the aluminum coating layer and the intermetallic compound layer is 0° to 80°. At the end edge of the steel sheet for butt welding, the base steel sheet is exposed to the outside. The aluminum coating layer and the intermetallic compound layer are removed using laser processing.

In this kind of steel sheet for butt welding, the end portions from which the predetermined range is removed in the steel sheet for butt welding are butt-welded to manufacture a tailored blank, a steel pipe, and the like. The tailored blank is processed into a hot stamped product, a hollow hot stamped product, and the like.

For example, paragraph [0062] of Patent Document 1 discloses that a welded semi-processed product has corrosion resistance after a heat treatment.

[Prior Art Document]

[Patent Document]

[Patent Document 1] Published Japanese Translation No. 2009-534529 of the PCT International Publication
[Patent Document 2] Published Japanese Translation No. 2015-525677 of the PCT International Publication
[Patent Document 3] Published Japanese Translation No. 2015-523210 of the PCT International Publication
[Patent Document 4] Published Japanese Translation No. 2015-536246 of the PCT International Publication
[Patent Document 5] Chinese Patent Application, Publication No. 106334875

[Disclosure of the Invention]

[Problems to be Solved by the Invention]

However, in a case where a tailored blank is formed of a hot-dip aluminum coated-steel sheet, a hard and brittle intermetallic compound layer is present in the coating layer and thus there is an influence of the intermetallic compound layer remaining at the boundary (stress concentration portion) between a weld metal portion and a welded heat-affected zone. Therefore, in a case where a hot stamped product formed using the tailored blank receives a repeated load, the fatigue strength of the weld metal portion is deteriorated. Further, by dispersing a large amount of Al in the hot-dip aluminum coated-steel sheet into the weld metal portion, the static joint strength is deteriorated, which is a problem.

On the other hand, in Patent Document 4, since the steel sheet is cut in a region in which an aluminum coating layer and an intermetallic compound layer are removed, the aluminum coating layer and the intermetallic compound layer do not remain at the end portion. Therefore, when painting is performed on a hot stamped product formed of the steel sheet for butt welding, the adhesion of the painting to the weld metal surface is deteriorated, and the corrosion resistance after painting of the weld metal portion is deteriorated.

Similarly, in the steel sheets for butt welding in Patent Documents 2, 3, and 5, the aluminum coating layer and the intermetallic compound layer in a welding scheduled portion to be welded are removed. Therefore, when painting is applied to a hot stamped product formed of the steel sheet for butt welding, the adhesion of the painting to the surface of the weld metal portion is deteriorated, and the corrosion resistance after painting of the weld metal portion is deteriorated.

An object of the present invention is to provide a steel sheet for butt welding in which deterioration in fatigue strength is suppressed while maintaining the corrosion resistance after painting of a weld metal portion formed during butt welding, a tailored blank, a hot stamped product, a steel pipe, a hollow hot stamped product, a method of manufacturing a steel sheet for butt welding, a method of manufacturing a tailored blank, a method of manufacturing a hot stamped product, a method of manufacturing a steel pipe, and a method of manufacturing a hollow hot stamped product.

[Means for Solving the Problem]

Means for solving the above problems include the following aspects.

<1> A steel sheet including: a base steel sheet; a first coated portion in which an intermetallic compound layer and an aluminum coating layer are provided on a surface of the base steel sheet in order from the base steel sheet side; a first exposed portion in which the base steel sheet is exposed; and a second coated portion in which the intermetallic compound layer and the aluminum coating layer are provided on the surface of the base steel sheet in order from the base steel sheet side, in which in a first direction which is perpendicular to a thickness direction of the steel sheet and is directed from the first coated portion to one end edge of the steel sheet, the first coated portion, the first exposed portion, the second coated portion, and the end edge of the steel sheet are disposed in this order on one surface of the base steel sheet, at least the first coated portion, the first exposed portion, and the end edge of the steel sheet are disposed in this order on the other surface of the base steel sheet in the first direction, and when viewing a cross section parallel to each of the first direction and the thickness direction of the steel sheet, the second coated portion is provided in a lower region which is located on the surface of the base steel sheet and on an inner side of the base steel sheet in the thickness direction of the steel sheet from a virtual line extending in the first direction from a boundary between the first exposed portion and the second coated portion.

<2> A steel sheet including: a base steel sheet; a first coated portion in which an intermetallic compound layer and an aluminum coating layer are provided on a surface of the base steel sheet in order from the base steel sheet side; a first exposed portion in which the base steel sheet is exposed; and a second coated portion in which the intermetallic compound layer and the aluminum coating layer are provided on the surface of the base steel sheet in order from the base steel sheet side, in which in a first direction which is perpendicular to a thickness direction of the steel sheet and is directed from the first coated portion to one end edge of the steel sheet, the first coated portion, the first exposed portion, the second coated portion, and the end edge of the steel sheet are disposed in this order on one surface of the base steel sheet, at least the first coated portion, the first exposed portion, and the end edge of the steel sheet are disposed in this order on the other surface of the base steel sheet in the first direction, and when viewing a cross section parallel to each of the first direction and the thickness direction of the steel sheet, the second coated portion is provided in an end portion surface of the base steel sheet located on a virtual line extending in the first direction from a boundary between the first exposed portion and the second coated portion or on an outer side in the thickness direction from the virtual line from an inner side of the base steel sheet toward the one surface.

<3> The steel sheet according to <1> or <2>, in which when the length from a surface of the second coated portion to the base steel sheet in the thickness direction of the steel sheet is assumed as a coating thickness, a position of a boundary between the base steel sheet and the intermetallic compound layer in the second coated portion is assumed as a first end, a position where the second coated portion is present most distant from the first exposed portion in the first direction is assumed as a second end, and the distance between the first end and the second end in the first direction is assumed as the width of the second coated portion, the coating thickness at a position separated from the second end to a direction opposite to the first direction by a length of 20% of the width is thicker than the coating thickness at a position separated from the first end to the first direction by a length of 10% of the width.

<4> The steel sheet according to any one of <1> to <3>, in which when viewing the cross section, the first exposed portion satisfies the following conditions (A) and (B),

    (A) an angle $\alpha$ formed by the following virtual line X and the following virtual line Y is 5.0° to 25.0°, and
    (B) a maximum distance h in a vertical direction from the following virtual line Y to the base steel sheet is 1.0 $\mu$m to 5.0 $\mu$m:

        virtual line X: a virtual line formed by extending a boundary line between the base steel sheet and the intermetallic compound layer in the first coated portion in the first direction, and
        virtual line Y: a virtual line connecting an intersection of a perpendicular line of the virtual line X extending from the virtual line X to the base steel sheet and the base steel sheet, which is an intersection of the perpendicular line from a point where the distance from a boundary point between the first exposed portion and the first coated portion is 0.1 mm on the virtual line X and the base steel sheet, and the boundary point between the first exposed portion and the first coated portion.

<5> The steel sheet according to <4>, in which the first exposed portion satisfies the following condition (C),
(C) when a depth of the first exposed portion on the end edge side of the steel sheet from the point where the distance is 0.1 mm on the virtual line X in a depth of the steel sheet in the thickness direction from a virtual line formed by extending a surface of the aluminum coating layer in the first direction to the surface of the base steel sheet is denoted by D ($\mu$m), the D satisfies the following Expression (1-1):

$$D \le (\text{thickness mm of base steel sheet in first coated portion} \times 0.2)/2 \ldots (1\text{-}1).$$

<6> The steel sheet according to <4> or <5>, in which the first exposed portion satisfies the following condition (D),
(D) a curvature radius $R_0$ measured based on the following three points is 260 $\mu$m or more:

first point: the boundary point between the first exposed portion and the first coated portion,
second point: the intersection of the perpendicular line from the point where the distance is 0.1 mm on the virtual line X and the base steel sheet, and
third point: a maximum distance point at which the distance in the vertical direction from the virtual line Y to the base steel sheet is a maximum value.

<7> The steel sheet according to any one of <1> to <6>, in which the first coated portion, the first exposed portion, the second coated portion, and the end edge of the steel sheet are disposed in this order on the other surface of the base steel sheet in the first direction.

<8> The steel sheet according to any one of <1> to <7>, in which in the first direction, the second coated portion is present in a range of 0.9 mm from the end edge of the steel sheet.

<9> The steel sheet according to any one of <1> to <8>, in which the width of the first exposed portion in the first direction is 0.2 mm or more and 5.0 mm or less.

<10> The steel sheet according to any one of <1> to <9>, in which the base steel sheet includes, as a chemical composition, by mass%, C: 0.02% to 0.58%, Mn: 0.20% to 3.00%, Al: 0.005% to 0.06%, P: 0.03% or less, S: 0.010% or less, N: 0.010% or less, Ti: 0% to 0.20%, Nb: 0% to 0.20%, V: 0% to 1.0%, W: 0% to 1.0%, Cr: 0% to 1.0%, Mo: 0% to 1.0%, Cu: 0% to 1.0%, Ni: 0% to 1.0%, B: 0% to 0.0100%, Mg: 0% to 0.05%, Ca: 0% to 0.05%, REM: 0% to 0.05%, Sn: 0% to 0.5%, Bi: 0% to 0.05%, Si: 0% to 2.00%, and a remainder: Fe and impurities.

<11> The steel sheet according to any one of <1> to <10>, in which an average thickness of the aluminum coating layer at the first coated portion is 8 $\mu$m to 50 $\mu$m, and an average thickness of the intermetallic compound layer at the first coated portion is 1 $\mu$m to 10 $\mu$m.

<12> The steel sheet according to any one of <1> to <11>, in which an area Sa mm$^2$ of the second coated portion and a thickness tb mm of the base steel sheet of the first exposed portion of the steel sheet in the cross section parallel to each of the first direction and the thickness direction of the steel sheet satisfy the following Expression (2):

$$Sa \geq 8.51 \times 10^{-4} \times tb \ldots (2).$$

<13> The steel sheet according to any one of <1> to <12>, in which the end edge of the steel sheet and the second coated portion are adjacent to each other in the first direction.

<14> The steel sheet according to any one of <1> to <12>, further including: a second exposed portion in which the base steel sheet is exposed between the end edge of the steel sheet and the second coated portion in the first direction.

<15> A tailored blank including: a first weld metal portion; and at least one steel sheet portion connected to another steel sheet portion through the first weld metal portion, in which each of the at least one steel sheet portion includes a first coated portion in which an intermetallic compound layer and an aluminum coating layer are provided on a surface of a base steel sheet in order from the base steel sheet side, and a first exposed portion in which the base steel sheet is exposed, in each of the steel sheet portions, in a second direction which is perpendicular to a thickness direction of each of the steel sheet portions and is directed from the first coated portion to the first weld metal portion, the first coated portion, the first exposed portion, and the first weld metal portion are disposed in this order on the same plane on both surfaces of the base steel sheet, and the concentration of aluminum of the first weld metal portion is higher than the concentration of aluminum of each of the steel sheet portion.

<16> The tailored blank according to <15>, in which when viewing a cross section parallel to each of the second direction, which is perpendicular to the thickness direction of the steel sheet and is directed from the first coated portion to the first weld metal portion, and the thickness direction of the steel sheet portion, the first exposed portion satisfies the following conditions (A) and (B),

(A) an angle $\alpha$ formed by the following virtual line X and the following virtual line Y is 5.0° to 25.0°, and
(B) a maximum distance h in a vertical direction from the following virtual line Y to the base steel sheet is 1.0 $\mu$m to 5.0 $\mu$m:

virtual line X: a virtual line formed by extending a boundary line between the base steel sheet and the intermetallic compound layer in the first coated portion in the second direction, and
virtual line Y: a virtual line connecting an intersection of a perpendicular line of the virtual line X extending from the virtual line X to the base steel sheet and the base steel sheet, which is an intersection of the perpendicular line from a point where the distance from a boundary point between the first exposed portion and the first coated portion is 0.1 mm on the virtual line X and the base steel sheet, and the boundary point between the first exposed portion and the first coated portion.

<17> The tailored blank according to <16>, in which the first exposed portion satisfies the following condition (C), (C) when a depth of the first exposed portion on the first weld metal portion side from the point where the distance is 0.1 mm on the virtual line X in a depth of the steel sheet in the thickness direction from a virtual line formed by extending a surface of the aluminum coating layer in the second direction to the surface of the base steel sheet is denoted by D ($\mu$m), the D satisfies the following Expression (1-1):

$$D \leq (\text{thickness mm of base steel sheet in first coated portion} \times 0.2)/2 \ldots (1\text{-}1).$$

<18> The tailored blank according to <16> or <17>, in which the first exposed portion satisfies the following condition (D),
(D) a curvature radius $R_0$ measured based on the following three points is 260 $\mu$m or more:

first point: the boundary point between the first exposed portion and the first coated portion,
second point: the intersection of the perpendicular line from the point where the distance is 0.1 mm on the virtual line X and the base steel sheet, and
third point: a maximum distance point at which the distance in the vertical direction from the virtual line Y to the base steel sheet is a maximum value.

<19> The tailored blank according to any one of <15> to <18>, in which the concentration of aluminum contained in the first weld metal portion is 0.065 mass% to 1 mass%.
<20> A hot stamped product including: a first intermetallic compound portion in which a first intermetallic compound layer is provided on a surface of a first base steel sheet; a third exposed portion in which the first base steel sheet is exposed; a second weld metal portion; a fourth exposed portion in which a second base steel sheet is exposed; and a second intermetallic compound portion in which a second intermetallic compound layer is provided on a surface of the second base steel sheet, in which the first intermetallic compound portion, the third exposed portion, the second weld metal portion, the fourth exposed portion, and the second intermetallic compound portion are disposed in this order along the surface of the first base steel sheet and the surface of the second base steel sheet, and the concentration of aluminum of the second weld metal portion is higher than the concentration of aluminum of each of the first base steel sheet and the second base steel sheet.
<21> The hot stamped product according to <20>, in which when viewing a cross section parallel to each of a thickness direction of the steel sheet and a second direction which is perpendicular to the thickness direction of the steel sheet and is directed from the first intermetallic compound portion to the second weld metal portion, the third exposed portion satisfies the following conditions (A) and (B),

(A) an angle $\alpha$ formed by the following virtual line X and the following virtual line Y is 5.0° to 25.0°, and
(B) a maximum distance h in the vertical direction from the following virtual line Y to the first base steel sheet is 1.0 $\mu$m to 5.0 $\mu$m:

virtual line X: a virtual line formed by extending a boundary line between the first base steel sheet and the first intermetallic compound layer in the first intermetallic compound portion in the second direction, and
virtual line Y: a virtual line connecting an intersection of a perpendicular line of the virtual line X from the virtual line X to the first base steel sheet and the first base steel sheet, which is an intersection of the perpendicular line from a point where the distance from a boundary point between the third exposed portion and the first intermetallic compound portion is 0.1 mm on the virtual line X and the first base steel sheet, and the boundary point between the third exposed portion and the first intermetallic compound portion.

<22> The hot stamped product according to <21>, in which the third exposed portion satisfies the following condition (C),
(C) when a depth of the third exposed portion on the second weld metal portion side from the point where the distance is 0.1 mm on the virtual line X in a depth of the steel sheet in the thickness direction from a virtual line formed by extending a surface of the first intermetallic compound layer in the second direction to the surface of the first base steel sheet is denoted by D ($\mu$m), the D satisfies the following Expression (1-2):

$$D \leq (\text{thickness mm of second base steel sheet in first intermetallic compound portion} \times 0.2)/2 \ldots (1\text{-}2).$$

<23> The hot stamped product according to <21> or <22>, in which the third exposed portion satisfies the following condition (D),
(D) a curvature radius $R_0$ measured based on the following three points is 260 $\mu$m or more:

first point: the boundary point between the third exposed portion and the first intermetallic compound portion,
second point: the intersection of the perpendicular line from the point where the distance is 0.1 mm on the virtual line X and the first base steel sheet, and
third point: a maximum distance point at which the distance in the vertical direction from the virtual line Y to the first base steel sheet is a maximum value.

<24> A steel pipe including: a third weld metal portion; and a third steel sheet which is formed in an open tubular shape in which two end portions in a circumferential direction face each other, and in which the two end portions are connected to each other through the third weld metal portion, in which each of the two end portions of the third steel sheet includes a first coated portion in which an intermetallic compound layer and an aluminum coating layer are provided on both surfaces of a base steel sheet in order from the base steel sheet side, and a first exposed portion in which the base steel sheet is exposed, in the circumferential direction, the first coated portion, the first exposed portion, and the third weld metal portion are disposed in this order, and the concentration of aluminum of the third weld metal portion is higher than the concentration of aluminum of the base steel sheet.
<25> The steel pipe according to <24>, in which when viewing a cross section parallel to each of a thickness direction of the steel sheet and a second direction which is perpendicular to the thickness direction of the steel sheet and is directed from the first coated portion to the third weld metal portion, the first exposed portion satisfies the following conditions (A) and (B),

(A) an angle $\alpha$ formed by the following virtual line X and the following virtual line Y is 5.0° to 25.0°, and
(B) a maximum distance h in a vertical direction from the following virtual line Y to the base steel sheet is 1.0 $\mu$m to 5.0 $\mu$m,
virtual line X: a virtual line formed by extending a boundary line between the base steel sheet and the intermetallic compound layer in the first coated portion in the second direction, and
virtual line Y: a virtual line connecting an intersection of a perpendicular line of the virtual line X extending from the virtual line X to the base steel sheet and the base steel sheet, which is an intersection of the perpendicular line from a point where the distance from a boundary point between the first exposed portion and the first coated portion is 0.1 mm on the virtual line X and the base steel sheet, and the boundary point between the first exposed portion and the first coated portion.

<26> The steel pipe according to <25>, in which the first exposed portion satisfies the following condition (C),
(C) when a depth of the first exposed portion on the third weld metal portion side from the point where the distance is 0.1 mm on the virtual line X in a depth of the steel sheet in the thickness direction from a virtual line formed by extending a surface of the aluminum coating layer in the second direction to the surface of the base steel sheet in the thickness direction of the steel sheet is denoted by D ($\mu$m), the D satisfies the following Expression (1-1):

$$D \leq (\text{thickness mm of base steel sheet in first coated portion} \times 0.2)/2 \ldots (1\text{-}1).$$

<27> The steel pipe according to <25> or <26>, in which the first exposed portion satisfies the following condition (D),
(D) a curvature radius $R_0$ measured based on the following three points is 260 $\mu$m or more:

first point: the boundary point between the first exposed portion and the first coated portion,
second point: the intersection of the perpendicular line from the point where the distance is 0.1 mm on the virtual line X and the base steel sheet, and
third point: a maximum distance point at which the distance in the vertical direction from the virtual line Y to the base steel sheet is a maximum value.

<28> The steel pipe according to any one of <24> to <27>, in which the concentration of aluminum contained in the third weld metal portion is 0.065 mass% to 1 mass%.

<29> A hollow hot stamped product including: a third intermetallic compound portion in which a third intermetallic compound layer is provided on a surface of a third base steel sheet; a fifth exposed portion in which the third base steel sheet is exposed; a third weld metal portion in which the concentration of aluminum contained is 0.065 mass% to 1 mass%; a sixth exposed portion in which a fourth base steel sheet is exposed; and a fourth intermetallic compound portion in which a fourth intermetallic compound layer is provided on a surface of the fourth base steel sheet, in which the third intermetallic compound portion, the fifth exposed portion, the third weld metal portion, the sixth exposed portion, and the fourth intermetallic compound portion are disposed in this order along each of both surfaces of the third base steel sheet and each of both surfaces of the fourth base steel sheet, and the concentration of aluminum of the third weld metal portion is higher than the concentration of aluminum of each of the third base steel sheet and the fourth base steel sheet.

<30> The hollow hot stamped product according to <29>, in which when viewing a cross section parallel to each of a thickness direction of the steel sheet and a second direction which is perpendicular to the thickness direction of the steel sheet and is directed from the third intermetallic compound portion to the third weld metal portion, the fifth exposed portion satisfies the following conditions (A) and (B),

(A) an angle $\alpha$ formed by the following virtual line X and the following virtual line Y is 5.0° to 25.0°, and
(B) a maximum distance h in a vertical direction from the following virtual line Y toward the third base steel sheet is 1.0 $\mu$m to 5.0 $\mu$m:

virtual line X: a virtual line formed by extending a boundary line between the third base steel sheet and the third intermetallic compound layer in the third intermetallic compound portion in the second direction, and
virtual line Y: a virtual line connecting an intersection of a perpendicular line of the virtual line X from the virtual line X to the third base steel sheet and the third base steel sheet, which is an intersection of the perpendicular line from a point where the distance from a boundary point between the fifth exposed portion and the third intermetallic compound portion is 0.1 mm on the virtual line X and the third base steel sheet, and the boundary point between the fifth exposed portion and the third intermetallic compound portion.

<31> The hollow hot stamped product according to <30>, in which the fifth exposed portion satisfies the following condition (C),
(C) when a depth of the fifth exposed portion on the third weld metal portion side from the point where the distance is 0.1 mm on the virtual line X in a depth of the steel sheet in the thickness direction from a virtual line formed by extending a surface of the third intermetallic compound layer in the second direction to the surface of the third base steel sheet is denoted by D ($\mu$m), the D satisfies the following Expression (1-3):

$$D \leq (\text{thickness mm of third base steel sheet in third intermetallic compound portion} \times 0.2)/2 \ldots (1\text{-}3).$$

<32> The hollow hot stamped product according to <30> or <31>, in which the fifth exposed portion satisfies the following condition (D),
(D) a curvature radius $R_0$ measured based on the following three points is 260 $\mu$m or more:

first point: the boundary point between the fifth exposed portion and the third intermetallic compound portion,
second point: the intersection of the perpendicular line from the point where the distance is 0.1 mm on the virtual line X and the third base steel sheet, and
third point: a maximum distance point at which the distance in the vertical direction from the virtual line Y to the third base steel sheet is a maximum value.

<33> A method of manufacturing a steel sheet including: a step of providing a coated steel sheet in which an intermetallic compound layer and an aluminum coating layer are provided on a surface of a base steel sheet in order from the base steel sheet side; and a removal step of partially removing the aluminum coating layer and the intermetallic compound layer to form a first exposed portion in which the base steel sheet is exposed, a first coated portion in which the intermetallic compound layer and the aluminum coating layer remain on the surface of the base steel sheet in order from the base steel sheet side, and a second coated portion in which the intermetallic compound layer and the aluminum coating layer remain on the surface of the base steel sheet, in which in the removal step, in a first direction which is perpendicular to a thickness direction of the coated steel sheet and is directed from a center portion of the coated steel sheet to one end edge of the coated steel sheet in plan view, the first coated portion, the first exposed portion, the second coated portion, and the end edge of the coated steel sheet are disposed in this order on one surface of the base steel sheet, and in the first direction, at least the first coated portion, the first exposed portion, and the end edge of the coated steel sheet are disposed in this order on the other surface of the base steel sheet.

<34> The method of manufacturing a steel sheet according to <33>, further including: a lower portion forming step of forming a lower region on a surface of the base steel sheet of the coated steel sheet by compressing or cutting the coated steel sheet to deform a part of the coated steel sheet before the removal step, in which when a direction which is perpendicular to a thickness direction of the coated steel sheet and is directed from a center portion of the coated steel sheet to one end edge of the coated steel sheet in plan view is assumed as a first direction, the lower region is a region located on an inner side of the base steel sheet in the thickness direction of the coated steel sheet from a virtual line extending in the first direction from a boundary between the first exposed portion and the second coated portion when viewing a cross section parallel to each of the first direction and the thickness direction of the steel sheet, and in the removal step, at least the aluminum coating layer and the intermetallic compound layer present on an outer side of the coated steel sheet in the thickness direction from the virtual plane are removed to form the second coated portion on the lower region.

<35> The method of manufacturing a steel sheet according to <34>, in which when a thickness per one surface of the aluminum coating layer is denoted by a $\mu$m, a thickness per one surface of the intermetallic compound layer is denoted by b $\mu$m, a thickness of the coated steel sheet is denoted by t $\mu$m, a deepest lower portion depth of the lower region is denoted by x $\mu$m, the lower portion depth represents the distance from the virtual line to the surface of the base steel sheet in the lower region, a depth of the coated steel sheet in the thickness direction in a region cut in the removal step is denoted by y $\mu$m, and the distance between the first coated portion and the second coated portion is denoted by N $\mu$m, Expressions (5) to (9) are satisfied:

$$9 \leq a + b < 60 \ldots (5)$$

$$2\% \leq (x/t) \leq 15\% \ldots (6)$$

$$a + b < y \ldots (7)$$

$$(y/t) \leq 7\% \ldots (8)$$

$$N \geq 200 \ldots (9).$$

<36> The method of manufacturing a steel sheet according to <34> or <35>, in which in the lower portion forming step, the coated steel sheet is cut by shearing or blanking to form the lower region.

<37> The method of manufacturing a steel sheet according to any one of <34> to <36>, in which in the lower portion forming step, the lower region is formed on each of both surfaces of the coated steel sheet.

<38> The method of manufacturing a steel sheet according to <33>, in which a cutting step of cutting the coated steel sheet is performed, and in the removal step, by partially removing the aluminum coating layer and the intermetallic compound layer, when viewing a cross section parallel to each of each parallel to the first direction and the thickness direction of the steel sheet, the second coated portion is provided on an end portion surface of the base steel sheet located on a virtual line extending in the first direction from a boundary between the first exposed portion and the second coated portion or on an outer side in the thickness direction from the virtual line from an inner side of the base steel sheet toward the one surface.

<39> The method of manufacturing a steel sheet according to any one of <33> to <38>, in which when the length from a surface of the second coated portion to the base steel sheet in the thickness direction of the steel sheet is assumed as a coating thickness, a position of a boundary between the base steel sheet and the intermetallic compound layer in the second coated portion is assumed as a first end, a position where the second coated portion is present most distant from the first exposed portion in the first direction is assumed as a second end, and the distance between the first end and the second end in the first direction is assumed as the width of the second coated portion, in the removal step, the aluminum coating layer and the intermetallic compound layer are removed such that the coating thickness at a position separated from the second end to a direction opposite to the first direction by a length of 20% of the width is thicker than the coating thickness at a position separated from the first end to the first direction by a length of 10% of the width.

<40> The method of manufacturing a steel sheet according to any one of <33> to <39>, in which in the removal step, in the first direction, the first coated portion, the first exposed portion, the second coated portion, and the end edge of the coated steel sheet are disposed in this order on the other surface of the base steel sheet.

<41> The method of manufacturing a steel sheet according to any one of <33> to <40>, in which in the removal step, a step of mechanically removing the aluminum coating layer and the intermetallic compound layer is performed.

<42> The method of manufacturing a steel sheet according to any one of <33> to <41>, in which in the removal step, the aluminum coating layer, the intermetallic compound layer, and the base steel sheet of the coated steel sheet are partially removed such that the first exposed portion satisfies the following conditions (A) and (B) when viewing a cross section parallel to each of the thickness direction and the first direction,

(A) an angle $\alpha$ formed by the following virtual line X and the following virtual line Y is 5.0° to 25.0°, and
(B) a maximum distance h in a vertical direction from the following virtual line Y to the base steel sheet is 1.0 $\mu$m to 5.0 $\mu$m:

virtual line X: a virtual line formed by extending a boundary line between the base steel sheet and the intermetallic compound layer in the first coated portion in the first direction, and
virtual line Y: a virtual line connecting an intersection of a perpendicular line of the virtual line X extending from the virtual line X to the base steel sheet and the base steel sheet, which is an intersection of the perpendicular line from a point where the distance from a boundary point between the first exposed portion and the first coated portion is 0.1 mm on the virtual line X and the base steel sheet, and the boundary point between the first exposed portion and the first coated portion.

<43> The method of manufacturing a steel sheet according to <42>, in which in the removal step, the aluminum coating layer, the intermetallic compound layer, and the base steel sheet of the coated steel sheet are partially removed such that the first exposed portion satisfies the following condition (C),
(C) when a depth of the first exposed portion on the end edge side of the steel sheet from the point where the distance is 0.1 mm on the virtual line X in a depth of the steel sheet in the thickness direction from a virtual line formed by extending a surface of the aluminum coating layer in the first direction to the surface of the base steel sheet is denoted by D ($\mu$m), the D satisfies the following Expression (1-1):

$$D \leq (\text{thickness mm of base steel sheet in first coated portion} \times 0.2)/2 \ldots \quad (1\text{-}1).$$

<44> The method of manufacturing a steel sheet according to <42> or <43>, in which in the removal step, the aluminum coating layer, the intermetallic compound layer, and the base steel sheet of the coated steel sheet are partially removed such that the first exposed portion satisfies the following condition (D),
(D) a curvature radius $R_0$ measured based on the following three points is 260 $\mu$m or more:

first point: the boundary point between the first exposed portion and the first coated portion,
second point: the intersection of the perpendicular line from the point where the distance is 0.1 mm on the virtual line X and the base steel sheet, and
third point: a maximum distance point at which the distance in the vertical direction from the virtual line Y to the base steel sheet is a maximum value.

<45> A method of manufacturing a tailored blank including: a step of providing at least one steel sheet according to any one of <1> to <14>; and a welding step of butt-welding an end portion of the steel sheet in which the second coated portion is provided and another steel sheet to manufacture a tailored blank, in which in the welding step, the steel sheet and the other steel sheet are welded together through a first weld metal portion incorporating the entire second coated portion, and a first exposed portion in which the base steel sheet is exposed is formed between the first weld metal portion and the first coated portion.

<46> A method of manufacturing a hot stamped product including: hot press-forming the tailored blank according to any one of <15> to <19> to manufacture a hot stamped product.

<47> A method of manufacturing a steel pipe including: forming the steel sheet according to any one of <1> to <14> into an open tubular shape such that two end portions in a circumferential direction face each other and the second coated portion is disposed in at least one of the two end portions; and butt-welding the two end portions of the steel sheet to connect the two end portions through a second weld metal portion and incorporate the entire second coated portion melted during butt welding in the second weld metal portion.

<48> A method of manufacturing a hollow hot stamped product including: quenching the steel pipe according to any one of <24> to <28> to manufacture a hollow hot stamped product.

[Effects of the Invention]

According to the steel sheet, the tailored blank, the hot stamped product, the steel pipe, the hollow hot stamped product, the method of manufacturing a steel sheet, the method of manufacturing a tailored blank, the method of manufacturing a hot stamped product, the method of manufacturing a steel pipe, and the method of manufacturing a hollow hot stamped product, it is possible to suppress deterioration in fatigue strength while maintaining corrosion resistance after painting of a weld metal portion formed during butt welding.

[Brief Description of the Drawings]

FIG. 1 is a schematic cross-sectional view showing an example of an end portion having a first exposed portion and a second coated portion of a base steel sheet in a steel sheet according to a first embodiment of the present disclosure.

FIG. 2 is a schematic cross-sectional view showing another example of the end portion having the first exposed portion of the base steel sheet and the second coated portion in the steel sheet according to the first embodiment of the present disclosure.

FIG. 3 is a schematic cross-sectional view showing still another example of the end portion having the first exposed portion of the base steel sheet and the second coated portion in the steel sheet according to the first embodiment of the present disclosure.

FIG. 4 is a schematic cross-sectional view showing still another example of the end portion having the first exposed portion of the base steel sheet and the second coated portion in the steel sheet according to the first embodiment of the present disclosure.

FIG. 5 is a schematic cross-sectional view showing still another example of the end portion having the first exposed portion of the base steel sheet and the second coated portion in the steel sheet according to the first embodiment of the present disclosure.

FIG. 6 is a cross-sectional image showing an example of the end portion having the first exposed portion of the base steel sheet and the second coated portion in the steel sheet according to the first embodiment of the present disclosure.

FIG. 7 is a perspective view of a steel pipe according to the first embodiment of the present disclosure.

FIG. 8 is a schematic plan view showing a method of manufacturing the steel pipe according to the first embodiment of the present disclosure.

FIG. 9 is a schematic perspective view showing the method of manufacturing the steel pipe according to the first embodiment of the present disclosure.

FIG. 10 is a schematic cross-sectional view showing a state in which the two steel sheets according to the first embodiment of the present disclosure face each other.

FIG. 11 is a cross-sectional image showing an example of the end portion having the first exposed portion of the base steel sheet and the second coated portion in the steel sheet according to the first embodiment of the present disclosure.

FIG. 12 is a schematic cross-sectional view showing a tailored blank according to the first embodiment of the present disclosure.

FIG. 13 is a view showing a trial calculation result of the concentration of aluminum contained in the first weld metal portion with respect to the cross-sectional area of the second coated portion.

FIG. 14 is a cross-sectional image showing an example of a tailored blank after hot press forming.

FIG. 15 is a schematic cross-sectional view showing an example of an end portion having an exposed portion of a base steel sheet and a second coated portion in a steel sheet according to a second embodiment of the present disclosure.

FIG. 16 is a schematic cross-sectional view showing another example of the end portion having the exposed portion of the base steel sheet and the second coated portion in the steel sheet according to the second embodiment of the present disclosure.

FIG. 17 is a schematic cross-sectional view showing still another example of the end portion having the exposed portion of the base steel sheet and the second coated portion in the steel sheet according to the second embodiment of the present disclosure.

FIG. 18 is a cross-sectional image showing an example of the end portion having the exposed portion of the base steel sheet and the second coated portion in the steel sheet according to the second embodiment of the present disclosure.

FIG. 19 is a schematic enlarged cross-sectional view showing another example of the end portion having the exposed portion of the base steel sheet and the second coated portion in the steel sheet according to the second embodiment of the present disclosure.

FIG. 20 is a schematic cross-sectional view showing an example of a tailored blank according to the second embodiment of the present disclosure.

FIG. 21 is a schematic cross-sectional view showing an example of a tailored blank manufactured by a method of manufacturing a tailored blank according to a third embodiment of the present disclosure.

FIG. 22 is a schematic cross-sectional view showing an example of a steel sheet used in the method of manufacturing the tailored blank according to the third embodiment of the present disclosure.

FIG. 23 is a flow chart showing the method of manufacturing the tailored blank according to the third embodiment of the present disclosure.

FIG. 24 is a cross-sectional view showing a lower portion forming step in the method of manufacturing the tailored blank according to the third embodiment of the present disclosure.

FIG. 25 is a cross-sectional view showing the lower portion forming step in the method of manufacturing the tailored blank according to the third embodiment of the present disclosure.

FIG. 26 is a cross-sectional image showing an example of a state in which a lower region is formed in a coated steel sheet according to the third embodiment of the present disclosure.

FIG. 27 is a cross-sectional image showing an example of a state in which the first exposed portion and the second coated portion are formed in the steel sheet according to the third embodiment of the present disclosure.

FIG. 28 is a cross-sectional image showing an example of a state in which the first exposed portion and the second coated portion are formed in the steel sheet according to the third embodiment of the present disclosure.

FIG. 29 is a cross-sectional view showing a lower portion forming step in a method of manufacturing a tailored blank according to a modification example of the third embodiment of the present disclosure.

FIG. 30 is a cross-sectional view showing a cutting step in the method of manufacturing the tailored blank according to the modification example of the third embodiment of the present disclosure.

FIG. 31 is a cross-sectional view showing a lower portion forming step in the method of manufacturing the tailored blank according to the modification example of the third embodiment of the present disclosure.

FIG. 32 is a cross-sectional view showing a lower portion forming step in the method of manufacturing the tailored blank according to the modification example of the third embodiment of the present disclosure.

FIG. 33 is a cross-sectional view showing the cutting step in the method of manufacturing the tailored blank according to the modification example of the third embodiment of the present disclosure.

FIG. 34 is a flow chart showing the method of manufacturing the tailored blank according to the modification example of the third embodiment of the present disclosure.

FIG. 35 is a perspective view of a steel sheet according to the first embodiment of the present disclosure.

FIG. 36 is a perspective view showing steps of a method of manufacturing the steel sheet according to the first embodiment of the present disclosure.

FIG. 37 is a perspective view showing other steps of the method of manufacturing the steel sheet according to the first embodiment of the present disclosure.

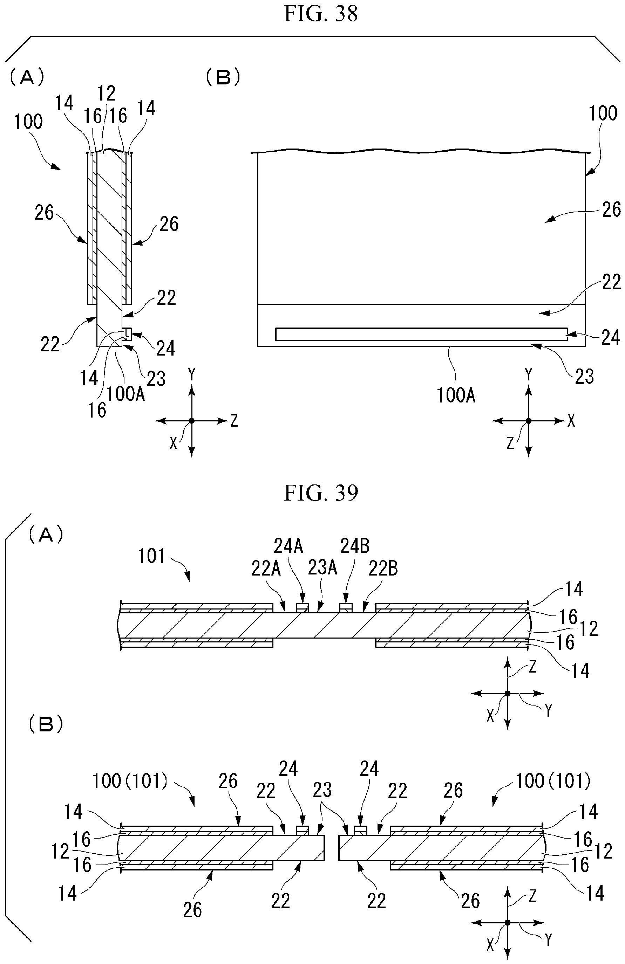

(A) of FIG. 38 is a schematic cross-sectional view of the end portion of the steel sheet according to the second embodiment of the present disclosure and (B) of FIG. 38 is a plan view thereof.

FIG. 39 is a schematic cross-sectional view showing steps of forming the exposed portion and the second coated portion in the steel sheet according to the second embodiment of the present disclosure.

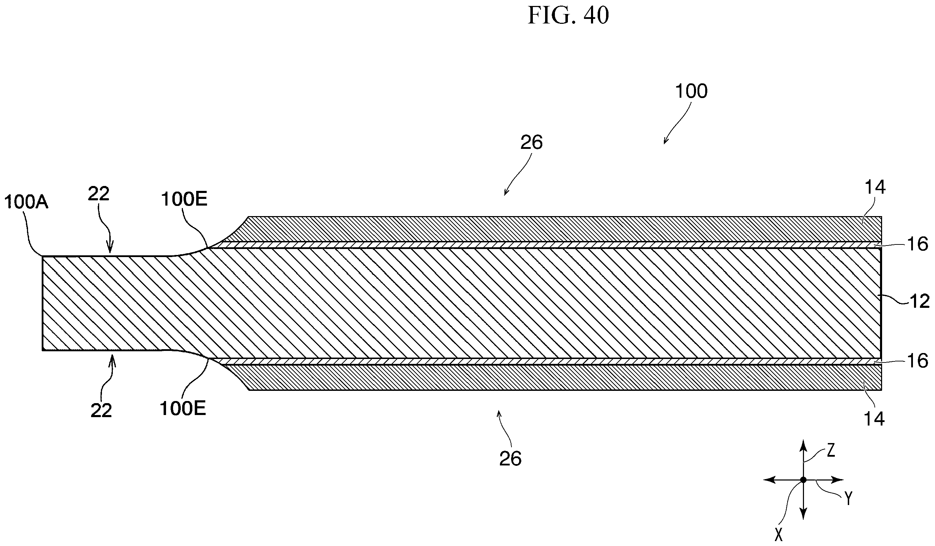

FIG. 40 is a schematic cross-sectional view showing another example of the end portion of the steel sheet (steel sheet for butt welding) of the first embodiment of the present disclosure.

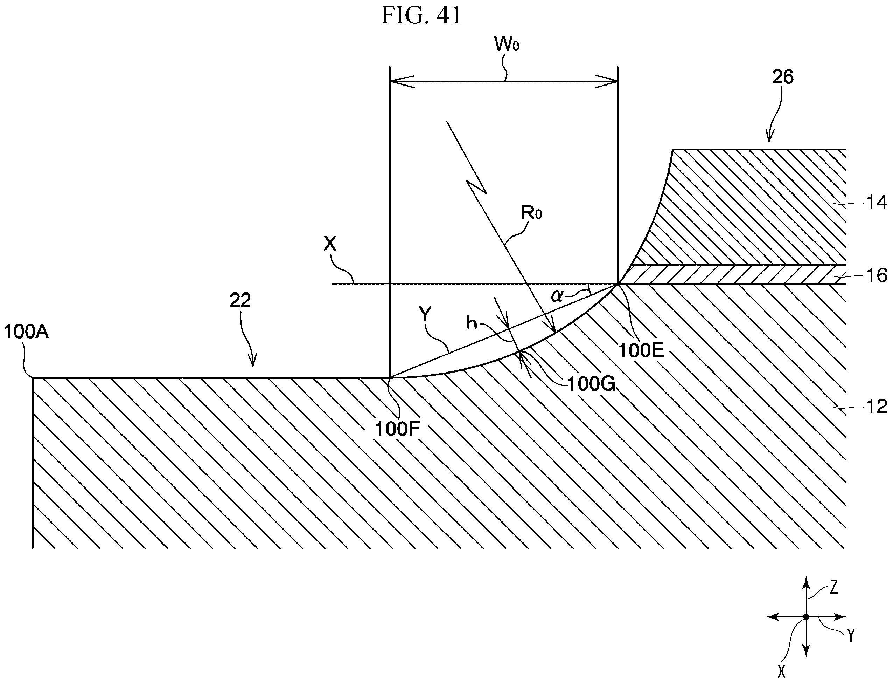

FIG. 41 is an enlarged cross-sectional view showing another example of the end portion of the steel sheet (steel sheet for butt welding) of the first embodiment of the present disclosure.

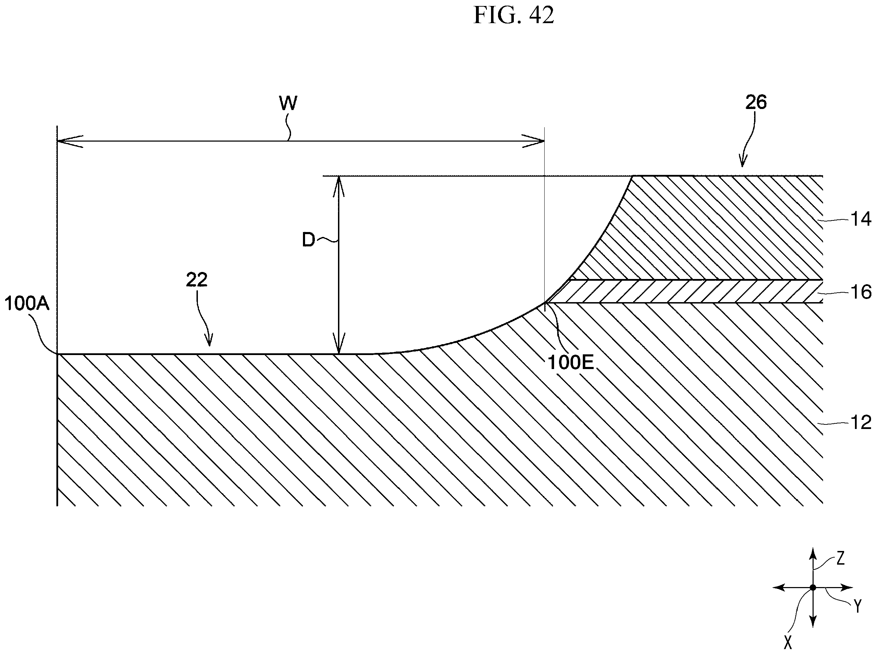

FIG. 42 is an enlarged cross-sectional view showing another example of the end portion of the steel sheet (steel sheet for butt welding) of the first embodiment of the present disclosure.

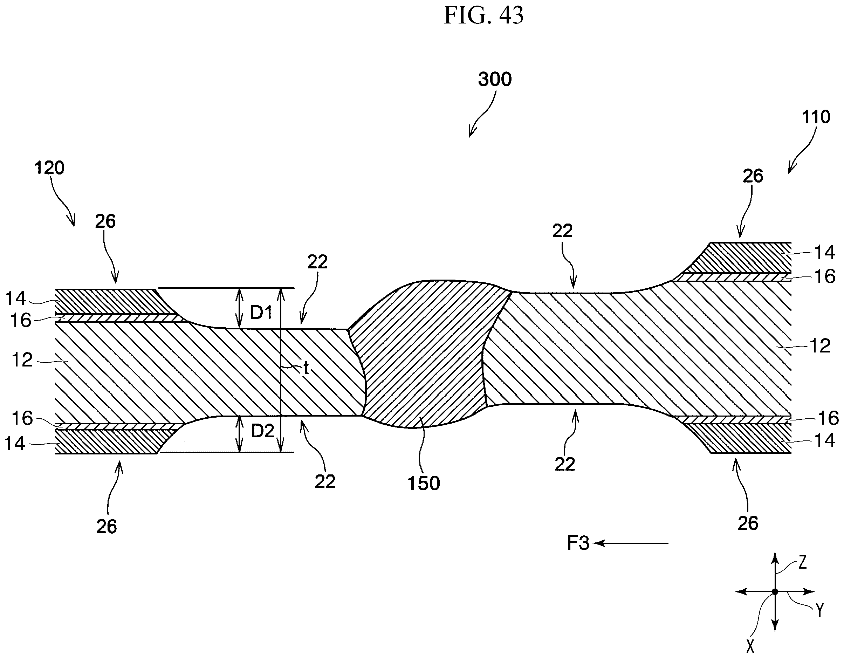

FIG. 43 is a cross-sectional view showing another example of the tailored blank according to the first embodiment of the present disclosure.

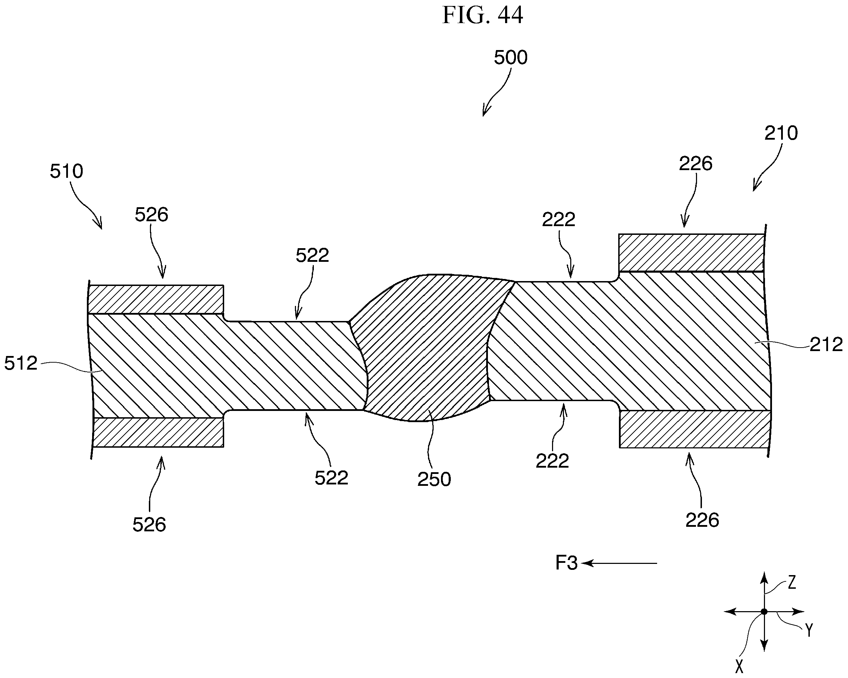

FIG. 44 is a cross-sectional view showing an example of the hot stamped product according to the first embodiment of the present disclosure.

[Embodiments of the Invention]

Hereinafter, examples of preferable embodiments of the present disclosure will be described in detail.

A steel sheet according to the present disclosure refers to a steel sheet for forming a tailored blank by butt-welding the steel sheet and another steel sheet and is described as a steel sheet below.

In the present specification, a numerical range expressed using "to" means a range including numerical values described before and after "to" as the lower limit value and the upper limit value.

In the present specification, regarding the amount of a component (element), for example, in a case of C (carbon) content, the C content may be expressed as "amount of C". Moreover, the amount of another element may be expressed similarly.

In the present specification, the meaning of the term "step" is not limited to an independent step, and also includes the meaning of the term when the intended purpose of the step is achieved even in a case where the step cannot be clearly distinguished from other steps.

In the present disclosure, the terms "base steel sheet", "intermetallic compound layer", and "aluminum coating layer" are described in "Definitions of Ranges of Base Steel Sheet, Intermetallic Compound Layer, and Aluminum Coating Layer", which will be described in a first embodiment later.

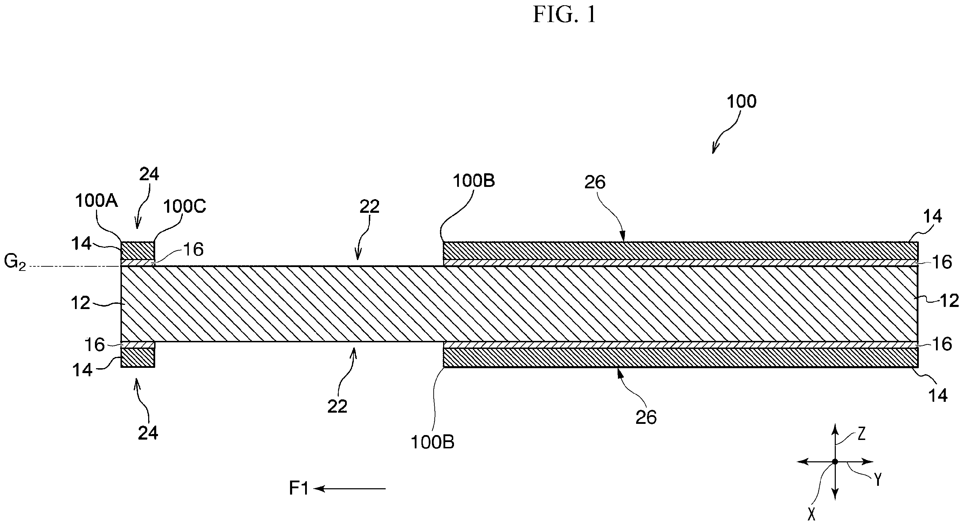

In the present disclosure, the term "cross section" of a steel sheet (steel sheet for butt welding) means a cross section obtained by cutting the steel sheet in the thickness (sheet thickness) direction of the steel sheet. Specifically, in FIG. 1, a thickness direction of a steel sheet 100 is denoted by Z, and a longitudinal direction of a first exposed portion 22 (a direction orthogonal to a display surface in FIG. 1) is denoted by X. A direction orthogonal to the direction Z and the direction X is denoted by Y. At this time, the cross section means a cross section cut along a YZ plane.

In the present disclosure, the term "thickness direction" means a direction in which the sheet thickness at the center portion of the sheet width of the steel sheet is measured.

In the present disclosure, the term "coating thickness" means the length from the surface of the first coated portion or the second coated portion to the base steel sheet in the thickness direction of the steel sheet.

In the present disclosure, the term "end surface of the steel sheet" means a surface which is exposed in a direction orthogonal to the thickness direction in the surface of the steel sheet.

In the present disclosure, the term "end edge of the steel sheet" means a portion adjacent to the end surface of the steel sheet.

In the present disclosure, the term "end portion of the steel sheet" means a region which is located around the steel sheet and is in a range of 20% or less from the end surface of the steel sheet with respect to the facing width of the steel sheet (that is, the length from one end edge to another end edge, facing each other, of the steel sheet).

The steel sheet of the present disclosure forms a tailored blank by butt-welding the end surface at the end portion thereof and the end surface of another steel sheet. Here, an embodiment of two steel sheets to be butt-welded may adopt any one of a plurality of embodiments described below.

(First Embodiment)

<Steel Sheet>

The steel sheet of the present disclosure has a base steel sheet, an intermetallic compound layer, and an aluminum coating layer. The steel sheet of the present disclosure has a first coated portion in which the intermetallic compound layer and the aluminum coating layer are provided on the surface of the base steel sheet in order from the base steel sheet side. In addition, the steel sheet of the present disclosure has a first exposed portion in which the base steel sheet is exposed. In addition, the steel sheet of the present disclosure has a second coated portion in which the intermetallic compound layer and the aluminum coating layer are provided on the surface of the base steel sheet in order from the base steel sheet side.

Here, a direction (Y direction) which is perpendicular to the thickness direction of the steel sheet and is directed from the first coated portion to one end edge of the steel sheet is assumed as a first direction. In the steel sheet of the present disclosure, in the first direction, on at least one surface of the base steel sheet, the first coated portion, the first exposed portion, the second coated portion, and the end edge of the steel sheet are provided such that the first coated portion, the first exposed portion, the second coated portion, and the end edge of the steel sheet are disposed this order. In addition, in the steel sheet of the present disclosure, in the first direction, at least the first coated portion, the first exposed portion, and the end edge of the steel sheet are disposed in this order on the other surface of the base steel sheet.

In the first direction, the first coated portion, the first exposed portion, the second coated portion, and the end edge of the steel sheet may be disposed in this order on the other surface of the base steel sheet.

The steel sheet of the present disclosure is formed into a tailored blank by butt-welding the end surface of the end portion thereof and the end surface of another steel sheet. The shape of the other steel sheet is not particularly limited.

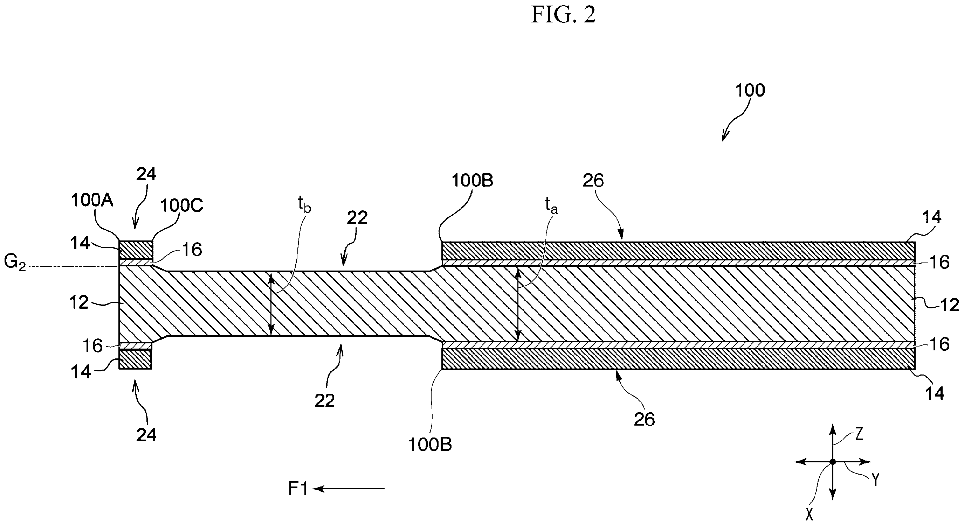

FIG. 1 is a schematic cross-sectional view showing an example of an end portion having a first coated portion, a first exposed portion of a base steel sheet, and a second coated portion in which an intermetallic compound layer and an aluminum coating layer are provided on each of both surfaces of the steel sheet of the present disclosure. FIG. 2 is a schematic cross-sectional view showing another example of the end portion having the first coated portion, the first exposed portion of the base steel sheet, and the second coated portion in which an intermetallic compound layer and an aluminum coating layer are provided on each of both surfaces of the steel sheet of the present disclosure. That is, in FIGS. 1 and 2, an embodiment in which the first coated portion, the first exposed portion, and the second coated portion are provided on each of both surfaces of the steel sheet, and an intermetallic compound layer and an aluminum coating layer are provided in the second coated portion is shown.

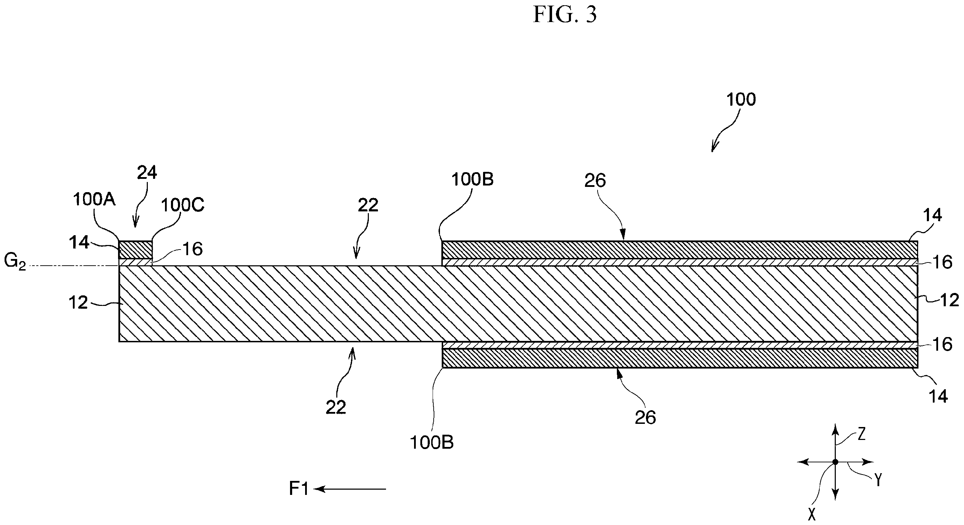

In addition, FIG. 3 is a schematic cross-sectional view showing one example of an end portion in which the first coated portion, the first exposed portion of the base steel sheet, and the second coated portion in which an intermetallic compound layer and an aluminum coating layer are provided are provided on one surface of the steel sheet of the present disclosure, and the first coated portion and the first exposed portion are provided on the other surface. That is, in FIG. 3, an embodiment in which the first coated portion, the first exposed portion, and the second coated portion are provided on one surface of the steel sheet, and an intermetallic compound layer and an aluminum coating layer are provided in the second coated portion. Alternatively, in the end portion on the other surface of the steel sheet shown in FIG. 3, the first coated portion and the first exposed portion are provided. However, the second coated portion is not provided, and the first exposed portion extends to the end edge of the steel sheet.

In FIGS. 1 to 3, 100 represents a steel sheet, 12 represents a base steel sheet, 14 represents an aluminum coating layer, 16 represents an intermetallic compound layer, 22 represents a first exposed portion, 24 represents a second coated portion, and 26 represents a first coated portion.

In addition, 100 A represents an end edge of the steel sheet 100. 100B represents an end edge of the first coated portion 26 on the boundary between the first coated portion 26 and the first exposed portion 22. 100C represents an end edge of the second coated portion 24 on the boundary between the second coated portion 24 and the first exposed portion 22.

The steel sheet 100 of the present disclosure has a base steel sheet 12, an intermetallic compound layer 16, and an aluminum coating layer 14. The steel sheet 100 of the present disclosure has the first coated portion 26 in which the intermetallic compound layer 16 and the aluminum coating layer 14 are provided on the surface of the base steel sheet 12 in order from the base steel sheet 12 side. In addition, the steel sheet 100 of the present disclosure has the first exposed portion 22 in which the base steel sheet 12 is exposed. In addition, the steel sheet 100 of the present disclosure has the second coated portion 24 in which the intermetallic compound layer 16 and the aluminum coating layer 14 are provided on the surface of the base steel sheet 12.

Here, a direction which is perpendicular to the thickness direction of the steel sheet 100 and is directed from the first coated portion 26 to one end edge 100A of the steel sheet 100 is assumed as a first direction F1. In the steel sheet 100 of the present disclosure, in the first direction F1, the first coated portion 26, the first exposed portion 22, the second coated portion 24, and the end edge 100A of the steel sheet 100 are provided such that the first coated portion 26, the first exposed portion 22, the second coated portion 24, and the end edge 100A of the steel sheet 100 are disposed in this order on the same plane.

The first exposed portion 22 is formed in a region from an end edge 100B of the first coated portion 26 to the end edge 100C at the boundary between the second coated portion 24 and the first exposed portion 22. The first exposed portion 22 is formed between the first coated portion 26 and the second coated portion 24.

The second coated portion 24 is formed in a region including the end edge 100A of the steel sheet 100. In the first direction F1, the end edge 100A of the steel sheet 100 and the second coated portion 24 are adjacent to each other. The second coated portion 24 is formed in a region from the end edge 100A of the steel sheet 100 to the end edge 100C at the boundary between the second coated portion 24 and the first exposed portion 22.

In the steel sheet 100 shown in FIGS. 1 and 2, the second coated portion 24, the first exposed portion 22, and the first coated portion 26 are formed on both surfaces of the end portion of the steel sheet 100.

On the other hand, in the steel sheet 100 shown in FIG. 3, the second coated portion 24, the first exposed portion 22, and the first coated portion 26 are formed on one surface of the end portion of the steel sheet 100, and the first exposed portion 22 and the first coated portion 26 are formed on the other surface of the end portion. That is, in the steel sheet 100 shown in FIG. 3, on one surface of the end portion of the steel sheet 100, in the same order as in the steel sheet 100 shown in FIGS. 1 and 2, the second coated portion 24 and the first exposed portion 22 are formed. In addition, on the other surface of the end portion of the steel sheet 100, the first exposed portion 22 is formed in a region from the end edge 100A of the steel sheet 100 to the end edge 100B of the first coated portion 26. In the cross-sectional views of FIGS. 1 to 3, the second coated portion 24 is provided on a virtual line $G_2$ extending in the first direction F1 or on the outer side in the thickness direction from the virtual line $G_2$ from the inner side of the base steel sheet 12 toward the one surface.

In the steel sheet 100 of the present disclosure, as shown in FIG. 1 or 3, in the end portion of the steel sheet 100, the thickness of the base steel sheet 12 in the first exposed portion 22 in which the base steel sheet 12 is exposed may be the same as the thickness of the base steel sheet 12 in the first coated portion 26. In addition, in the steel sheet 100 of the present disclosure, as shown in FIG. 2, in the end portion of the steel sheet 100, the thickness of the base steel sheet 12 in the first exposed portion 22 in which the base steel sheet 12 is exposed may be smaller than the thickness of the base steel sheet 12 in the first coated portion 26. The same is also applicable to other embodiments of the present disclosure, and for example, the thickness of the base steel sheet 12 in the first exposed portion 22 in each of FIGS. 3, 4, and 15 to 17 may be smaller than the thickness of the base steel sheet 12 in the first coated portion 26.

The steel sheet of the present disclosure has been described above with reference to FIGS. 1 to 3, but the steel sheet of the present disclosure is not limited thereto.

<Base Steel Sheet>

The aluminum coating layer 14 is provided on the surface of the base steel sheet 12. The base steel sheet 12 may be obtained by a common method including a hot rolling step, a cold rolling step, a coating step, and the like, and is not particularly limited. The base steel sheet may be a hot rolled steel sheet or a cold rolled steel sheet.

In addition, the thickness of the base steel sheet 12 may be a thickness set according to the purpose and is not particularly limited. For example, the thickness of the base steel sheet 12 may be such a thickness that the entire thickness of the coated steel sheet after aluminum coating layer 14 is provided (the steel sheet before the first exposed portion 22 or the like is formed) is 0.8 mm or more, and further, the entire thickness of the steel sheet may be 1 mm or more. In addition, the thickness of the base steel sheet 12 may be such a thickness that the entire thickness of the steel sheet is 4 mm or less, and further, the entire thickness of the steel sheet may be 3 mm or less.

As the base steel sheet 12, for example, a steel sheet formed to have high mechanical strength (which means, for example, properties related to mechanical deformation and fracture such as tensile strength, yield point, elongation, reduction in area, hardness, impact value, and fatigue strength) may be used. Specifically, a steel sheet having a tensile strength of 400 to 2700 MPa can be used. The sheet thickness is 0.7 mm to 3.2 mm. A steel sheet having low mechanical strength may be used as the base steel sheet 12. Specifically, the steel sheet having low mechanical strength includes steel sheets of 1300 MPa class, 1200 MPa class, 1000 MPa class, 600 MPa class, and 500 MPa class. For example, in the case of a B pillar of a vehicle, it is desirable that a steel sheet having a tensile strength of 1500 to 2000 MPa class is used for a portion from the upper part to the center portion to prevent deformation, and a steel sheet having a tensile strength of 500 MPa class to 1500 MPa class is used for the lower portion of an energy absorbing portion. More suitably, the lower portion is formed of a steel sheet of 600 MPa class to 1300 MPa class. The sheet thickness of a steel sheet of a B pillar is preferably 1.4 mm to 2.6 mm in the upper part and 1.0 mm to 1.6 mm in the lower portion.

As an example of a preferable chemical composition of the base steel sheet 12, for example, the following chemical composition may be adopted.

The base steel sheet 12 includes, as a chemical composition, by mass%, C: 0.02% to 0.58%, Mn: 0.20% to 3.00%, Al: 0.005% to 0.06%, P: 0.03% or less, S: 0.010% or less, N: 0.010% or less, Ti: 0% to 0.20%, Nb: 0% to 0.20%, V: 0% to 1.0%, W: 0% to 1.0%, Cr: 0% to 1.0%, Mo: 0% to 1.0%, Cu: 0% to 1.0%, Ni: 0% to 1.0%, B: 0% to 0.0100%, Mg: 0% to 0.05%, Ca: 0% to 0.05%, REM: 0% to 0.05%, Sn: 0% to 0.5%, Bi: 0% to 0.05%, Si: 0% to 2.00%, and a remainder: Fe and impurities.

Hereinafter, "%" indicating the amount of a component (element) means "mass%".

(C: 0.02% to 0.58%)

C is an important element that enhances the hardenability of the base steel sheet 12 and mainly determines the strength after quenching. Further, C is an element that lowers an $A_3$ point and promotes a lowering in a quenching treatment temperature. When the amount of C is less than 0.02%, the effect thereof is not sufficient in some cases. Therefore, the amount of C may be 0.02% or more. On the other hand, when the amount of C is more than 0.58%, the toughness of a quenched portion is significantly deteriorated. Thus, the amount of C may be 0.58% or less. Preferably, the amount of C is 0.45% or less.

(Mn: 0.20% to 3.00%)

Mn is an element that is very effective in enhancing the hardenability of the base steel sheet 12 and stably ensuring the strength after quenching. When the amount of Mn is less than 0.20%, the effect thereof is not sufficient in some cases. Therefore, the amount of Mn may be 0.20% or more. Preferably, the amount of Mn is 0.80% or more. On the other hand, when the amount of Mn is more than 3.00%, the effect thereof is saturated. Further, there are difficulties in ensuring stable strength after quenching in some cases. Thus, the amount of Mn may be 3.00% or less. The amount of Mn is preferably 2.40% or less.

(A1: 0.005% to 0.06%)

A1 functions as a deoxidizing element and has an action of improving soundness of the base steel sheet 12. When the amount of A1 is less than 0.005%, it is difficult to obtain the effect by the above action in some cases. Therefore, the amount of A1 may be 0.005% or more. On the other hand, when the amount of A1 is more than 0.06%, the effect by the above action is saturated, resulting in a cost disadvantage. Thus, the amount of A1 may be 0.06% or less. The amount of Al is preferably 0.05% or less. Alternatively, the amount of Al is preferably 0.01 % or more.

(P: 0.03% or Less)

P is an element that is contained as an impurity. When an excessive amount of P is contained in the base steel sheet, the toughness of the base steel sheet 12 is easily deteriorated. Accordingly, the amount of P may be 0.03% or less. The amount of P is preferably 0.01% or less. There is no need to particularly define the lower limit of the amount of P, but from the viewpoint of cost, the lower limit is preferably 0.0002%.

(S: 0.010% or Less)

S is an element that is contained as an impurity. S forms MnS and has an action of making the base steel sheet 12 brittle. Accordingly, the amount of S may be 0.010% or less. The amount of S is more desirably 0.004% or less. Although there is no need to particularly define the lower limit of the amount of S, from the viewpoint of cost, the lower limit is preferably 0.0002%.

(N: 0.010% or Less)

N is an element that is contained in the base steel sheet 12 as an impurity. Further, N is an element that forms an inclusion in the base steel sheet 12 and deteriorates the toughness after hot press forming. Accordingly, the amount of N may be 0.010% or less. The amount of N is preferably 0.008% or less and more preferably 0.005% or less. Although there is no need to particularly define the lower limit of the amount of N, from the viewpoint of cost, the lower limit is preferably 0.0002%.

(Ti: 0% to 0.20%, Nb: 0% to 0.20%, V: 0% to 1.0%, and W: 0% to 1.0%)

Ti, Nb, V, and W are elements that promote mutual diffusion of Fe and Al in the aluminum coating layer and the base steel sheet 12. Accordingly, at least one or two or more of Ti, Nb, V, and W may be contained in the base steel sheet 12. However, 1) when the amount of Ti and the amount of Nb are more than 0.20%, or 2) when the amount of V and the amount of W are more than 1.0%, the effect by the above action is saturated, resulting in a cost disadvantage. Accordingly, the amount of Ti and the amount of Nb may be 0.20% or less and the amount of V and the amount of W may be 1.0% or less. The amount of Ti and the amount of Nb are preferably 0.15% or less, and the amount of V and the amount of W are preferably 0.5% or less. In order to more reliably obtain the effect by the above action, the lower limit value of the amount of Ti and the amount of Nb is preferably 0.01 %, and the lower limit value of the amount of V and the amount of W is preferably 0.1%.

(Cr: 0% to 1.0%, Mo: 0% to 1.0%, Cu: 0% to 1.0%, Ni: 0% to 1.0%, and B: 0% to 0.0100%)

Cr, Mo, Cu, Ni, and B are elements that are effective in enhancing the hardenability of the base steel sheet 12 and stably ensuring strength after quenching. Accordingly, one or two or more of these elements may be contained in the base steel sheet 12. However, even when the amounts of Cr, Mo, Cu, and Ni are more than 1.0% and the amount of B is more than 0.0100%, the above effect is saturated, resulting in a cost disadvantage. Accordingly, the amounts of Cr, Mo, Cu, and Ni may be 1.0% or less. In addition, the amount of B may be 0.0100% or less and is preferably 0.0080% or less. In order to more reliably the above effect, it is preferable to satisfy that the amount of any one of Cr, Mo, Cu, and Ni is 0.1 % or more, and the amount of B is 0.0010% or more.

(Ca: 0% to 0.05%, Mg: 0% to 0.05%, and REM: 0% to 0.05%)

Ca, Mg, and REM have an action of refining the form of inclusions in the steel and has an action of preventing the occurrence of inclusion-derived cracking due to the inclusions during hot press forming. Accordingly, one or more of these elements may be contained in the base steel sheet 12. However, when these elements are added in an excessive amount, the effect of refining the form of inclusions in the base steel sheet 12 is saturated, leading to an increase in cost. Accordingly, the amount of Ca is 0.05% or less, the amount of Mg is 0.05% or less, and the amount of REM is 0.05% or less. In order to more reliably obtain the effect by the above action, it is preferable that any one of Ca: 0.0005% or more, Mg: 0.0005% or more, and REM: 0.0005% or more is satisfied.

Here, REM refers to 17 elements of Sc, Y, and lanthanoids, and the amount of REM refers to the total amount of these elements. Lanthanoids are industrially added to the base steel sheet 12 in the form of misch metal.

(Sn: 0% to 0.5%)

Sn is an element that improves the corrosion resistance of the first exposed portion 22. Accordingly, Sn may be contained in the base steel sheet 12. However, when the base steel sheet 12 contains Sn in an amount of more than 0.5%, the base steel sheet 12 becomes brittle. Accordingly, the amount of Sn is 0.5% or less. The amount of Sn is preferably 0.3% or less. In order to more reliably obtain the effect by the above action, the amount of Sn is preferably 0.02% or more. The amount of Sn is more preferably 0.04% or more.

(Bi: 0% to 0.05%)

Bi is an element that becomes a solidification nucleus in a solidification process of a molten steel and has an action of reducing a secondary arm space of dendrite and thus suppressing segregation of Mn and the like that segregate within the secondary arm space of the dendrite. Accordingly, Bi may be contained in the base steel sheet 12. In particular, for steel sheets in which a large amount of Mn is often contained, such as steel sheets for hot pressing, Bi is effective in suppressing deterioration in toughness caused by the segregation of Mn. Accordingly, preferably, Bi is contained in such a steel type.

However, when Bi is contained in the base steel sheet 12 in an amount of more than 0.05%, the effect by the above action is saturated, leading to an increase in cost. Accordingly, the amount of Bi is 0.05% or less. The amount of Bi is preferably 0.02% or less. In order to more reliably obtain the effect by the above action, the amount of Bi is preferably 0.0002% or more. The amount of Bi is more preferably 0.0005% or more.

(Si: 0% to 2.00%)

Si is a solid solution strengthening element and when Si is contained up to an amount of 2.00%, Si can be effectively used. However, when Si is contained in the base steel sheet 12 in an amount of more than 2.00%, there is concern that defects may occur in coating properties. Accordingly, in a case where the base steel sheet 12 contains Si, the amount of Si may be 2.00% or less. The upper limit is preferably 1.40% or less and more preferably 1.00% or less. Although the lower limit is not particularly limited, in order to more reliably obtain the effect by the above action, the lower limit is preferably 0.01 %.

(Remainder)

The remainder includes Fe and impurities. Here, examples of impurities include components contained in raw materials such as ores or scraps and components to be mixed in the steel sheet in the manufacturing process. The impurities mean components that are not intentionally contained in the steel sheet.

<Aluminum Coating Layer>

The aluminum coating layer 14 is formed on both surfaces of the base steel sheet 12. The method of forming the aluminum coating layer 14 is not particularly limited. For example, the aluminum coating layer 14 may be formed on both surfaces of the base steel sheet 12 by a hot dip coating method (a method in which the base steel sheet 12 is immersed in a molten metal bath containing aluminum as a main component to form an aluminum coating layer).

Here, the aluminum coating layer 14 is a coating layer containing aluminum as a main component, and may contain 50 mass% or more of aluminum. Depending on the purpose, the aluminum coating layer 14 may contain an element (for example, Si or the like) other than aluminum, and may contain impurities mixed in the manufacturing process. Specifically, the aluminum coating layer 14 may include, for example, as a chemical composition, by mass%, 5% to 12% of Si (silicon) and a remainder including aluminum and impurities. In addition, the aluminum coating layer 14 may include, as a chemical composition, by mass%, 5% to 12% of Si (silicon), 2% to 4% of Fe (iron), and a remainder including aluminum and impurities.

When Si is contained in the aluminum coating layer 14 in the above range, it is possible to prevent workability and corrosion resistance from being lowered. In addition, the thickness of the intermetallic compound layer can be reduced.

The thickness of the aluminum coating layer 14 in the first coated portion 26 is not particularly limited and for example, the average thickness may be 8 $\mu$m (micrometers) or more and is preferably 15 $\mu$m or more. In addition, regarding the thickness of the aluminum coating layer 14 in the first coated portion 26, for example, the average thickness may be 50 $\mu$m or less and is preferably 40 $\mu$m or less, more preferably 35 $\mu$m or less, and even more preferably 30 $\mu$m or less.

The thickness of the aluminum coating layer 14 represents the average thickness in the first coated portion 26 of the steel sheet 100.

The aluminum coating layer 14 prevents the base steel sheet 12 from being corroded. In addition, in a case where the base steel sheet 12 is processed by hot press forming, even when the base steel sheet 12 is heated to a high temperature, scale (iron compound) generated by oxidation of the surface of the base steel sheet 12 is prevented by the aluminum coating layer 14. In addition, in the aluminum coating layer 14, the boiling point and melting point are higher than those of plating coatings of organic materials and plating coatings of other metal-based materials (for example, zinc-based material). Therefore, when forming a hot stamped product by hot press forming, the coating does not evaporate, and thus the surface protection effect is high.

The aluminum coating layer 14 can be alloyed with iron (Fe) in the base steel sheet 12 by heating during hot dip coating.

<Intermetallic Compound Layer>

The intermetallic compound layer 16 is a layer formed at the boundary between the base steel sheet 12 and the aluminum coating layer 14 when aluminum coating is applied to the base steel sheet 12. Specifically, the intermetallic compound layer 16 is formed by a reaction of iron (Fe) of the base steel sheet 12 and a metal containing aluminum (Al) in a molten metal bath containing aluminum as a main component. The intermetallic compound layer 16 is mainly formed of a plurality of kinds of compounds represented by $Fe_xAl_y$ (x and y represent 1 or more). In a case where the aluminum coating layer includes Si (silicon), the intermetallic compound layer 16 is formed of a plurality of kinds of compounds represented by $Fe_xAl_y$ and $Fe_xAl_ySi_z$ (x, y, and z represent 1 or more).

The thickness of the intermetallic compound layer 16 in the first coated portion 26 is not particularly limited and for example, the average thickness may be 1 $\mu$m or more and is preferably 3 $\mu$m or more and more preferably 4 $\mu$m or more. In addition, regarding the thickness of the intermetallic compound layer 16 in the first coated portion 26, for example, the average thickness may be 10 $\mu$m or less and is preferably 8 $\mu$m or less. The thickness of the intermetallic compound layer 16 represents an average thickness in the first coated portion 26.

The thickness of the intermetallic compound layer 16 can be controlled by the temperature of the molten metal bath containing aluminum as a main component and the immersion time.

Here, confirmation of the base steel sheet 12, the intermetallic compound layer 16, and the aluminum coating layer 14, and measurement of the thicknesses of the intermetallic compound layer 16 and the aluminum coating layer 14 are performed by the following method.

Cutting is performed to expose the cross section of the steel sheet 100, and the cross section of the steel sheet 100 is polished. The direction of the cross section of the exposed steel sheet 100 is not particularly limited. However, the cross section of the steel sheet 100 is preferably a cross section orthogonal to a longitudinal direction of the first exposed portion 22.

The polished cross section of the steel sheet 100 is subjected to line analysis from the surface of the steel sheet 100 to the base steel sheet 12 using an electron probe micro analyser (FE-EPMA) to measure the concentration of aluminum and the concentration of iron. The concentration of aluminum and the concentration of iron are preferably average values measured three times.

The measurement conditions are an acceleration voltage of 15 kV, a beam diameter of about 100 nm, an irradiation time of 1000 ms per point, and a measurement pitch of 60 nm. The measurement distance may be set such that the thickness of the coating layer can be measured. For example, the measurement distance is about 30 $\mu$m to 80 $\mu$m from the surface of the steel sheet 100 to the base steel sheet 12 in the thickness direction. The thickness of the base steel sheet 12 is preferably measured with an optical microscope using scale.

<Definition of Ranges of Base Steel Sheet, Intermetallic Compound Layer, and Aluminum Coating Layer>

As the measurement values of the concentration of aluminum of the cross section of the steel sheet 100 (coated steel sheet), a region in which the concentration of aluminum (Al) is less than 0.06 mass% is determined as the base steel sheet 12, and a region in which the concentration of aluminum is 0.06 mass% or more is determined as the intermetallic compound layer 16 or the aluminum coating layer 14. In addition, of the intermetallic compound layer 16 and the aluminum coating layer 14, a region in which the concentration of iron (Fe) is more than 4 mass% is determined as the intermetallic compound layer 16 and a region in which the concentration of iron is 4 mass% or less is determined as the aluminum coating layer 14.

The distance from the boundary between the base steel sheet 12 and the intermetallic compound layer 16 to the boundary between the intermetallic compound layer 16 and the aluminum coating layer 14 is assumed as the thickness of the intermetallic compound layer 16. In addition, the distance from the boundary between the intermetallic compound layer 16 and the aluminum coating layer 14 to the surface of the aluminum coating layer 14 is assumed as the thickness of the aluminum coating layer 14.

The thickness of the aluminum coating layer 14 and the thickness of the intermetallic compound layer 16 are obtained by performing line analysis from the surface of the steel sheet 100 to the surface of the base steel sheet 12 (the boundary between the base steel sheet 12 and the intermetallic compound layer 16) and measuring the thickness as follows.

For example, in a case where the thickness of the first coated portion 26 is measured, in the longitudinal direction of the first exposed portion 22 (for example, an X direction in FIG. 1, hereinafter, referred to as a third direction), the thickness of the aluminum coating layer 14 is obtained at the positions of five places where the entire length of the first coated portion 26 in the third direction is divided into five equal parts (the same applies to the following definition of the entire length), and the average value of the obtained values is used as the thickness of the aluminum coating layer 14. Here, regarding the measurement position of the thickness in the first direction, measurement is performed at a position of 1/2 width of the first coated portion 26 in each of the cross-sectional views at the five places (hereinafter, the measurement of the thickness is similarly performed). The width of the first coated portion 26 indicates the distance between the end edges of the first coated portion 26 in the first direction F1, and is also simply referred to as the width of the first coated portion 26 below. The distinction among the aluminum coating layer 14, the intermetallic compound layer 16 and the base steel sheet 12 at the time of measuring the thickness is determined according to the above-described determination criteria. In a case where the first exposed portion 22 is provided to extend on the curve, the thickness may be obtained at places where the entire length along the curve is divided into five equal parts.

Similarly, in a case of measuring the thickness of the intermetallic compound layer 16, the thickness of the intermetallic compound layer 16 is obtained at the positions of five places where the entire length of the intermetallic compound layer 16 in the third direction is divided into five equal parts (the same applies to the following definition of the entire length) and the average value of the obtained values is used as the thickness of the intermetallic compound layer 16. In a case where the thickness of the intermetallic compound layer 16 of the first coated portion 26 is measured, the measurement is performed at a position of 1/2 width of the first coated portion 26, as in a case where the thickness of the aluminum coating layer 14 is measured. Alternatively, the distinction among the aluminum coating layer 14, the intermetallic compound layer 16, and the base steel sheet 12 at the time of measuring the thickness is determined according to the above-described determination criteria.

<First Exposed Portion>

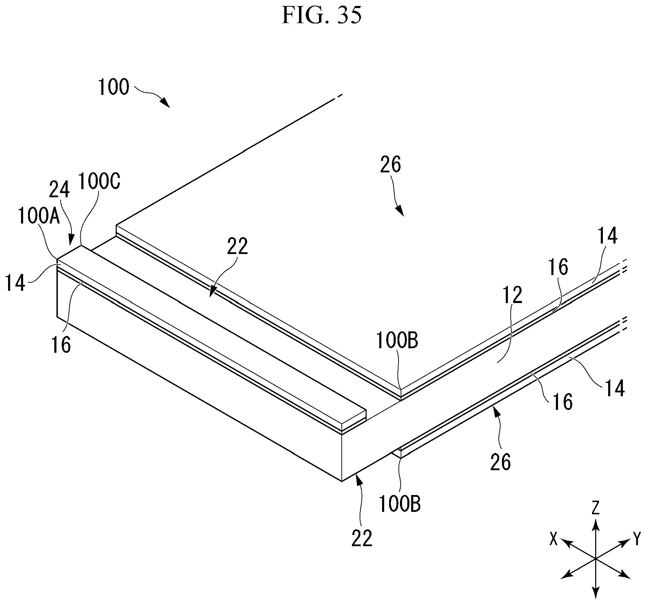

As shown in FIG. 35, the steel sheet 100 has the first exposed portion 22 on both surfaces of the end portion where welding is scheduled. The first exposed portion 22 is disposed along the end edge 100A of the steel sheet 100. On the surface on which the second coated portion 24 is provided, the first exposed portion 22 is provided between the first coated portion 26 and the second coated portion 24 at the end portion where welding is scheduled. On the surface on which the second coated portion 24 is not provided, the first exposed portion 22 is provided between the first coated portion 26 and end edge 100A of the steel sheet 100 at the end portion where welding is scheduled.

Here, referring to FIG. 3, in a case where the second coated portion 24 is formed, the first exposed portion 22 is formed in a range from the end edge 100C at the boundary between the second coated portion 24 and the first exposed portion 22 to the end edge 100B of the first coated portion 26. In addition, in a case where the second coated portion 24 is not formed, the first exposed portion 22 is formed in a range from the end edge 100A of the steel sheet 100 to the end edge 100B of the first coated portion 26.

The width of the first exposed portion 22 in the first direction F1 (the distance from the second coated portion 24 to the first coated portion 26 in the first direction F1, hereinafter, also referred to as the width of the first exposed portion 22) may be 0.1 mm or more on average. By setting the width of the first exposed portion 22 to 0.1 mm or more, it is possible to prevent aluminum from remaining in the end portion of the weld metal portion during welding of the tailored blank. The width of the first exposed portion 22 may be 5.0 mm or less on average. By setting the width of the first exposed portion 22 to 5.0 mm or less, deterioration in corrosion resistance after painting can be suppressed. In a case where butt welding is laser welding, the width of the first exposed portion 22 is preferably 0.5 mm or more and the width of the first exposed portion 22 is preferably 1.5 mm or less. In a case where butt welding is plasma welding, the width of the first exposed portion 22 is preferably 1.0 mm or more and the width of the first exposed portion 22 is preferably 4.0 mm or less. That is, it is preferable that the width of the first exposed portion 22 is in a range of 0.1 mm or more and the width of the first exposed portion 22 is in a range of 5.0 mm or less (average). The width of the first exposed portion 22 can be obtained by, for example, measuring the width of the first exposed portion 22 with a microscope using scale from cross sections of five places where the entire length of the first exposed portion 22 in the third direction (X direction) is divided into five equal parts, and obtaining the average value thereof (hereinafter, the measurement method of the width is the same).

Considering the mechanical strength of the tailored blank, the thickness of the base steel sheet 12 in the first exposed portion 22 is preferably in a range of 90% to 100% as a sheet thickness ratio represented by Expression (11). When the sheet thickness ratio is 90% or more, deterioration in the (static) tensile strength when a hot stamped product is formed using a tailored blank after butt welding is easily suppressed. In addition, similarly, deterioration in fatigue strength is also easily suppressed. The lower limit of the sheet thickness ratio is preferably 92% and more preferably 95%.

The thickness of the base steel sheet 12 at the first exposed portion 22 in the end portion of the steel sheet 100 and the thickness of the base steel sheet 12 at the first coated portion 26 are average thicknesses. In addition, the sheet thickness ratio is an average value. In FIG. 2,

$$\text{Sheet thickness ratio} = \text{(thickness of base steel sheet in first exposed portion:}$$

$$\text{tb})/\text{(thickness of base steel sheet in portions other than end portion of coated steel sheet:}$$

$$\text{ta}) \ldots (11).$$

In addition, as shown in FIG. 41, the base steel sheet 12 at the boundary between the first exposed portion 22 and the first coated portion 26 may be gently inclined. Here, a virtual line X in FIG. 41 represents a virtual line formed by extending a boundary line between the base steel sheet 12 and the intermetallic compound layer 16 in the first coated portion 26 from a boundary point 100E between the first exposed portion 22 and the first coated portion 26 to the direction of the end edge 100A of the steel sheet 100 (first direction F1 or second direction F3). Wo represents the distance from the boundary point 100E between the first exposed portion 22 and the first coated portion 26 on the virtual line X. In the present disclosure, $W_0$ is 0.1 mm. 100F represents an intersection of the perpendicular line of the virtual line X from the point where Wo is 0.1 mm to the base steel sheet 12 in the first exposed portion 22 and the base steel sheet 12. The virtual line Y is a straight line connecting the boundary point 100E and the intersection point 100F. 100G represents an intersection (maximum distance point) at which the distance in the vertical direction from the virtual line Y to the base steel sheet 12 is a maximum distance h in the intersections of the perpendicular line extending from the virtual line Y to the base steel sheet 12 in the first exposed portion 22 to the base steel sheet 12 and the base steel sheet 12. It is desirable that 100G is disposed on the outer side of 100F in the sheet thickness direction of the steel sheet in order to reduce stress concentration. In the steel sheet 100 of the present disclosure, an angle $\alpha$ formed by the virtual line X and the virtual line Y (hereinafter, sometimes referred to as an angle $\alpha$) may be 5.0° to 25.0° (condition A).

When the angle $\alpha$ is more than 25.0°, it is difficult to make the end surface of the first coated portion 26 have a gentle inclination. Then, the stress concentration cannot be relaxed and the fatigue strength is deteriorated. On the other hand, when the angle $\alpha$ is smaller than 5.0°, in a case where painting is applied around the welded portion, variation in the thickness of the painting film may occur and the corrosion resistance after painting of the weld metal portion may be decreased. From the viewpoint that both the fatigue strength of the joint and the corrosion resistance after painting of the welded portion are excellent, the preferable upper limit of the angle $\alpha$ is 15.0°. The preferable lower limit of the angle $\alpha$ may be 9.0°.

In the case of an intermetallic compound portion formed of an intermetallic compound layer such as a hot stamped product or a hollow hot stamped product, the first coated portion 26 is replaced with the intermetallic compound portion (intermetallic compound layer) and evaluation is performed in the same manner.

In the steel sheet 100 of the present disclosure, the maximum distance h in the vertical direction from the virtual line Y to the base steel sheet 12 may be 1.0 μm to 5.0 μm (condition B). When the maximum distance h is less than 1.0 μm, the curved shape is lost and the shape becomes linear. Thus, stress concentration cannot be relaxed and the fatigue strength is decreased. On the other hand, when the maximum distance h is more than 5.0 μm, stress concentration cannot be also relaxed and fatigue strength is decreased. From the viewpoint of excellent fatigue strength of the joint, the preferable upper limit value of the maximum distance h may be 4.0 μm. The preferable lower limit value of the maximum distance h may be 2.0 μm.

In a case where the conditions (A) and (B) are satisfied, in the steel sheet 100 of the present disclosure, from the viewpoint that both the fatigue strength of the joint and the corrosion resistance after painting of the welded portion are excellent, the first exposed portion 22 may further satisfy the following condition (C).

(C) When a depth of the first exposed portion 22 on the end edge side of the steel sheet 100 from the point where the distance is 0.1 mm on the virtual line X in the depth in the vertical direction from the virtual line formed by extending the surface of the aluminum coating layer 14 in the direction of the first exposed portion 22 to the surface of the base steel sheet 12 is denoted by D (μm), the depth D of the first exposed portion 22 satisfies the following Expression (1-1). In the steel sheet 100 of the present disclosure, it is preferable that any of the first exposed portions 22 provided on both surfaces satisfies the following Expression (1-1). The thickness of the base steel sheet 12 in the following Expression (1-1) is a value in terms of μm.

$$D \leq (\text{thickness mm of base steel sheet 12 in first coated portion } 26 \times 0.2)/2 \dots (1\text{-}1)$$

In the case of a hot stamped product, the following Expression (1-2) is used, and in the case of a hollow hot stamped product, the following Expression (1-3) is used.

$$D \leq (\text{thickness mm of first base steel sheet in first intermetallic compound portion} \times 0.2)/2 \dots (1\text{-}2)$$

$$D \leq (\text{thickness mm of third base steel sheet in third intermetallic compound portion} \times 0.2)/2 \dots (1\text{-}3)$$

When the sheet thickness of the base steel sheet 12 in the first exposed portion 22 is thin, the fatigue strength and the static strength are deteriorated. The lower limit of these strengths depends on the sheet thickness of a base steel sheet 12, which has a small product of the strength and the sheet thickness after hot stamping, of the steel sheet of the two welded steel sheets in the tailored blank. Therefore, a depth D of the first exposed portion 22 (hereinafter, also referred to as "removal depth D") may satisfy the relationship of the above Expression (1-1).

The lower limit of the depth D of the first exposed portion 22 is not particularly limited as long as the depth is such that the aluminum coating layer 14 and the intermetallic compound layer 16 are removed and the base steel sheet 12 is exposed. That is, the lower limit of the depth D of the first exposed portion 22 may be larger than the total thickness of the aluminum coating layer 14 and the intermetallic compound layer 16. However, from the viewpoint of static strength and fatigue strength, the range of the depth D of the first exposed portion 22 is equal to or larger than the total thickness of the aluminum coating layer 14 and the intermetallic compound layer 16 and is preferably as small as possible. For example, the range of the depth D may be 1.2 times or less of the total thickness of the aluminum coating layer 14 and the intermetallic compound layer 16.

Here, referring to FIG. 42, the depth D of the first exposed portion 22 is the longest distance between the virtual line formed by extending the surface of the aluminum coating layer 14 in the direction of the first exposed portion 22 and the surface of the base steel sheet 12. However, a range of 0.1 mm in the direction of the first exposed portion 22 from the boundary point 100E between the first exposed portion 22 and the first coated portion 26 includes a portion in which the thickness of the base steel sheet 12 is different. Therefore, in the steel sheet 100 of the present disclosure, the depth D of the first exposed portion 22 is the maximum value measured on the end edge 100A side of the steel sheet 100 from the range of 0.1 mm in the direction of the first exposed portion 22 from the boundary point 100E. In addition, the width W of the first exposed portion 22 (hereinafter, also referred to as "removal width W") is the shortest distance from a virtual line extending in the sheet thickness direction at the end edge 100A of the steel sheet 100 to the boundary point 100E of the first exposed portion 22 and the first coated portion 26.

The following methods may be used as a method of measuring the depth D of the first exposed portion 22 and the width (removal width W) of the first exposed portion 22 from the steel sheet 100, a tailored blank, and a hot stamped product.

As shown in FIG. 41, in a case where the base steel sheet 12 is gently inclined, the depth D of the first exposed portion 22 can be obtained by, for example, cutting the steel sheet 100 including the end portion having the first exposed portion 22 in the sheet thickness direction, and observing the cut cross section with an optical microscope. The thickness of the base steel sheet 12 in the first exposed portion 22 and the total thickness of the aluminum coating layer 14, the intermetallic compound layer 16, and a region other than the end portion of the base steel sheet 12 may be measured. In addition, in a case of a tailored blank and a hot stamped product, in the steel sheet adjacent to the weld metal portion, the thickness of the base steel sheet 12 in the first exposed portion 22, and the total thickness of the aluminum coating layer 14, the intermetallic compound layer 16, and the region other than the end portion of the base steel sheet 12 may be measured.

Specifically, first, in the region other than the end portion, the thickness of the base steel sheet 12, and the total thickness (thickness A) of the aluminum coating layer 14 and the intermetallic compound layer 16 formed on the base steel sheet 12 are obtained. In the region other than end portion, the thickness A is an average value of values obtained in the vicinities of the center positions at the positions of five places where the entire thickness of the region other than end portion in the third direction (X direction) is divided into five equal parts.

Next, the thickness (thickness B) of the base steel sheet 12 in the first exposed portion 22 is obtained on the end edge side of the steel sheet 100 from the region of 0.1 mm from the boundary point between the first exposed portion 22 and the first coated portion 26.

The thickness B is the minimum value obtained by measuring a range up to the end point of the first exposed portion 22. However, a range of 10% of the entire width of this range from the end edge of the steel sheet 100 to the center portion of the steel sheet 100 is excluded from the measurement. In the excluded region, the center position is measured at five places divided into five equal parts, and the minimum value is used as the thickness B.

Then, the depth D of the first exposed portion 22 is obtained by subtracting the thickness B from the thickness A obtained above (depth D of first exposed portion 22 = thickness A - thickness B).

In addition, in a case of a tailored blank and a hot stamped product, the same measurement may be used.

In the steel sheet 100 of the present disclosure, in a case of satisfying the above conditions (A), (B), and (C), from the viewpoint of excellent fatigue strength of the joint, it is preferable that the first exposed portion 22 satisfies the following condition (D),

(D) a curvature radius $R_0$ measured based on the following three points is 260 $\mu$m or more:

first point: the boundary point between the first exposed portion 22 and the first coated portion 26,
second point: the intersection of the perpendicular line from the point where the distance is 0.1 mm on the virtual line X and the base steel sheet 12, and
third point: a maximum distance point at which the distance in the vertical direction from the virtual line Y to the base steel sheet 12 is a maximum value.

Here, as a method of measuring the sheet thickness ratio from the tailored blank and the hot stamped product, the following method can be used. The sheet thickness ratio can be measured by, for example, observing the first exposed portion 22 of the base steel sheet 12 provided between the weld metal portion and the steel sheet 100 and the base steel sheet 12 of the first coated portion 26 in the tailored blank and the hot stamped product.

The thickness of the base steel sheet 12 in the first exposed portion 22 in the end portion of the steel sheet 100 and the thickness of the base steel sheet 12 in the first coated portion 26 can be obtained by cutting the steel sheet 100 in the thickness direction and observing the cross section with an optical microscope.

Specifically, the thickness of the base steel sheet 12 in the first exposed portion 22 and the thickness of the base steel sheet 12 in the first coated portion 26 are average values obtained at the positions of five places where the entire length of the second coated portion 24 in the X direction is divided into five equal parts along the longitudinal direction of the first exposed portion 22, respectively.

<Second Coated Portion>

Similar to the first exposed portion 22, the second coated portion 24 is formed in the end portion in which welding of the steel sheet 100 is scheduled and in which the first exposed portion 22 is provided. Then, the second coated portion 24 is preferably provided in a region on a side closer to the end edge of the steel sheet 100 than to the first exposed portion 22 on at least one surface of the end portion located around the steel sheet 100 and including the end edge 100A of the steel sheet 100. That is, the second coated portion 24 is preferably provided along the end edge 100A of the steel sheet 100 in the end portion where welding is scheduled.

The second coated portion 24 is preferably formed in a region including the end edge of the steel sheet 100 so as to be included in the weld metal portion after butt welding. In order to be in this state, the second coated portion 24 is provided on at least one surface of the end portion of the steel sheet 100 along the end edge of the steel sheet 100.

In the first direction F1, the second coated portion 24 (the entirety thereof) may be present in a range of 0.9 mm from the end edge 100A of the steel sheet 100. When the second coated portion 24 is present in this range, the second coated portion 24 is easily included in the weld metal portion after butt welding. Alternatively, by setting the region where the second coated portion 24 is present to this range, at least a region over 0.9 mm from the end edge 100A of the steel sheet 100 on the first coated portion side becomes the first exposed portion 22. Accordingly, at least the surface between the weld metal and the welded heat-affected zone after butt welding can be set to a region in which a hard intermetallic compound is not generated. As described above, by defining the width of the second coated portion 24 and the position of the first exposed portion 22, A1 required for improving the corrosion resistance of the weld metal can be supplied to the weld metal, and an intermetallic compound that deteriorates fatigue strength at the boundary between the weld metal and the welded heat-affected zone can be prevented from being generated. The second coated portion 24 is preferably present in a range of 0.5 mm from the end edge 100A of the steel sheet 100, more preferably present in a range of 0.4 mm from the end edge 100A of the steel sheet 100, and even more preferably present in a range of 0.3 mm from the end edge 100A of the steel sheet 100.

For example, the width of the second coated portion 24 is preferably set according to the width of the weld metal portion in the tailored blank after butt welding. The width of the weld metal portion is, for example, 0.4 mm to 6 mm. In a case where the width of the weld metal portion is 0.4 mm, the width of the second coated portion 24 is preferably 0.04 mm or more and less than 0.2 mm, and the total of the width of the second coated portion 24 and the width of the first exposed portion 22 is preferably 0.5 mm or more. In a case where the width of the weld metal portion is 1 mm, the width of the second coated portion 24 is preferably 0.3 mm or less, and the total of the width of the second coated portion 24 and the width of the first exposed portion 22 is preferably 0.8 mm or more. In a case where the width of the weld metal portion is 2 mm, the width of the second coated portion 24 is preferably 0.8 mm or less, and the total of the width of the second coated portion 24 and the width of the first exposed portion 22 is preferably 1.3 mm or more. In a case where the width of the weld metal portion is 6 mm, the width of the second coated portion 24 is preferably 0.9 mm or less, and the total of the width of the second coated portion 24 and the width of the first exposed portion 22 is preferably 3.3 mm or more. The width of the weld metal portion changes depending on the welding method. Thus, in a case where butt welding is laser welding, the width of the second coated portion 24 is preferably 0.05 mm or more and the width of the second coated portion 24 is preferably 0.40 mm or less. In a case of using plasma welding, the width of the second coated portion 24 is preferably 0.10 mm or more and the width of the second coated portion 24 is preferably 0.60 mm or less.

Here, the width of the first exposed portion 22 is an average value obtained by measuring the width of the first exposed portion 22 at five places, and the width of the second coated portion 24 is an average value obtained by measuring the width of the second coated portion 24 at five places. The measurement places of the first exposed portion 22 and the second coated portion 24 are positions of five places where the entire length of the first exposed portion 22 in the X direction is divided into five equal parts in the longitudinal direction of the first exposed portion 22, respectively.

The width of the first exposed portion 22 and the width of the second coated portion 24 are measured as follows.

Samples for measurement including a cross section in which the total width of the first exposed portion 22 and the second coated portion 24 formed in the end portions of the steel sheet 100 can be observed (for example, a cross section of the steel sheet 100 along the first direction F1 in plan view) are collected at five places. The samples for measurement are collected from the positions of five places where the length of the first exposed portion 22 formed along the end edge 100A of the steel sheet 100 is divided into five equal parts. Next, the steel sheet 100 is cut so as to expose the cross section thereof. Thereafter, each of the cut samples for measurement is embedded in a resin and polished and the cross section is magnified with a microscope. Then, for each sample, the width of the first exposed portion 22 which is the distance from the second coated portion 24 to the first coated portion 26 is measured. In addition, the distance between both end edges in the second coated portion 24 is measured for each sample.

<First Coated Portion>

The first coated portion 26 may have the same structure as the region other than the end portion of the steel sheet 100. For example, the thickness of the base steel sheet 12, the thickness of the intermetallic compound layer 16, and the thickness of the aluminum coating layer 14 in the first coated portion 26 may be the same as the thicknesses in regions other than the thickness of the end portion of the steel sheet 100, respectively. However, at least a part of the thickness of the aluminum coating layer 14 in the first coated portion 26 may be larger than the thickness of the aluminum coating layer 14 in the end portion of the steel sheet 100 in some cases. In addition, as shown in FIG. 40, the end surface of the first coated portion 26 may be gently inclined.

Conventionally, a tailored blank is manufactured by butt-welding a coated steel sheet coated with a metal containing aluminum as a main component by a welding method such as laser welding, plasma welding, and the like. In the weld metal portion of the butt-welded portion in the tailored blank, a large amount of aluminum derived from the aluminum coating may be mixed in some cases. When the tailored blank thus obtained is hot press-formed, the weld metal portion may be more softened than the base metal in some cases. For example, as a result of the tensile strength test of a portion including the weld metal portion in the tailored blank after hot press forming, an example in which fracture occurs in the weld metal portion has been reported.

From the viewpoint of avoiding fracture in the weld metal portion, for example, Patent Document 1 discloses the steel sheet for butt welding in which the intermetallic compound layer is allowed to remain continuously from the end edge of the steel sheet for butt welding to a region in which the aluminum coating is formed by removing the aluminum coating layer of the welding scheduled portion to be welded. Further, Patent Document 1 discloses the tailored blank obtained by butt-welding the welding scheduled portion of the steel sheet for butt welding.

Then, a tailored blank is manufactured by preparing a steel sheet for butt welding in which the intermetallic compound layer is allowed to remain by removing the aluminum coating layer, and performing butt welding in a state in which the end surfaces of a region in which an intermetallic compound layer remains are butted together. In this case, the fatigue strength of the tailored blank is deteriorated.

In a case of the steel sheet for butt welding in which the intermetallic compound layer remains continuously from the region in which the aluminum coating layer is formed to the welding scheduled portion, a hard and brittle intermetallic compound layer remains between the weld metal portion and the region in which the aluminum coating layer is formed. In this case, there is an influence of the intermetallic compound layer remaining at the boundary (stress concentration portion) between the weld metal portion and the welded heat-affected zone. As a result, when a load is repeatedly applied to a hot stamped product using a tailored blank which is formed of the steel sheet for butt welding disclosed in Patent Document 1, the fatigue strength of the joint is deteriorated. Further, in the tailored blank, since aluminum eluted from the intermetallic compound layer is included in a portion near the end edge of the region in which the aluminum coating layer is formed in the weld metal portion, the weld metal portion in this portion is softened and the fatigue strength of the weld metal portion is deteriorated.

Accordingly, the steel sheet for butt welding from which only the aluminum coating layer of the welding scheduled portion is removed and in which the intermetallic compound layer remains is not sufficiently applied to a portion where fatigue properties are important.

In addition, Patent Document 4 discloses a tailored blank obtained by preparing a steel sheet for butt welding by removing a metal layer in a welding scheduled portion, and butt-welding the welding scheduled portion of the steel sheet for butt welding.

In Patent Document 4, the metal layer is irradiated with a laser beam and a material is removed from one or more layers of the metal layer to form an ablation trench. After forming the ablation trench, the end portion region of the base steel sheet 12 is removed to form a welding notch. In a case of the steel sheet for welding disclosed in Patent Document 4, there are an embodiment in which the metal layer of the welding notch is completely removed to expose the base steel sheet 12, an embodiment in which a thin metal layer remains uniformly in the welding notch, and an embodiment in which the base steel sheet is exposed on the end surface side of the welding notch and the metal layer remains on the sheet width center side of the welding notch.

Therefore, in the embodiment in which the metal layer of the welding notch is completely removed to expose the base steel sheet 12, since there is no metal layer (aluminum coating layer and intermetallic compound layer) at the end portion, an appropriate amount of aluminum is not contained in the weld metal portion and the corrosion resistance after painting of the weld metal portion is deteriorated. In addition in the embodiment in which a thin metal layer remains uniformly in the welding notch, or in the embodiment in which the base steel sheet is exposed on the end surface side of the welding notch and the metal layer remains on the steel sheet center side of the welding notch, the metal layer remains on the base metal between the metal layer (for example, coating layer) on the steel sheet center side and the weld metal. In this case, when hot press forming is performed using a tailored blank obtained by butt-welding steel sheets for welding, the metal layer between the coating layer and the weld metal becomes an intermetallic compound layer, which causes deterioration in fatigue strength. Therefore, it was difficult to apply the steel sheet for butt welding disclosed in Patent Document 4 to a portion where fatigue properties and corrosion resistance after painting are important.

In the steel sheet 100 of the present disclosure, in order to overcome these problems, by leaving the second coated portion 24 only on the end edge side of the steel sheet 100 and disposing the first exposed portion 22 in the region adjacent to the second coated portion 24, both fatigue properties and corrosion resistance after painting are achieved. Although Patent Document 4 discloses the embodiment in which the metal layer on the end surface side of the welding notch is removed more than the metal layer on the steel sheet center side so that a metal such as Al is not mixed into the weld metal portion, an embodiment in which the second coated portion 24 is formed on the end surface side of the welding notch and the first exposed portion 22 is formed in the adjacent region as in the steel sheet 100 of the present disclosure is not disclosed.

In addition, in Patent Documents 2 to 5, as the steel sheet for butt welding from which the aluminum coating layer of the welding scheduled portion to be welded and the intermetallic compound layer are removed, a tailored blank obtained by butt-welding the welding scheduled portions of the steel sheet for butt welding is disclosed.

However, as the steel sheet for butt welding from which the intermetallic compound layer and the aluminum coating layer are removed, in the tailored blank obtained by performing butt welding in a state in which the end surfaces of the region in which both layers are removed are butted together, when painting is performed on a hot stamped product, the corrosion resistance after painting of the weld metal portion is deteriorated. In the welding scheduled portion, in a case where both the intermetallic compound layer and the aluminum coating layer are removed, there is no or a very little amount of aluminum mixed in the weld metal portion. Therefore, for example, in the steel sheets for butt welding disclosed in Patent Documents 2 to 5, scale (iron compound) is easily generated in the tailored blank. As a result, when a hot stamped product formed by hot press-forming the tailored blank is painted, the adhesion of a painting on the surface of the weld metal portion is deteriorated and thus the corrosion resistance after painting of the weld metal portion is deteriorated.

In contrast, the steel sheet 100 of the present disclosure has the first exposed portion 22 in which the base steel sheet 12 is exposed since not only the aluminum coating layer 14 adjacent to the first coated portion 26 but also the intermetallic compound layer 16 is removed. Further, the steel sheet 100 of the present disclosure has the second coated portion 24 in which the intermetallic compound layer 16 and the aluminum coating layer 14 are provided.

That is, the steel sheet 100 of the present disclosure does not have a hard and brittle intermetallic compound layer 16 in the first exposed portion 22 in which the base steel sheet 12 is exposed. In addition, in the steel sheet 100 of the present disclosure, the second coated portion 24 in which the intermetallic compound layer 16 and the aluminum coating layer 14 remain is present in the region including the end edge 100A of the steel sheet 100.

Therefore, a tailored blank obtained by butt-welding the end surface of the end portion having the first exposed portion 22 and the second coated portion 24 of the steel sheet 100 of the present disclosure with another steel sheet has the following characteristics of (1) to (3).

(1) The hard and brittle intermetallic compound layer 16 is not provided at the boundary between the weld metal portion and the welded heat-affected zone.
(2) Aluminum from the intermetallic compound layer 16 and the aluminum coating layer 14 is not included between the weld metal portion (or the welded heat-affected zone) and the end edge of the coating layer.
(3) The second coated portion 24 is incorporated in the weld metal portion after butt welding (that is, an appropriate amount of aluminum of the second coated portion 24 is mixed into the weld metal portion).

Due to the above (1) and (2), even in a case where this tailored blank is formed into a hot stamped product, deterioration in the fatigue strength of the joining joint is suppressed. Specifically, according to (1), since there is no hard and brittle intermetallic compound layer that easily becomes a starting point of fracture at the boundary between the weld metal portion and the welded heat-affected zone, deterioration in fatigue strength of the joining joint is suppressed. Further, according to (2), since aluminum from the intermetallic compound layer 16 and the aluminum coating layer 14 is not mixed into the boundary between the welded heat-affected zone and the coating layer, it is possible to suppress deterioration in fatigue strength in the weld metal portion caused by softening of the weld metal portion of this portion. In addition, due to the above (3), since the generation of scale is suppressed on the surface of the weld metal portion, chemical convertibility is improved and the adhesion of the painting is improved. Therefore, even after painting the hot stamped product, the corrosion resistance after painting of the weld joint is improved.

In addition, a ratio of the width of the second coated portion 24 to the total of the width of the second coated portion 24 and the width of the first exposed portion 22 (hereinafter, referred to as the "ratio of the width of the second coated portion 24") is preferably in a range of 3% to 50%. When the ratio of the second coated portion 24 is less than 3%, the effect of corrosion resistance after painting is not high, and when the ratio is more than 50%, the coating easily remains on the end portion of the weld metal portion and the fatigue strength is deteriorated. When the ratio of the width of the second coated portion 24 is in this range, deterioration in fatigue strength is suppressed, and excellent corrosion resistance after painting can be effectively obtained. With this configuration, the second coated portion 24 remains in a range that is less than half of the distance between the end edge of the steel sheet 100 and the first coated portion 26. Thus, when laser welding is performed on the steel sheet 100, it is possible to stably prevent the first weld metal portion from coming into contact with the first coated portion 26. In addition, both fatigue strength and corrosion resistance after painting of the first weld metal portion can be increased. In actual machines, since the width of the first weld metal portion necessarily varies, this configuration is preferable. A preferable lower limit of the ratio of the width of the second coated portion 24 is 5%. On the other hand, the upper limit of the ratio of the width of the second coated portion 24 is preferably 40% and more preferably 30%.

The second coated portion 24 is preferably formed at least over the entire length in the third direction (X direction) in a range where welding is scheduled. For example, in FIG. 35, the second coated portion 24 is formed along the end edge 100A where welding is scheduled.

In the steel sheet 100 of the present disclosure, the end portion of the welding scheduled portion has the first exposed portion 22 of the base steel sheet 12 and the second coated portion 24 formed in the region including the end edge 100A of the steel sheet 100. The second coated portion 24 includes the following embodiments as long as deterioration in the fatigue strength of the weld metal portion is suppressed and the corrosion resistance after painting can be maintained.

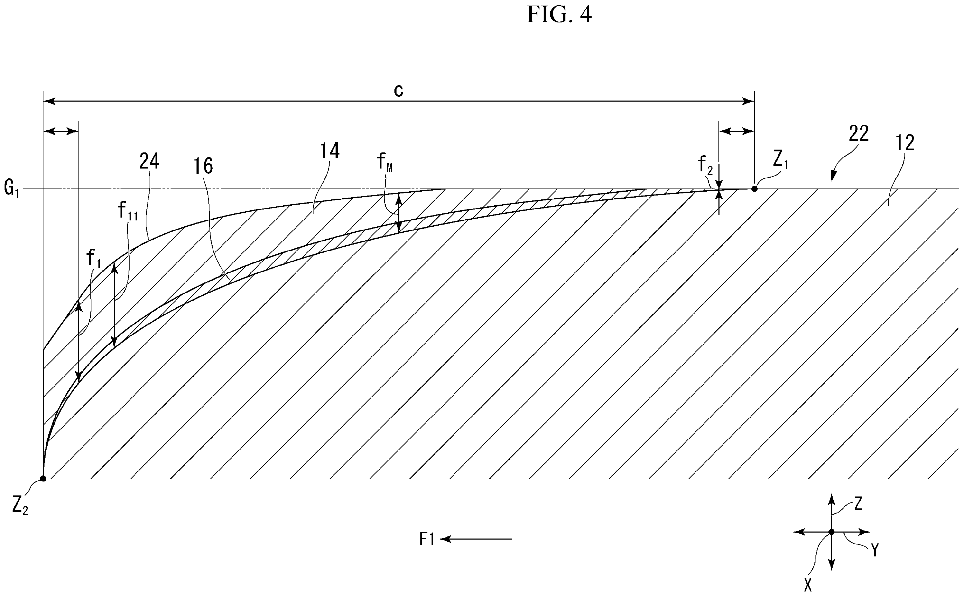

For example, when a coated steel sheet is punched to obtain a punched member, in the region including the end edge of the coated steel sheet in the end portion located around the coated steel sheet, droop may occur due to a cutting unit such as a shear in some cases. When the intermetallic compound layer 16 and the aluminum coating layer 14 at the end portion of the coated steel sheet where the droop has occurred are removed by cutting, grinding, or the like, while the intermetallic compound layer 16 and the aluminum coating layer 14 are left at the portion where the droop occurs as the second coated portion 24, the first exposed portion 22 in which the base steel sheet 12 is exposed can be formed. At this time, a mechanical grinding unit is operated in parallel with the steel sheet surface to remove the intermetallic compound layer 16 and the aluminum coating layer 14, so that the second coated portion 24 is provided in the region above the droop located below the ground surface. In addition, the size of the second coated portion 24 can be arbitrarily adjusted by setting the amount of droop (the width of the droop and the depth of the droop) in a predetermined range. For example, as shown in FIG. 4, the intermetallic compound layer 16 and the aluminum coating layer 14 remain in a lower region of the surface of the base steel sheet 12 located on the inner side of the base steel sheet 12 in the thickness direction from the virtual line $G_1$ extending in the first direction F1 from the boundary between the first exposed portion 22 and the second coated portion 24 in the cross-sectional view. The portion in which the intermetallic compound layer and the aluminum coating layer remain becomes the second coated portion 24. In this case, the second coated portion 24 in the periphery of the boundary between the second coated portion 24 and the first exposed portion 22 becomes thinner than the second coated portion 24 in the vicinity of the end edge of the base steel sheet 12 due to cutting, grinding or the like. In a case where the end portion is cut after removing the metal layer as in Patent Document 4, such a structure of the second coated portion cannot be formed. At this time, the aluminum coating layer 14 is preferably included in the second coated portion 24.

Referring to FIG. 4, even in a case where the second coated portion 24 is provided in the droop portion, the second coated portion 24 is provided between the end edge 100C at the boundary with the first exposed portion 22 and the end edge 100A of the steel sheet 100. In addition, in a case where the second coated portion is provided in the droop portion, the end edge 100A of the steel sheet 100 and the second coated portion 24 may be adjacent to each other. In the second coated portion 24 in the vicinity of the first exposed portion 22, at least a part of the aluminum coating layer 14 and the intermetallic compound layer is removed. Therefore, the end edge 100C of the boundary with the second coated portion 24 on the first exposed portion 22 side is the boundary between the base steel sheet 12 and the intermetallic compound layer 16 in the second coated portion 24, and the position is assumed as a first end $Z_1$. On the other hand, in the embodiment, since the second coated portion 24 is formed so as to cover the droop, the position where the second coated portion 24 is present most distant from the first exposed portion 22 in the first direction F1 is assumed as the end edge 100A of the steel sheet 100, and the position is assumed as a second end $Z_2$. That is, the distance between the first end $Z_1$ and the second end $Z_2$ along the first direction F1 is assumed as a width c of the second coated portion 24.

Here, when the coating thickness at a position separated from the second end $Z_2$ in the direction opposite to the first direction F1 by a length of 20% of the width c of the second coated portion 24 is assumed as $f_{11}$, and the coating thickness at a position separated from the first end $Z_1$ in the first direction F1 by a length of 10% of the width c of the second coated portion 24 is assumed as a coating thickness $f_2$, the coating thickness $f_{11}$ is preferably thicker than the coating thickness $f_2$. In this case, since the amount of Al on the end edge side of the steel sheet 100 at the welding scheduled position is large, aluminum can be efficiently diffused into the weld metal.

In addition, when the coating thickness at the position separated from the second end $Z_2$ in the direction opposite to the first direction F1 by a length of 10% of the width c of the second coated portion 24 is $f_1$, and the coating thickness at a position separated from the first end $Z_1$ in the first direction F1 by a length of 10% of the width c of the second coated portion 24 is assumed as a coating thickness $f_2$, the coating thickness $f_1$ is preferably thicker than the coating thickness $f_2$. In this case, since the amount of Al on the end edge side of the steel sheet 100 at the welding scheduled position is large, aluminum can be efficiently diffused into the weld metal. Particularly, when droop is formed, the aluminum coating is drawn by a tool and is moved toward the end surface side of the steel sheet. As a result, the end surface to be welded is covered with a large amount of aluminum coating. Since the aluminum coating on the end surface is located in the vicinity of the center of the weld metal during welding, Al can be more efficiently diffused into the weld metal. Therefore, the corrosion resistance of the weld metal can be improved. In addition, since the amount of Al in the vicinity of the boundary between the second coated portion 24 and the first exposed portion 22 is small, it is possible to suppress the concentration of aluminum at the boundary between the weld metal portion and the first exposed portion 22. Therefore, the fatigue properties of the weld joint when a tailored blank is formed can be improved.

In the first direction F1, it is preferable that a coating thickness $f_M$ at the center position between the first end $Z_1$ and the second end $Z_2$ is thicker than the coating thickness $f_2$ which is a coating thickness at the position separated from the first end $Z_1$ in the first direction F1 by a length of 10% of the width c of the second coated portion 24.

In a case where the coating thickness $f_M$ is thicker than the coating thickness $f_2$, the amount of Al on the end edge side of the base steel sheet 12 increases, and thus aluminum can be efficiently diffused in the weld metal. Therefore, the corrosion resistance of the weld metal can be improved. In addition, since the amount of Al in the vicinity of the boundary between the second coated portion 24 and the first exposed portion 22 is small, it is possible to suppress the concentration of aluminum at the boundary between the weld metal portion and the first exposed portion 22. Therefore, the fatigue properties of the weld metal portion can also be improved.

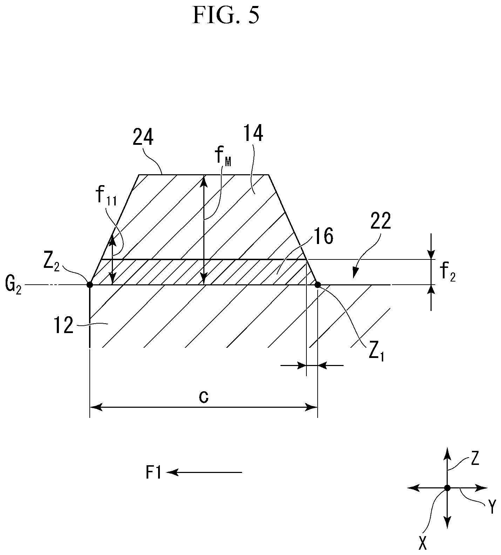

Further, the first exposed portion 22 and the second coated portion 24 may be formed by irradiating the coated steel sheet with laser light to partially remove the aluminum coating layer 14 and the intermetallic compound layer 16. In addition, the coated steel sheet may be cut by irradiation with laser light to form an end portion. In this case, since the laser light is focused to process the coated steel sheet, the second coated portion 24 has a wider width on the base steel sheet 12 side in the first direction F1 as shown in FIG. 5 and the width on the aluminum coating layer 14 side is narrow. In this case, as shown in FIG. 5, the second coated portion 24 is provided on the virtual line $G_2$ extending in the first direction F1 from the boundary between the first exposed portion 22 and the second coated portion 24 or on the outer side in the thickness direction with respect to the virtual line $G_2$ from the inner side of the base steel sheet 12 toward the surface on which the first exposed portion 22 is formed. Here, the length in the first direction F1 from the first end $Z_1$ which is the boundary between the second coated portion 24 and the first exposed portion 22 on the base steel sheet 12 side to the second end $Z_2$ which is the end on the end edge 100A side of the second coated portion 24 on the base steel sheet 12 side is assumed as the width c of the second coated portion 24.

Here, when the coating thickness at the position separated from the second end $Z_2$ in FIG. 5 in the direction opposite to the first direction by a length of 20% of the width c of the second coated portion 24 F1 is assumed as $f_{11}$, and the coating thickness at the position separated from the first end $Z_1$ in the first direction F1 by a length of 10% of the width c of the second coated portion 24 is assumed as a coating thickness $f_2$, the coating thickness $f_{11}$ is preferably thicker than the coating thickness $f_2$. In a case where the coating thickness $f_{11}$ is thicker than the coating thickness $f_2$, the amount of Al on the end edge 100A side of the steel sheet 100 is large, and thus aluminum can be efficiently diffused into the weld metal. Therefore, the corrosion resistance of the weld metal can be improved. In addition, since the amount of Al in the vicinity of the boundary between the second coated portion 24 and the first exposed portion 22 is small, it is possible to suppress the concentration of aluminum at the boundary between the weld metal portion and the first exposed portion 22.

Similarly, in the first direction F1 in FIG. 5, it is preferable that a coating thickness $f_M$ at the center position between the first end $Z_1$ and the second end $Z_2$ is thicker than the coating thickness $f_2$ which is a coating thickness at the position separated from the first end $Z_1$ in the first direction F1 by a length of 10% of the width c of the second coated portion 24.

In a case where the coating thickness $f_M$ is thicker than the coating thickness $f_2$, the amount of Al on the end edge 100A side of the steel sheet 100 is large, and thus aluminum can be efficiently diffused into the weld metal. Therefore, the corrosion resistance of the weld metal can be improved. In addition, since the amount of A1 in the vicinity of the boundary between the second coated portion 24 and the first exposed portion 22 is small, it is possible to suppress the concentration of aluminum at the boundary between the weld metal portion and the first exposed portion 22. Therefore, the fatigue properties of the weld joint when a tailored blank is formed can be improved.

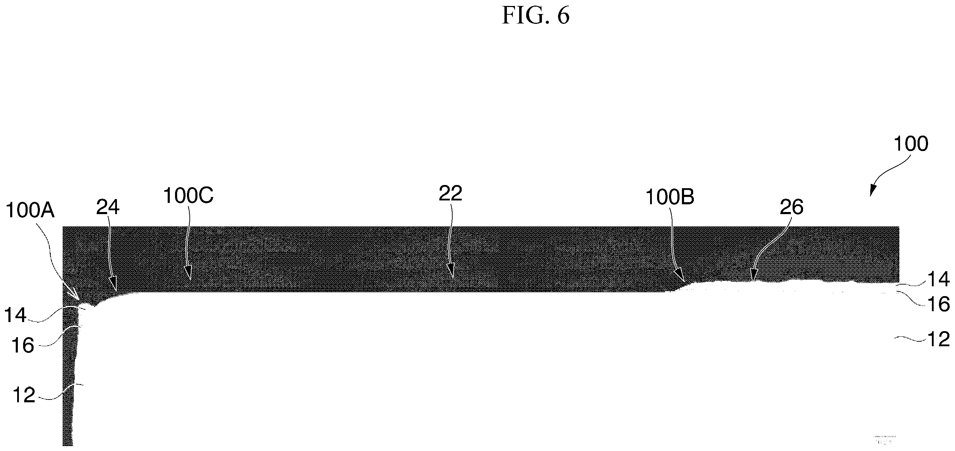

FIG. 6 is a cross-sectional image showing another example of the end portion having the first exposed portion 22 and the second coated portion 24 of the base steel sheet 12 in the steel sheet 100 according to the present disclosure.

Referring to FIG. 6, droop occurs in a region from the end edge 100A of the steel sheet 100 to the end edge 100C of the boundary between the first exposed portion 22 and the second coated portion 24. In the droop portion, the second coated portion 24 in which the aluminum coating layer 14 and the intermetallic compound layer 16 remain is formed on the base steel sheet 12. As shown in FIG. 6, in a case where droop occurs, the second coated portion 24 in the periphery of the end edge 100C is formed of only the intermetallic compound layer 16. On the other hand, in the region from the end edge 100B of the first coated portion 26 to the end edge 100C at the boundary between the first exposed portion 22 and the second coated portion 24, the first exposed portion 22 in which the base steel sheet 12 is exposed is formed.

The aluminum contained in the second coated portion 24 is mixed in the weld metal portion in an appropriate amount so that the corrosion resistance after painting of the weld metal portion becomes excellent. For this reason, in the steel sheet 100 of the present disclosure, the aluminum coating layer 14 and the intermetallic compound layer 16 remaining in the droop portion are not removed and used as the second coated portion 24. At this time, the aluminum coating layer 14 is preferably included in the second coated portion 24.

As an example of a preferable method of forming the first exposed portion 22 and the second coated portion 24 in at least a part of both surfaces of the end portion located around the coated steel sheet, for example, the following method may be used.

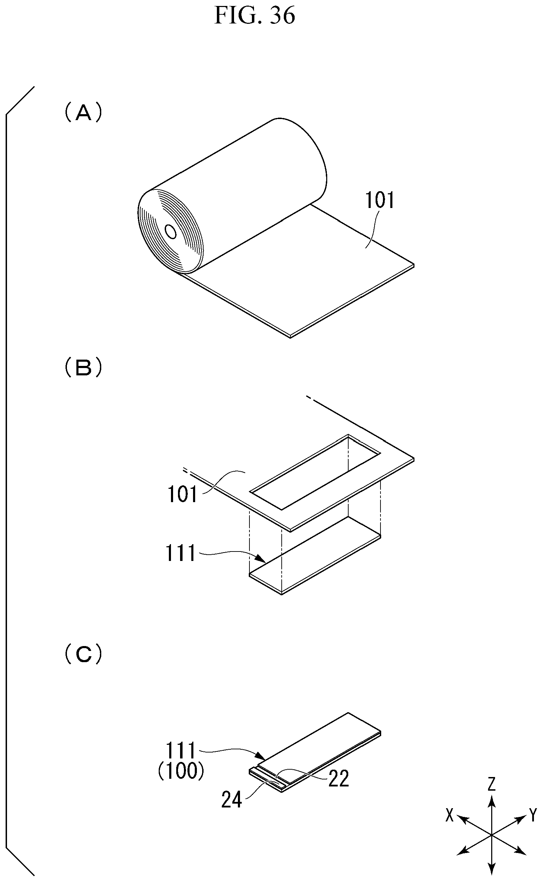

As shown in FIG. 36(C), in at least a part of the end portion located around the coated steel sheet (punched member) 111, the intermetallic compound layers 16 and the aluminum coating layers 14 formed on both surfaces of the base steel sheet 12 are removed by cutting or grinding. Thus, this method may include a step of forming the first exposed portion 22 in which the base steel sheet 12 is exposed and the second coated portion 24 in which the intermetallic compound layer 16 and the aluminum coating layer 14 remain on at least one surface of the end portion located around the coated steel sheet 111 on a side closer to the end edge of the coated steel sheet 111 than to the first exposed portion 22 (referred to as formation method A).

For example, the formation method A is a method of forming the first exposed portion 22 and the second coated portion 24 in the end portion of the coated steel sheet 111 as described below. First, as a steel sheet before a tailored blank is formed, a coated steel sheet 111 cut into a desired size is prepared. Next, the aluminum coating layers 14 and the intermetallic compound layers 16 formed on both surfaces of the base steel sheet 12 are removed by cutting or grinding in at least a part of the both surfaces of the end portion of the cut coated steel sheet 111. Thus, the first exposed portion 22 in which the base steel sheet 12 is exposed is formed in the end portion of the coated steel sheet 111. At this time, further, the second coated portion 24 is formed along the end edge of the coated steel sheet 111 on at least one surface of the end portion located around the coated steel sheet 111 on the side closer to the end edge of the coated steel sheet 111 than to the first exposed portion 22.

Here, in a case where the second coated portion 24 is formed using droop, it is preferable to cut the coated steel sheet 111 using a shear or the like. In this case, by cutting or grinding the surface of the coated steel sheet 111 toward the end surface side along the surface of the coated steel sheet 111, only the aluminum coating layer 14 and the intermetallic compound layer 16 remain on the droop and thus the first exposed portion 22 and the second coated portion can be formed. In this case, the aluminum coating layer 14 and the intermetallic compound layer 16 located below the cut or ground region (the inner side of the base steel sheet 12) are formed as the second coated portion 24.

On the other hand, in a case where laser light is used to cut the coated steel sheet 111, the steel sheet can be cut without droop. In this case, the steel sheet 100 shown in FIGS. 1 to 3 can be formed. Particularly, regarding the steel sheet 100 shown in FIG. 3, the aluminum coating layer 14 and the intermetallic compound layer 16 located above the surface of the base steel sheet 12 in the first exposed portion 22 (the outer side of the base steel sheet) are formed as the second coated portion 24.

A removal method by cutting performed to form the first exposed portion 22 is not particularly limited. For example, cutting may be performed by machining such as a bite, an end mill, or a metal saw. Grinding may be performed by machining such as a grindstone, a grinder, or a sander. Further, by combining these methods, the intermetallic compound layer 16 and the aluminum coating layer 14 may be removed to form the first exposed portion 22.

Another method is a method of removing the intermetallic compound layer 16 and the aluminum coating layer 14 by laser processing such as laser gouging. Further, by combining these methods, the intermetallic compound layer 16 and the aluminum coating layer 14 may be removed to form the first exposed portion 22.

In a case where the first exposed portion 22 is formed by laser processing such as laser gouging, when heat is applied, hydrogen may be mixed into the base steel sheet 12 in the portion in which the first exposed portion 22 is formed due to water vapor in the atmosphere. In addition, since the base steel sheet 12 in the portion in which the first exposed portion 22 is formed is rapidly cooled after laser processing, martensite is formed as the metallographic structure of the base steel sheet 12 in this portion. Thus, delayed fracture may occur at the end surface of the steel sheet 100 before welding in some cases.

On the other hand, in a case where the first exposed portion 22 is formed by machining, in the base steel sheet 12 in the portion in which the first exposed portion 22 is formed, the temperature rise is suppressed and martensite is not formed. In addition, the formation of delayed fracture is suppressed since hydrogen does not enter. From this point, as a method of forming the first exposed portion 22, it is preferable to employ cutting by machining (cutting) or grinding (grinding). Further, in a case where the first exposed portion 22 is formed by machining, there is no need to incorporate a light shielding measure against laser light when performing laser processing such as laser gouging, and thus this is advantageous in terms of cost or the like.

In a case where the first exposed portion 22 and the second coated portion 24 are formed by machining, for example, an end mill (a tip blade of an end mill, a side blade of an end mill), a metal saw, or the like may be used. Among the machining processes, the first exposed portion 22 and the second coated portion 24 are preferably formed by cutting with an end mill. That is, it is preferable to have a step of forming the first exposed portion 22 and the second coated portion 24 by cutting with an end mill. Cutting by an end mill is cutting by rotational movement. Therefore, in the first exposed portion 22 formed by the end mill, a cut mark having a fine uneven shape is generated on the cutting surface (the exposed surface of the base steel sheet 12 in the first exposed portion 22 and the cross section at the boundary between the first exposed portion 22 and the first coated portion 26). The conditions (A) and (B) are easily satisfied by making the R shape of the end portion of the end mill appropriate.

As long as the first exposed portion 22 is formed on at least a part of both surfaces of the end portion located around the steel sheet 100, and the second coated portion 24 is formed on at least one surface of the end portion located around the steel sheet 100, the order of forming the first exposed portion 22 and the second coated portion 24 in the end portion is not limited to the above formation method A.

As an example of another preferable method of forming the first exposed portion 22 on both surfaces of the end portion located around the steel sheet 100 and the second coated portion 24 on at least one surface of the end portion located around the steel sheet 100, for example, the following method may be used.

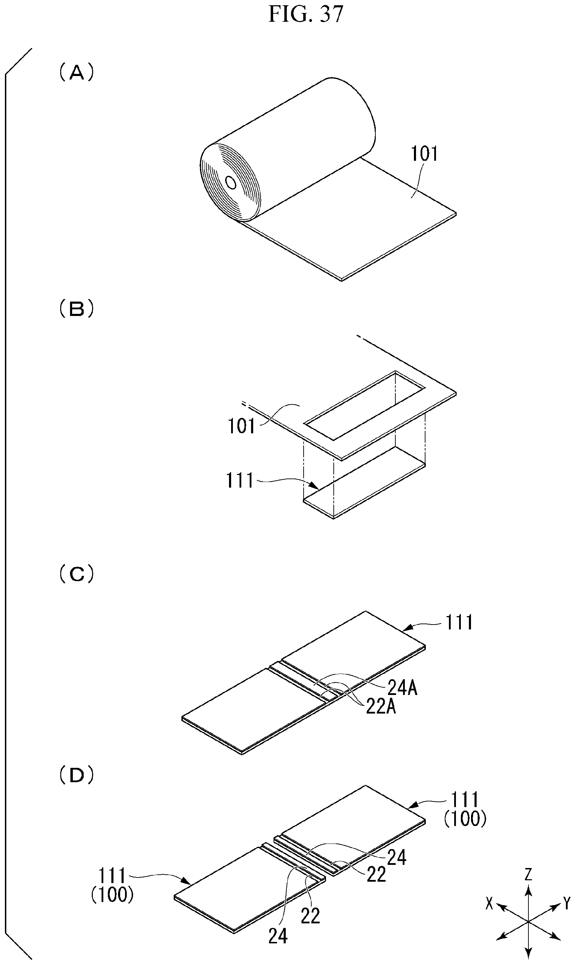

The method may include a step of forming two first exposed portions 22A in which the base steel sheet 12 is exposed by removing the aluminum coating layer 14 and the intermetallic compound layer 16 formed on both surfaces of the base steel sheet 12 by cutting or grinding in regions of the both surfaces of the coated steel sheet (punched member) 111 other than the end portion shown in FIG. 37, and forming a second coated portion 24A in which the intermetallic compound layer 16 and the aluminum coating layer 14 remain on at least one surface of the coated steel sheet other than the end portion so as to be interposed between the two first exposed portions 22A (FIG. 37(C)), and a step of forming first exposed portions 22 in which the base steel sheet 12 is exposed on at least a part of both surfaces of the end portion of the coated steel sheet (steel sheet for butt welding) by cutting the coated steel sheet so that the second coated portions 24 has a region including the end edge of the coated steel sheet and forming second coated portions 24 in which the intermetallic compound layer 16 and the aluminum coating layer 14 remain on at least one surface of the end portion of the coated steel sheet on the end edge side of the coated steel sheet from the first exposed portions 22 (FIG. 37(D)) (referred to as formation method B).

For example, the formation method B is specifically the following method. First, a coated steel sheet 111 obtained by punching and cutting the coated steel sheet 101 into a desired size is prepared. Next, on the cut coated steel sheet 111, the first exposed portion 22 in which the base steel sheet 12 is exposed is formed by removing the aluminum coating layer 14 and the intermetallic compound layer 16 formed on the base steel sheet 12 by cutting or grinding. Two first exposed portions 22 are formed in regions excluding the first coated portion 26 so as to extend in one direction, for example. In the region interposed between the two first exposed portions 22, the second coated portion 24 in which the intermetallic compound layer 16 and the aluminum coating layer 14 remain is formed. Then, in the cut coated steel sheet, the second coated portion 24 interposed between the two first exposed portions 22 is cut so that the second coated portion 24 is formed along the end edge of the coated steel sheet 111. The steel sheet 100 obtained by cutting is a steel sheet 100 before a tailored blank is formed.

In a case of the formation method B, the width of the second coated portion 24 (that is, the width of the second coated portion 24 before cutting) interposed between the two first exposed portion 22 may be 0.3 mm to 2.3 mm and is preferably 0.4 mm to 1.6 mm. In addition, as a position at which the second coated portion 24 is cut, the second coated portion may be cut at a position in the vicinity of the center line of the second coated portion 24 and may be cut at a position other than the vicinity of the center line so as to have a desired width. In addition, the first exposed portion 22 in which the base steel sheet 12 is exposed may be removed by cutting or grinding so as to have a desired width.

The width of the first exposed portion 22 of the base steel sheet 12 formed by the above formation method A may be 1.1 times or more larger than half of the width of a melted region (weld metal portion) after butt welding of the steel sheet 100.

The widths of the two first exposed portions 22 of the base steel sheet 12 before the second coated portion 24 formed by the above formation method B is cut may be respectively 1.1 times or more larger than half of the width of a melted region (weld metal portion) after butt welding of the steel sheet 100.

In addition, the width of the second coated portion 24 in the steel sheet 100 before forming a tailored blank is formed to have a width included in the melted region (weld metal portion) after butt welding of the steel sheet 100.

Within these ranges, since an appropriate amount of aluminum is mixed into the weld metal portion after butt welding of the steel sheet 100, excellent corrosion resistance after painting is obtained and deterioration in (static) tensile strength is also suppressed. In addition, since there is no hard and brittle intermetallic compound layer 16 at the boundary between the weld metal portion and the welded heat-affected zone, deterioration in the fatigue strength of the steel sheet after hot press forming is suppressed.

<Tailored Blank>

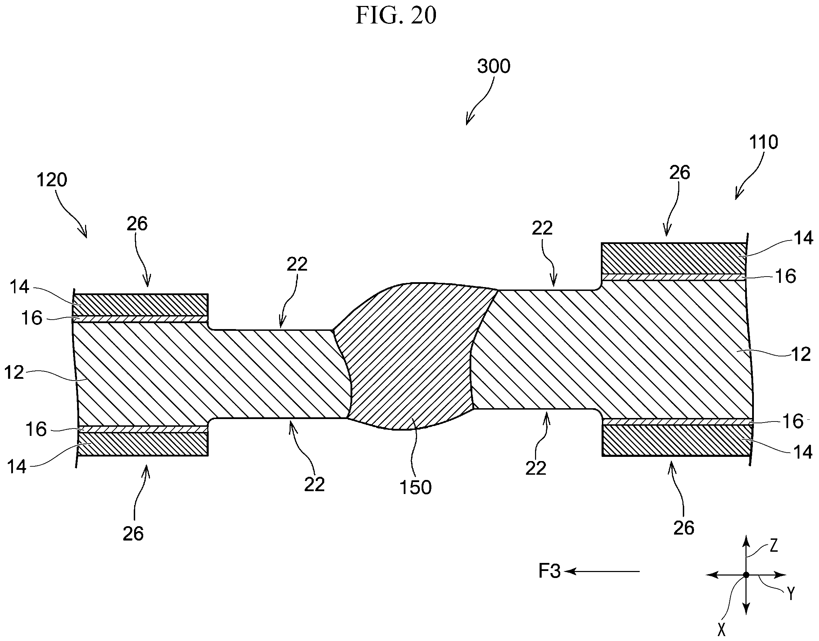

As shown in FIG. 20, a tailored blank 300 of the present disclosure includes a first weld metal portion, and at least two steel sheet portions connected to each other through the first weld metal portion. Each of the at least two steel sheet portions represents a portion corresponding to the steel sheet as a result of butt-welding the steel sheets (steel sheets for butt welding) of the present disclosure. Specifically, each of the at least two steel sheet portions (a steel sheet 110 and a steel sheet 120) includes the first coated portion 26 in which the intermetallic compound layer 16 and the aluminum coating layer 14 are provided on the surface of the base steel sheet 12 in order from the base steel sheet 12, and the first exposed portion 22 in which the base steel sheet 12 is exposed. Here, in each steel sheet portion, a direction which is perpendicular to the thickness direction of each steel sheet portion and is directed from the first coated portion 26 to the first weld metal portion is assumed as the second direction F3 (refer to FIG. 20). In the tailored blank 300 of the present disclosure, in a second direction F3, the first coated portion 26, the first exposed portion 22, and the first weld metal portion are provided on both surfaces of the base steel sheet 12 such that the first coated portion 26, the first exposed portion 22, and the first weld metal portion are disposed in this order on the same plane.

Similarly, on the other side of the steel sheet portion of the tailored blank 300, in the second direction F3, the first coated portion 26, the first exposed portion 22, and the first weld metal portion may be provided such that the first coated portion 26, the first exposed portion 22, and the first weld metal portion are disposed in this order on the same plane. Considering the fatigue strength properties, the tailored blank 300 of the present disclosure preferably has the first exposed portion 22 and the first coated portion 26 on both surfaces or both sides with a first weld metal interposed therebetween. Such a configuration can be realized by forming the tailored blank by butt welding the end portions shown in any of FIGS. 1 to 6.

The tailored blank 300 of the present disclosure may be formed by butt welding the end portions of two steel sheets or may be formed by butt welding three or more end portions of steel sheets. However, each of at least two steel sheets includes the first coated portion 26 and the first exposed portion 22. Then, in each of at least two steel sheet portions, in the second direction, the first coated portion 26, the first exposed portion 22, and the first weld metal portion are provided on both surfaces of the base steel sheet 12 such that the first coated portion 26, the first exposed portion 22, and a first weld metal portion 150 are disposed in this order on the same plane.

In addition, in the tailored blank 300 of the present disclosure, welding may be performed in a state in which the end surfaces of two steel sheets 100 may be butted together or welding may be performed in a state in which the end surfaces of three steel sheets 100 may be butted together.

For example, the tailored blank 300 may be a welded member obtained by performing welding in a state in which the end surface of the end portion of the steel sheet 100 of the present disclosure having the first exposed portion 22 and the second coated portion 24 present in the region including the end edge of the steel sheet 100 on the side closer to the end edge of the steel sheet 100 than to the first exposed portion 22, and the end surface of the end portion of the welding scheduled portion of another steel sheet are butted together. In addition, for example, the tailored blank 300 may be obtained by performing welding in a state in which the end surfaces of the end portions having the first exposed portion 22 and the second coated portion 24 in the two steel sheets 100 of the present disclosure are butted together or may be obtained by performing welding in a state in which the end surfaces of the end portions having the first exposed portion 22 and the second coated portion 24 in three steel sheets 100 of the present disclosure are butted together.

Further, welding may be performed in a state in which the end surfaces of the end portions having the first exposed portion 22 and the second coated portion 24 in four or more steel sheets 100 of the present disclosure are butted together.

Two or more steel sheets 100 for obtaining a tailored blank 300 may be used in combination according to the purpose. As two or more steel sheets 100 for obtaining a tailored blank 300, for example, steel sheets of the same strength class may be used, or steel sheets of different strength classes may be used. In addition, as the two or more steel sheets 100, the steel sheets 100 having the same thickness may be used, or the steel sheets 100 having different thicknesses may be used.

Further, in the two or more steel sheets 100 for obtaining the tailored blank 300, the embodiments of the second coated portion 24 present in the region including the end edge of each of the steel sheets 100 may be the same or the embodiments of the second coated portion 24 may be different. For example, the following embodiments may be combined.

For example, there are two kinds of embodiments of the second coated portion 24: 1) an embodiment in which the second coated portion is formed on both surfaces of the end portion of the steel sheet 100; and 2) an embodiment in which the second coated portion is formed on only one surface.

In addition, for the steel sheets 100 having these embodiments of the second coated portion 24, steel sheets 100 having second coated portions 24 having the same width (the width of the second coated portion 24 in the first direction F1, the distance from the end edge of the steel sheet) may be used, or steel sheets 100 having second coated portions 24 having different widths may be used.

Further, for the two or more steel sheets 100 for obtaining a tailored blank, for example, the steel sheet 100 having the embodiment of the second coated portion 24, and a steel sheet not having a second coated portion 24 in a welding scheduled portion and having an end portion formed on only a first exposed portion 22 maybe combined.

The welding method for performing butt welding is not particularly limited, and examples thereof include welding methods such as laser welding (laser beam welding), arc welding, electron beam welding, and mash seam welding. Examples of arc welding include plasma welding, TIG (Tungsten Inert Gas) welding, MIG (Metal Inert Gas) welding, MAG (Metal Active Gas) welding, and the like, and suitable arc welding includes plasma welding. The welding conditions may be selected depending on the desired conditions such as the thickness of the steel sheet 100 to be used.

In addition, if required, while a filler wire is being supplied, welding may be performed. The concentration of aluminum of the filler wire is preferably equal to or less than the concentration of aluminum of the base steel sheet 12. In addition, the concentration of aluminum being equal to or less than the concentration of aluminum of the base steel sheet refers that the concentration of aluminum of the filler wire is within a range of 0.5 to 100 when the concentration of aluminum of the base steel sheet 12 is 100.

The tailored blank 300 is formed by performing butt welding in a state in which the end surfaces of the end portions having the first exposed portion 22 and the second coated portion 24 are butted together as described above.

Therefore, the amount of aluminum mixed from the intermetallic compound layer 16 and the aluminum coating layer 14 in the first weld metal portion 150 is mainly controlled by the amount of aluminum contained in the second coated portion 24 and becomes an appropriate amount. That is, the concentration of aluminum of the first weld metal portion 150 is higher than the concentration of aluminum of the base steel sheet 12 used for welding. In a case where the base steel sheets 12 to be butt-welded have different aluminum concentrations, the concentration of aluminum of the first weld metal portion 150 is higher than the concentration of aluminum of a base steel sheet 12 having a higher aluminum concentration. Therefore, even in a case where the concentration of aluminum of the base steel sheet 12 is low, a tailored blank having a weld joint having excellent corrosion resistance after painting is realized by the aluminum supplied from the second coated portion 24 to the first weld metal portion 150. In addition, since the first exposed portion 22 in which the intermetallic compound layer 16 is not present is adjacent to the end portion of the weld metal portion, deterioration in fatigue strength of a member after the tailored blank is hot press-formed is suppressed. In addition, deterioration in (static) tensile strength is suppressed.

In the tailored blank 300, particularly, the concentration of aluminum (Al concentration) contained in the weld metal portion (first weld metal portion) 150 which connects at least two steel sheet portions may be 0.065 mass% to 1 mass%. Within this range, excellent corrosion resistance after painting is effectively obtained and fracture in the first weld metal portion 150 is suppressed. In addition, deterioration in fatigue strength is suppressed. From this point, the upper limit of the concentration of aluminum contained in the first weld metal portion 150 is preferably 1 mass%, may be 0.8 mass%, and may be 0.4 mass%. The lower limit of the concentration of aluminum contained in the first weld metal portion 150 may be 0.08 mass% and may be 0.1 mass%.

In the tailored blank 300 of the present disclosure, particularly, the concentration of aluminum contained in the weld metal portion (first weld metal portion) 150 connecting at least two steel sheet portions is higher than the concentration of aluminum of the base steel sheet 12 of the steel sheet portion.

The concentration of aluminum in the first weld metal portion 150 is an average concentration. The concentration of aluminum in the first weld metal portion 150 is measured as follows.

The steel sheet is cut in a direction orthogonal to the laser weld line and embedded in a resin. The embedded steel sheet is polished and mapping analysis is performed from the surface of the steel sheet 100 to the base steel sheet 12 by an electron beam microanalyser (FE-EPMA) to measure the concentration of aluminum. The measurement conditions are an acceleration voltage of 15 kV, a beam diameter of about 100 nm, and an irradiation time of 1000 ms. The measurement pitch is a 5 $\mu$m pitch in a lattice shape. The measurement values of the concentration of aluminum of the weld metal portion are averaged to obtain the average concentration.

In the tailored blank 300 using the steel sheet 100 that satisfies at least the above conditions (A) and (B), referring to FIG. 43, a sheet thickness t including the aluminum coating layer 14 and the intermetallic compound layer 16 of the steel sheets 110 and 120 in the tailored blank 300, the depth D1 of the first exposed portion 22, and the depth D2 of the first exposed portion 22 will be described. The tailored blank 300 shown in FIG. 43 is formed by butt-welding the first steel sheet 110 and the second steel sheet 120 at the end portions of the welding scheduled portions of the respective steel sheets. In the tailored blank 300, the first steel sheet 110 as a steel sheet portion and the second steel sheet 120 as a steel sheet portion are joined by the first weld metal 150 as a weld metal portion. Further, the first exposed portion 22 is provided adjacent to the first weld metal portion 150, and the first coated portion 26 is provided adjacent to the side of the first exposed portion 22 distant from the first weld metal portion 150.

As shown in FIG. 43, the sheet thickness of the second steel sheet 120 is smaller than the sheet thickness of the first steel sheet 110. The first steel sheet 110 and the second steel sheet 120 may have low steel sheet tensile strength after hot press forming. In that case, in the tailored blank 300 shown in FIG. 43, the second steel sheet 120 has a smaller product of the tensile strength and the sheet thickness of the steel sheet after hot press forming than the first steel sheet 110. That is, as shown in FIG. 43, the sheet thickness t, the depth D1 of the first exposed portion 22, and the depth D2 of the first exposed portion 22 are values in the second steel sheet 120. The sheet thickness t is a sheet thickness including the aluminum coating layer 14 and the intermetallic compound layer 16 in the second steel sheet 120. The depth D1 of the first exposed portion 22 is the distance between a virtual line formed by extending the surface of the aluminum coating layer 14 on the first surface of the base steel sheet 12 in the direction of the first exposed portion 22 and the surface of the base steel sheet 12. The depth D2 of the first exposed portion 22 is the distance between a virtual line formed by extending the surface of the aluminum coating layer 14 on the second surface of the base steel sheet 12 in the direction of the first exposed portion 22 and the surface of the base steel sheet 12.

<Hot Stamped Product>

A hot stamped product of the present disclosure is formed by hot pressing the tailored blank 300 of the present disclosure.

As shown in FIG. 44, in a hot stamped product 500 of the present disclosure, a first intermetallic compound portion 226, a third exposed portion 222, a second weld metal portion 250, a fourth exposed portion 522, and a second intermetallic compound portion 526 are provided such that the first intermetallic compound portion 226, the third exposed portion 222, the second weld metal portion 250, the fourth exposed portion 522, and the second intermetallic compound portion 526 are disposed in this order along the surface of the first base steel sheet 212 and the surface of the second base steel sheet 512.

In the first intermetallic compound portion 226, a first intermetallic compound layer is provided on the surface of the first base steel sheet. In the third exposed portion 222, the first base steel sheet 212 is exposed. In the second intermetallic compound portion 526, a second intermetallic compound layer is provided on the surface of the second base steel sheet. In the fourth exposed portion 522, the second base steel sheet 512 is exposed. Here, the direction from the first intermetallic compound portion 226 to the second weld metal portion 250 is defined as the second direction F3 (FIG. 44).

The first base steel sheet 212 and the second base steel sheet 512 are steel sheets corresponding to the base steel sheet 12 in the tailored blank 300 before hot press forming is performed. The first intermetallic compound portion 226 and the second intermetallic compound portion 526 are portions corresponding to the first coated portion 26 in the tailored blank before hot press forming is performed.

The concentration of aluminum contained in the second weld metal portion 250 may be 0.065 mass% to 1 mass%. In addition, the concentration of aluminum contained in the second weld metal portion 250 is higher than the concentrations of aluminum of the base steel sheets of the first base steel sheet and the second base steel sheet. In a case where the first base steel sheet and the second base steel sheet have different aluminum concentrations, the concentration of aluminum contained in the second weld metal portion 250 is higher than the concentration of aluminum of a base steel sheet having a higher aluminum concentration. Therefore, the hot stamped product of the present disclosure has excellent corrosion resistance after painting.

In the hot stamped product of the present disclosure, the concentration of aluminum contained in the weld metal portion (second weld metal portion 250) connecting the first base steel sheet 212 and the second base steel sheet 512 is higher than the concentration of aluminum of each of the first base steel sheet 212 and the second base steel sheet 512.

The hot stamped product can be manufactured as follows.

First, a tailored blank is heated to a high temperature of Ac3 point or higher to soften the tailored blank. Then, the softened tailored blank is formed by hot press forming using a die, cooled and quenched to obtain a hot stamped product having a desired shape. The hot stamped product has a high tensile strength of, for example, about 400 MPa to 2700 MPa by heating and quenching by cooling.

As a heating method at the time of hot press forming, it is possible to adopt a heating method by infrared heating, energization heating, induction heating or the like in addition to a normal electric furnace or radiant tube furnace.

In the hot stamped product, during heating of the tailored blank 300, the aluminum coating layer 14 of the tailored blank is changed to an intermetallic compound that protects the oxidation of the first base steel sheet 212 and the second base steel sheet 512. For example, as an example, in a case where the aluminum coating layer 14 contains Si (silicon), when the aluminum coating layer 14 is heated, the A1 phase is changed into an intermetallic compound, that is, an Al-Fe alloy phase or an Al-Fe-Si alloy phase due to mutual diffusion with Fe. The melting points of the Al-Fe alloy phase and the Al-Fe-Si alloy phase are high and are 1000°C or higher. There are a plurality of kinds of Al-Fe phases and Al-Fe-Si phases, and when heated at a high temperature or for a long period of time, the Al phase is changed to an alloy phase having a higher Fe concentration. These intermetallic compounds prevent oxidation of the steel sheet 100.

The maximum attainment temperature when hot press forming is performed is not particularly limited, and for example, the maximum attainment temperature is preferably 850°C to 1000°C. In the hot press forming, since heating is performed in an austenite region, typically, a temperature of 900°C to 950°C is often adopted as the maximum attainment temperature.

In the hot press forming, the tailored blank 300 heated to a high temperature is press-formed with a die cooled by water cooling or the like, and simultaneously quenched by cooling with the die. In addition, if required, water cooling may be performed by spraying water directly to the tailored blank 300 from the gap of the die. Thus, a hot stamped product having a desired shape is obtained. The hot stamped product may be used a part as it is, or may be used after performing descaling treatment by shot blasting, brushing, laser cleaning, or the like on the welded portion, if required.

When the tailored blank 300 is heated to a high temperature, the metallographic structure of the base steel sheets 212 and 512 is at least partially, preferably entirely, formed of an austenite single-phase structure. Thereafter, at the time of press forming with a die, the austenite is transformed into at least one of martensite or bainite by cooling under desired cooling conditions. Then, in the obtained hot stamped product, the metallographic structure of the base steel sheet 12 is a metallographic structure of any of martensite, bainite, martensite-bainite, ferrite-bainite, ferrite-bainite-pearlite, ferrite-pearlite, or ferrite. Alternatively, the above metallographic structure may be a structure containing residual austenite.

In addition, as shown in FIG. 36(A), a coated steel sheet 101 wound in a coil shape is drawn out, and as shown in FIG. 36(B), the drawn-out coated steel sheet 101 is punched to form a punched member 111. Then, as shown in FIG.

36(C), the first exposed portion 22 and the second coated portion 24 may be formed in the end portion of the formed punched member 111. The steel sheet 100 is manufactured through the above steps.

In addition, as shown in FIG. 37(A), the coated steel sheet 101 wound in a coil shape is drawn out, and as shown in FIG. 37(B), the drawn-out coated steel sheet 101 is punched to form a punched member 111. Thereafter, the first exposed portion 22 and the second coated portion 24 may be formed in the end portion of the punched member 111.

In this case, as shown in FIG. 37(C), in portions other than the end portion of the punched member 111, for example, two first exposed portion regions 22A and a second coated portion region 24A, which is interposed between the two first exposed portion regions 22A, may be formed so as to extend in one direction. Thereafter, the second coated portion region 24A of the punched member 111 may be cut, as shown in FIG. 37(D) in the end edge of each punched member 111, the first exposed portion 22 may be formed and the second coated portion 24 may be formed in a region including the end portion of the punched member 111 on the side closer to the end edge of the punched member 111 than to the first exposed portion 22. Through the above steps, two steel sheets for butt welding 100 are manufactured.

Next, at least one steel sheet 100 of the present disclosure having the first exposed portion 22 and the second coated portion 24 formed at the end portion is prepared. For example, one or two steel sheets 100 in which the first exposed portion 22 and the second coated portion 24 are formed may be prepared. In a case where one steel sheet 100 in which the first exposed portion 22 and the second coated portion 24 are formed is prepared, another steel sheet to be butt-welded may be a steel sheet in which the second coated portion 24 is not formed and only the first exposed portion 22 is formed. The other steel sheet to be butt-welded may be a zinc-based coated steel sheet (zinc, zinc-iron, zinc-nickel, or zinc-magnesium) having a tensile strength of 400 to 2700 MPa after hot pressing. It is desirable to weld the zinc-based coated steel sheet without forming the first exposed portion 22.

Next, in a state in which the end portions having the first exposed portion 22 and the second coated portion 24 formed in the steel sheet 100 are butted together, the steel sheets are butt-welded to obtain a tailored blank. For example, in a state in which the end portions having the first exposed portion 22 and the second coated portion 24 are butted together, the steel sheets may be butt-welded, and in a state in which the end portion having the first exposed portion 22 and the second coated portion 24 and the end portion having only the first exposed portion 22 are butted together, the steel sheets may be butt-welded.

Next, the tailored blank is heated in a heating furnace.

Next, using a pair of die including an upper die and a lower die, the heated tailored blank is pressed, formed, and quenched.

Then, the tailored blank is released from the die to obtain a hot stamped product having a desired shape.

For example, the hot stamped product is useful for application to various members of industrial machines in addition to various vehicle members such as a vehicle body.

<Steel Pipe>

A steel pipe of the present disclosure includes a third weld metal portion, and a third steel sheet (third steel sheet for butt welding) which is formed in an open tubular shape in which two end portions in a circumferential direction face each other, and in which the two end portions are connected to each other through the third weld metal portion. In the steel pipe of the present disclosure, each of the two end portions of the third steel sheet includes a first coated portion 26, and a first exposed portion 22. In the first coated portion 26, an intermetallic compound layer 16 and an aluminum coating layer 14 are provided on both surfaces of a base steel sheet 12 in order from the base steel sheet 12 side. In the first exposed portion 22, the base steel sheet 12 is exposed. Here, the direction from the first coated portion 26 to the third weld metal is assumed as the second direction F3.

In the steel pipe of the present disclosure, in the circumferential direction, the first coated portion 26, the first exposed portion 22, and the third weld metal portion are disposed in this order.

The steel pipe of the present disclosure is formed by welding the end portions of an open tube of the steel sheet 100 of the present disclosure. However, when the open tube is welded, the entire second coated portion 24 of the steel sheet 100 is incorporated in the third weld metal portion.

That is, the steel pipe is obtained by forming the steel sheet 100 of the present disclosure into an open tube and performing welding in a state in which the end surfaces of the end portions having the first exposed portion 22 and the second coated portion 24 located on the side closer to the end edge of the steel sheet 100 than to the first exposed portion 22 are butted together. That is, the steel pipe has at least one weld metal portion (that is, the third weld metal portion for joining both end portions of the open tube formed by the steel sheet 100), and has the first exposed portions 22 in which the base steel sheet 12 is exposed on both surfaces of the tubular body of the steel sheet 100 of the present disclosure adjacent to the weld metal portion.

The tailored blank and a hollow hot stamped product also have the structure in which the first exposed portion 22 in which the base steel sheet 12 is exposed is provided in a portion adjacent to the weld metal portion.

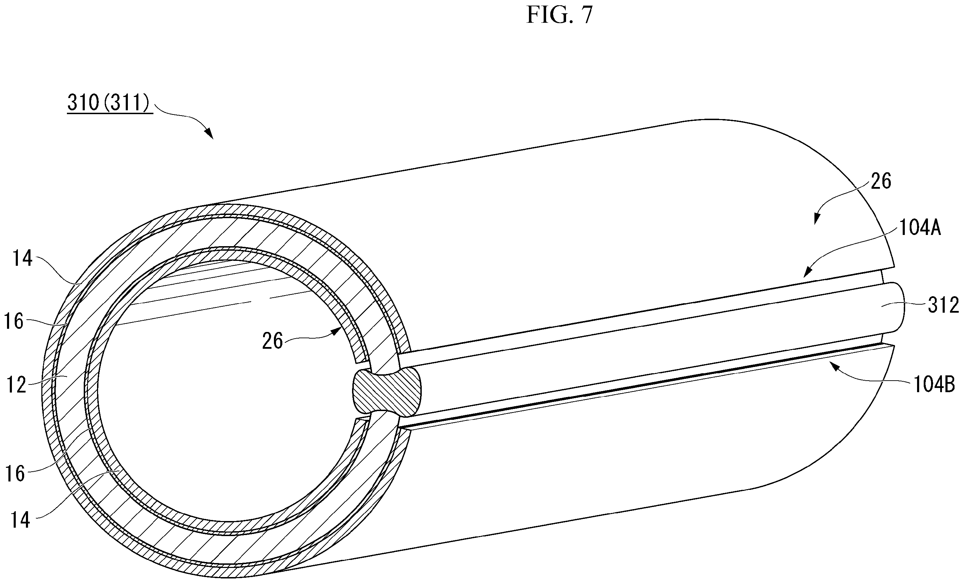

For example, a steel pipe 310 shown in FIG. 7 is manufactured as follows.

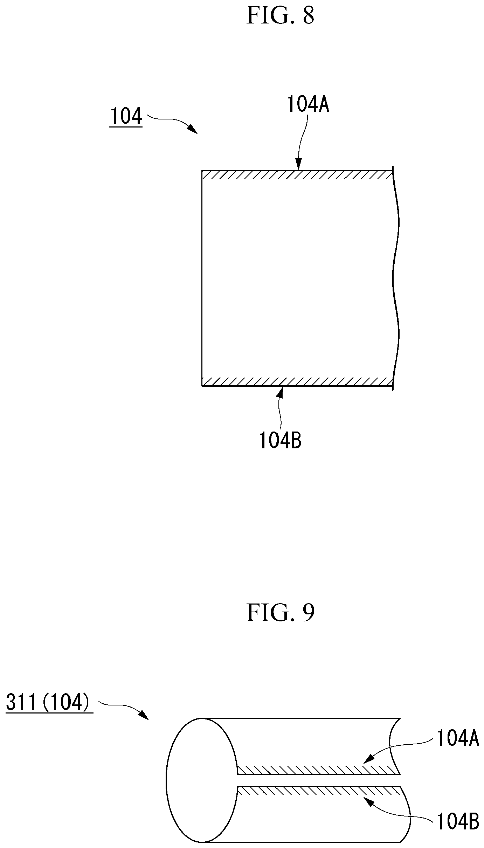

One steel sheet 104 of the present disclosure shown in FIG. 8 is prepared. In the steel sheet 104, a first exposed portion (not shown) and a second coated portion are provided in a first end portion (end portion) 104A. In the steel sheet 104, a first exposed portion (not shown) and a second coated portion are provided in a second end portion (end portion) 104B opposite to the first end portion 104A. In FIG. 8, the first end portion 104A and the second end portion 104B are shown by hatching.

As shown in FIG. 9, this one steel sheet 104 is formed into a tubular shape to form an open tube 311. Thereafter, the obtained open tube 311 is butt-welded in a state in which the end surface of the first end portion 104A and the end surface of the second end portion 104B are butted together, and thus a steel pipe 310 shown in FIG. 7 is manufactured.

The concentration of aluminum of the third weld metal portion 312 is higher than the concentration of aluminum of the base steel sheet 12 of the steel sheet 104.

The concentration of aluminum contained in the third weld metal portion 312 formed between both end portions 104A and 104B of the open tube 311 is preferably 0.065 mass% to 1 mass%.

When the concentration of aluminum is within this range, excellent corrosion resistance after painting can be effectively obtained and fracture in the third weld metal portion 312 is suppressed.

In addition, deterioration in the fatigue strength of the third weld metal portion 312 is suppressed. From this point, the upper limit of the concentration of aluminum contained in the third weld metal portion 312 is preferably 1 mass%, may be 0.8 mass%, and may be 0.4 mass%. The lower limit of the concentration of aluminum contained in the third weld metal portion 312 is preferably 0.08 mass% and may be 0.1 mass%.

The concentration of aluminum in the third weld metal portion 312 is an average concentration.

In the steel pipe 310 of the present disclosure, the concentration of aluminum contained in the third weld metal portion 312 is higher than the concentration of aluminum of the base steel sheet 12 of the steel sheet 104.

The steel pipe may be manufactured as follows.

One or more steel sheets in which a first exposed portion and a second coated portion are provided in a first end portion and a first exposed portion and a second coated portion are provided in a second end portion are prepared.

In a case of one steel sheet, in a state in which the end portion including the first exposed portion and the second coated portion, and an end surface of the second end portion of the first steel sheet including the first exposed portion and the second coated portion at the end portion opposite to the end surface of the first end portion are butted together, welding is performed to prepare a new steel sheet (tailored blank). Then, this new steel sheet is formed into a tubular shape to form an open tube.

Then, in the obtained open tube, in a state in which the end surface of a second end portion of the first steel sheet including the first exposed portion and the second coated portion, which is not welded, and the end surface of a first end portion of the second steel sheet including the first exposed portion and the second coated portion, which is not welded, are butted together, butt welding is performed to manufacture a steel pipe.

In addition, a longer steel pipe may be manufactured by butt-welding the end portions of the steel pipe 310 in the longitudinal direction. In this case, the first exposed portion 22 and the second coated portion 24 described above may be formed in the end portions to be butt-welded in the steel pipe 310 when the steel pipe 310 is in the state of the steel sheet, and when the steel pipe 310 is manufactured from the open tube, the first exposed portion 22 and the second coated portion 24 described above may be formed.

In a case where the steel pipe is formed of a tailored blank 300, two or more steel sheets forming a tailored blank 300 for forming the steel pipe are not limited to the above steel sheets and may be used in combination according to the purpose. Examples of the combination of two or more steel sheets include the same as the combinations of the steel sheets described in the steel sheet for forming the tailored blank described above.

The method of forming the steel sheet or tailored blank into a tubular shape is not particularly limited, and any method such as a UOE method or a bending roll method may be used.

In addition, the welding after being formed into a tubular shape is not particularly limited, but may be, for example, laser welding, plasma welding or electric resistance welding in which welding is performed by, electric resistance welding or high frequency induction heating welding.

<Hollow Hot Stamped Product>

A hollow hot stamped product of the present disclosure is manufactured by quenching the steel pipe (for example, steel pipe 310) of the present disclosure.

In the hollow hot stamped product of the present disclosure, a third intermetallic compound portion, a fifth exposed portion, a third weld metal portion, a sixth exposed portion, and a fourth intermetallic compound portion are provided along each of both surfaces of a third base steel sheet and each of both surfaces of a fourth base steel sheet such that the third intermetallic compound portion, the fifth exposed portion, the third weld metal portion, the sixth exposed portion, and the fourth intermetallic compound portion are disposed in this order.

In the third intermetallic compound portion, a third intermetallic compound layer is provided on the surface of the third base steel sheet. In the fifth exposed portion, the third base steel sheet is exposed. In the fourth intermetallic compound portion, a fourth intermetallic compound layer is provided on the surface of the fourth base steel sheet. In the sixth exposed portion, the fourth base steel sheet is exposed.

The third base steel sheet and the fourth base steel sheet are steel sheets corresponding to the base steel sheet 12 in the steel pipe before being quenched. The third intermetallic compound portion and the fourth intermetallic compound portion are portions corresponding to the first coated portion 26 in the steel pipe before being hot press-formed. Here, the direction from the third intermetallic compound portion to the third weld metal portion is defined as the second direction F3.

The concentration of aluminum contained in the third weld metal portion may be 0.065 mass% to 1 mass%. Further, the concentration of aluminum contained in the third weld metal portion is higher than the concentrations of aluminum of the third base steel sheet and the fourth base steel sheet. In a case where the third base steel sheet and the fourth base steel sheet have different aluminum concentrations, the concentration of aluminum contained in the third weld metal portion is higher than the concentration of aluminum of a base steel sheet having a higher aluminum concentration of the third base steel sheet and the fourth base steel sheet. Therefore, the hollow hot stamped product of the present disclosure has excellent corrosion resistance after painting.

In the hollow hot stamped product of the present disclosure, the concentration of aluminum contained in the weld metal portion (third weld metal portion) connecting the third base steel sheet and the fourth base steel sheet is higher than the concentration of aluminum of each of the third base steel sheet and the fourth base steel sheet.

The hollow hot stamped product may be a hollow formed product formed by quenching a steel pipe formed of the steel sheet of the present disclosure or a tailored blank obtained by butt-welding the steel sheets of the present disclosure.

That is, the hollow hot stamped product obtained by hot press-forming a steel pipe has at least one weld metal portion (that is, the weld metal portion obtained by joining the end portions of the steel sheet) and the first exposed portion 22 in which the base steel sheet 12 is exposed on both surfaces of the hollow formed body with the steel sheet of the present disclosure adjacent to the weld metal portion.

For example, the hollow hot stamped product is obtained as follows.

A steel pipe obtained using the steel sheet 100 of the present disclosure is formed by a bender. Next, the steel pipe is heated using a heating furnace, energization heating, or high frequency heating. Since the temperature for heating the steel pipe is required to be set to an austenite region, for example, the temperature may be set to 850°C to 1100°C and may be set to about 900°C to 1000°C. Next, the heated steel pipe is cooled by water cooling or the like and quenched.

In addition, forming and quenching may be performed at the same time. The first method is called 3-dimensional hot bending and direct quench (3DQ) and for example, the steel pipe is heated, deformed by applying a load, and then quenched by water cooling. The second method is called STAF (steel tube air forming), and a hollow hot stamped product is obtained by setting a steel pipe in a die of a press machine, and then energization heating → high pressure air injection → molding → quenching. Through these processes, a desired hollow hot stamped product is obtained. In addition, the hollow hot stamped product may be used as a part as it is. Further, the product may be used after the welded portion is descaled by shot blasting, brushing, laser cleaning, or the like, if required.

The use of the hollow hot stamped product of the present disclosure is not particularly limited and examples thereof include various members of industrial machines in addition to various vehicle members such as a vehicle body. Specific examples of the vehicle member include various pillars; reinforces such as stabilizers, door beams, roof rails, and bumpers; frames; and various parts such as arms.

Here, an example of a trial calculation the specifications of the steel sheet portion required to set the concentration of aluminum contained in the first weld metal portion (weld metal portion) of the tailored blank 300 to 0.065 mass% to 1 mass% will be described.

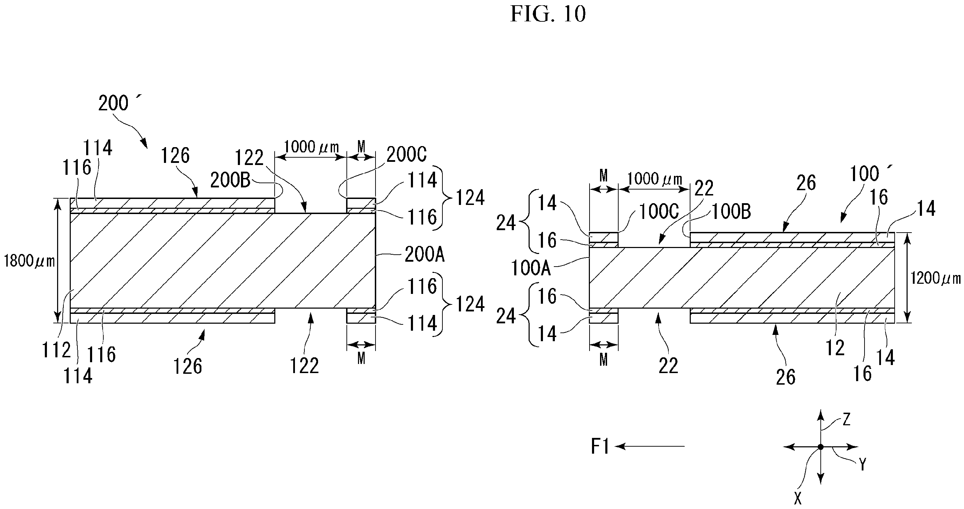

When a tailored blank 300 is manufactured, a steel sheet portion 100' and a steel sheet portion 200' shown in FIG. 10 or modification examples of the steel sheet portions 100' and 200' shown in FIG. 10 are used.

The steel sheet portion 100' includes the first coated portion 26 in which the intermetallic compound layer 16 and the aluminum coating layer 14 are provided on the surface of the base steel sheet 12 in order from the base steel sheet 12 side, the first exposed portion 22 in which the base steel sheet 12 is exposed, and the second coated portion 24 in which the intermetallic compound layer 16 and the aluminum coating layer 14 are provided on the surface of the base steel sheet 12 in order from the base steel sheet 12 side. In the first direction F1, the first coated portion 26, the first exposed portion 22, the second coated portion 24, and the end edge of the steel sheet portion 100' are disposed on both surfaces of the base steel sheet 12.

The steel sheet portion 200' has a base steel sheet 112, an aluminum coating layer 114, an intermetallic compound layer 116, a first exposed portion 122, a second coated portion 124, and a first coated portion 126 constituted in the same manner as the base steel sheet 12, the aluminum coating layer 14, the intermetallic compound layer 16, the first exposed portion 22, the second coated portion 24, and the first coated portion 26 of the steel sheet portion 100'.

A trial calculation was performed for a case where the second coated portions 24 and 124 are formed only on one surface of the steel sheet portions 100'and 200' (an embodiment in which the second coated portions 24 and 124 are removed from the one surface of the steel sheet portions 100 ' and 200' shown in FIG. 10).

In a case where the second coated portions 24 and 124 are formed on only one surface, the first exposed portions 22 and 122 are formed from the end edges of the first coated portions 26 and 126 to the end edges of the steel sheet portions 100' and 200' on the other surface (for example, the same embodiment as in FIG. 3).

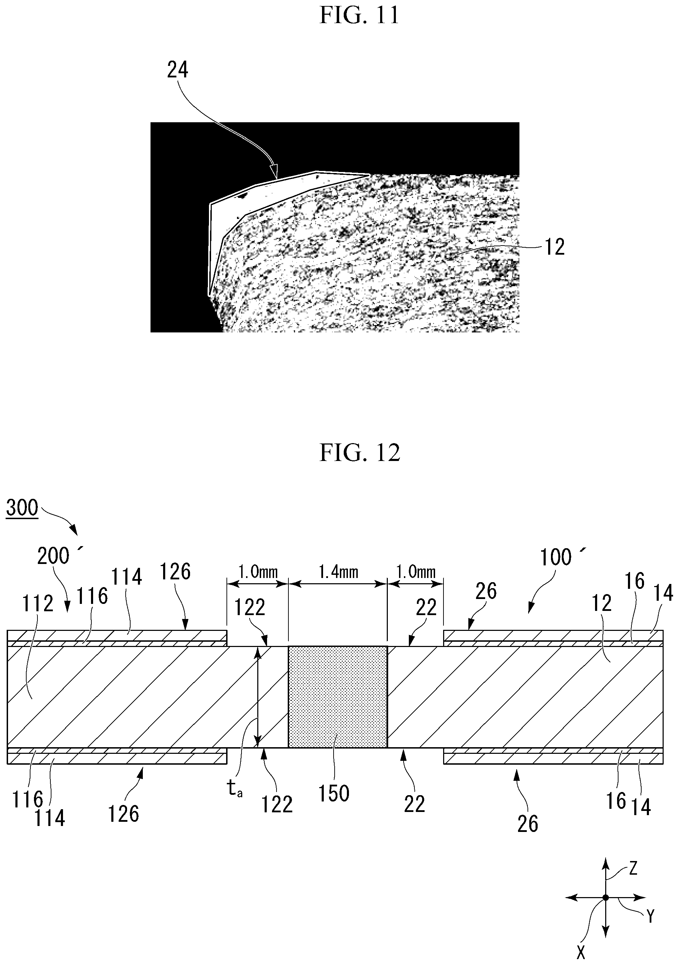

As shown in Table 1, the concentrations of aluminum of the base steel sheets 12 of the steel sheets 100 used in the trial calculation were 0.03% and 0.04%. The thicknesses tb of the base steel sheets at the first exposed portion 22 used for the trial calculation were 0.8 mm, 1.2 mm, 1.6 mm, 1.8 mm, and 2.3 mm as shown in Table 1. The areas of the second coated portions 24 formed on one surface of the steel sheets 100 (the area Sa of the region surrounded by the thick line in FIG. 11) in the cross section orthogonal to the longitudinal direction of the first exposed portion 22 were 0.001 mm$^2$, 0.005 mm$^2$, 0.01 mm$^2$, 0.02 mm$^2$, 0.03 mm$^2$, and 0.04 mm$^2$ as shown in Table 1. In addition, in a case of measuring the cross-sectional area Sa of the second coated portion 24, the cross-sectional area can be obtained using an optical microscope and image analysis software. The cross-sectional area of the second coated portion 24 is an average value obtained by measuring the area at five points obtained by dividing the first exposed portion 22 in the longitudinal direction in plan view into five equal parts. In this trial calculation, the trial calculation is performed in a case of one surface, but in a case where the second coated portion 24 is on both surfaces of the steel sheet 100, the total value of the cross-sectional areas of the second coated portions 24 on both surfaces is used as the cross-sectional area of the second coated portion 24.

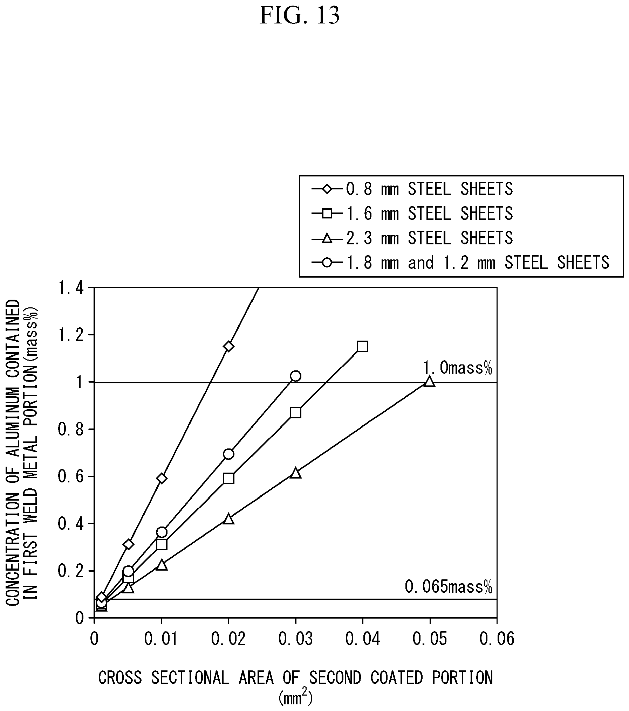

As shown in FIG. 12, the width of the weld metal portion 150 was 1.4 mm, and the width of the exposed portions 22 and 122 was 1.0 mm. By setting the width of the weld metal portion 150 to the above value, the entire second coated portion 24 at the end portion of the steel sheet 100 is incorporated in the weld metal portion 150. Table 1 and FIG. 13 show the results of trial calculation of the relationship between the area of the second coated portion 24 of the cross section and the concentration of aluminum of the weld metal portion 150.

[Table 1]

| Sample No. | Steel sheet 1 | | | | Steel sheet 2 | | | | Weld metal portion | | |
|---|---|---|---|---|---|---|---|---|---|---|---|
| | Base metal | | | Coating area of second coated portion | Base metal | | | Coating area of second coated portion | Calculation value of molten metal amount | Calculation value of amount of aluminum | Concentration of aluminum |
| | Cut portion sheet thickness | Average melting width (half) | A1 concentration of base metal | | Cut portion sheet thickness | Average melting width (half) | Al concentration of base metal | | | | |
| | (mm) | (mm) | (%) | (mm$^2$) | (mm) | (mm) | (%) | (mm$^2$) | (g) | (g) | (%) |
| 1 | 0.8 | 0.7 | 0.03 | 0.001 | 0.8 | 0.7 | 0.03 | 0.001 | 8.736 | 0.008 | 0.086 |
| 2 | 0.8 | 0.7 | 0.03 | 0.005 | 0.8 | 0.7 | 0.03 | 0.005 | 8.736 | 0.027 | 0.310 |
| 3 | 0.8 | 0.7 | 0.03 | 0.01 | 0.8 | 0.7 | 0.03 | 0.01 | 8.736 | 0.052 | 0.590 |
| 4 | 0.8 | 0.7 | 0.03 | 0.02 | 0.8 | 0.7 | 0.03 | 0.02 | 8.736 | 0.101 | 1.151 |
| 5 | 0.8 | 0.7 | 0.03 | 0.03 | 0.8 | 0.7 | 0.03 | 0.03 | 8.736 | 0.150 | 1.711 |
| 6 | 1.6 | 0.7 | 0.03 | 0.001 | 1.6 | 0.7 | 0.03 | 0.001 | 17.472 | 0.010 | 0.058 |
| 7 | 1.6 | 0.7 | 0.03 | 0.005 | 1.6 | 0.7 | 0.03 | 0.005 | 17.472 | 0.030 | 0.170 |
| 8 | 1.6 | 0.7 | 0.03 | 0.01 | 1.6 | 0.7 | 0.03 | 0.01 | 17.472 | 0.054 | 0.310 |
| 9 | 1.6 | 0.7 | 0.03 | 0.02 | 1.6 | 0.7 | 0.03 | 0.02 | 17.472 | 0.103 | 0.590 |
| 10 | 1.6 | 0.7 | 0.03 | 0.03 | 1.6 | 0.7 | 0.03 | 0.03 | 17.472 | 0.152 | 0.871 |
| 11 | 1.6 | 0.7 | 0.03 | 0.04 | 1.6 | 0.7 | 0.03 | 0.04 | 17.472 | 0.201 | 1.151 |
| 12 | 2.3 | 0.7 | 0.03 | 0.001 | 2.3 | 0.7 | 0.03 | 0.001 | 25.116 | 0.012 | 0.049 |
| 13 | 2.3 | 0.7 | 0.03 | 0.005 | 2.3 | 0.7 | 0.03 | 0.005 | 25.116 | 0.032 | 0.127 |
| 14 | 2.3 | 0.7 | 0.03 | 0.01 | 2.3 | 0.7 | 0.03 | 0.01 | 25.116 | 0.056 | 0.225 |
| 15 | 2.3 | 0.7 | 0.03 | 0.02 | 2.3 | 0.7 | 0.03 | 0.02 | 25.116 | 0.105 | 0.420 |
| 16 | 2.3 | 0.7 | 0.03 | 0.03 | 2.3 | 0.7 | 0.03 | 0.03 | 25.116 | 0.154 | 0.615 |
| 17 | 2.3 | 0.7 | 0.03 | 0.05 | 2.3 | 0.7 | 0.03 | 0.05 | 25.116 | 0.252 | 1.005 |
| 18 | 1.8 | 0.7 | 0.03 | 0.001 | 1.2 | 0.7 | 0.04 | 0.001 | 16.380 | 0.010 | 0.064 |
| 19 | 1.8 | 0.7 | 0.03 | 0.005 | 1.2 | 0.7 | 0.04 | 0.005 | 16.380 | 0.030 | 0.183 |
| 20 | 1.8 | 0.7 | 0.03 | 0.01 | 1.2 | 0.7 | 0.04 | 0.01 | 16.380 | 0.055 | 0.333 |

(continued)

| Sample No. | Steel sheet 1 | | | | Steel sheet 2 | | | | Weld metal portion | | |
|---|---|---|---|---|---|---|---|---|---|---|---|
| | Base metal | | | Coating area of second coated portion | Base metal | | | Coating area of second coated portion | Calculation value of molten metal amount | Calculation value of amount of aluminum | Concentration of aluminum |
| | Cut portion sheet thickness | Average melting width (half) | A1 concentration of base metal | | Cut portion sheet thickness | Average melting width (half) | Al concentration of base metal | | | | |
| | (mm) | (mm) | (%) | (mm²) | (mm) | (mm) | (%) | (mm²) | (g) | (g) | (%) |
| 21 | 1.8 | 0.7 | 0.03 | 0.02 | 1.2 | 0.7 | 0.04 | 0.02 | 16.380 | 0.103 | 0.632 |
| 22 | 1.8 | 0.7 | 0.03 | 0.03 | 1.2 | 0.7 | 0.04 | 0.03 | 16.380 | 0.152 | 0.931 |

As shown in FIG. 13, as the cross-sectional area of the second coated portion 24 increased, the concentration of aluminum contained in the weld metal portion 150 also increased. In addition, the amount of increase in the concentration of aluminum of the weld metal portion 150 varies depending on the difference in the thickness tb of the base steel sheet 12, and as the thickness tb of the base steel sheet 12 increases, the concentration of aluminum of the weld metal portion 150 increases.

From the result of this trial calculation, the relationship between the concentration of aluminum of the weld metal portion 150 and the cross-sectional area Sa of the second coated portion 24 was obtained. In a case where the thickness (cut portion sheet thickness) tb (mm) of the base steel sheet 12 of the first exposed portion 22 of the two steel sheets 100 used for butt welding and the cross-sectional area Sa (mm$^2$) of the second coated portion 24 are the same, the concentration of aluminum of the weld metal portion 150 becomes 0.065% or more when the Expression (13) is satisfied.

$$\mathrm{Sa} \geq 8.51 \times 10^{-4} \times \mathrm{tb} \ldots (13)$$

Similarly, the concentration of aluminum of the weld metal portion 150 becomes 1.00% or less when the Expression (14) is satisfied.

$$\mathrm{Sa} \leq 2.36 \times 10^{-2} \times \mathrm{tb} \ldots (14)$$

In addition, the concentration of aluminum of the weld metal portion 150 becomes 0.40% or less when the Expression (15) is satisfied.

$$\mathrm{Sa} \leq 8.99 \times 10^{-3} \times \mathrm{tb} \ldots (15)$$

In a case where the thickness tb (mm) of the base steel sheet 12 of the first exposed portion 22 and the cross-sectional area Sa of the second coated portion 24 of the two steel sheets used for butt welding are different, the average value of each value is used. That is, the average value tav (mm) of each thickness tb of the two steel sheets and the average value Sav (mm$^2$) of the cross-sectional areas of each second coated portion 24 are used. In a case where there is no first exposed portion, the sheet thickness t of the steel sheet is used instead of the thickness tb.

In this case, the concentration of aluminum of the weld metal portion 150 becomes 0.065% or more when the Expression (16) is satisfied.

$$\mathrm{Sav} \geq 8.51 \times 10^{-4} \times \mathrm{tav} \ldots (16)$$

Similarly, the concentration of aluminum of the weld metal portion 150 becomes 1.00% or less when the Expression (17) is satisfied.

$$\mathrm{Sav} \leq 2.36 \times 10^{-2} \times \mathrm{tav} \ldots (17)$$

Similarly, the concentration of aluminum of the weld metal portion 150 becomes 0.40% or less when the Expression (18) is satisfied.

$$\mathrm{Sav} \leq 8.99 \times 10^{-3} \times \mathrm{tav} \ldots (18)$$

As described above, by adjusting the cross-sectional area Sa of the second coated portion 24 based on the thickness tb, the concentration of aluminum contained in the weld metal portion 150 can be set to 0.065 mass% to 1 mass%.

<Examples>

Examples of the first embodiment of the present disclosure will be illustrated below, but the present disclosure is not limited to the following examples.

It is apparent to those skilled in the art that various modification examples or revised examples can be devised within the scope of technical ideas described in claims, and it is understood that these examples also fall into the technical scope of the present disclosure as a matter of course.

<Example 1>

The chemical composition of a base steel sheet of a coated steel sheet (steel sheet for butt welding) used in the example is shown in Table 2.

[Table 2]

| Tensile strength after hot press forming (MPa) | Chemical composition of base steel sheet (mass%; remainder including Fe and impurities) | | | | | | | | | |
|---|---|---|---|---|---|---|---|---|---|---|
| | C | Si | Mn | P | S | Cr | Ti | Al | N | B |
| 1800 | 0.30 | 0.20 | 1.70 | 0.009 | 0.002 | 0.23 | 0.02 | 0.03 | 0.003 | 0.0016 |
| 1500 | 0.22 | 0.22 | 1.25 | 0.010 | 0.003 | 0.20 | 0.02 | 0.03 | 0.003 | 0.0015 |
| 1300 | 0.12 | 0.03 | 2.01 | 0.012 | 0.004 | 0.23 | 0.02 | 0.02 | 0.004 | 0.0018 |

That is, the chemical composition of the base steel sheet was changed according to the tensile strength of the coated steel sheet after hot press forming (HS). For example, in a case where the tensile strength of the coated steel sheet is 1800 MPa, the amount of C is 0.30%, the amount of Si is 0.20%, the amount of Mn is 1.70%, the amount of P is 0.009%, the amount of S is 0.002%, the amount of Cr is 0.23%, the amount of Ti is 0.02%, the amount of Al is 0.03%, the amount of N is 0.003%, and the amount of B is 0.0016%. The remainder other than C and the like in the base steel sheet includes Fe and impurities.

In a case where the tensile strength of the coated steel sheet is 1500 MPa, the amount of Al is 0.03%, and in a case where the tensile strength of the coated steel sheet is 1300 MPa, the amount of Al is 0.02%.

A coated steel sheet coated with aluminum so as to have the thickness shown in Table 3 was prepared using the base steel sheet having the chemical composition shown in Table 2.

[Table 3]

| Tensile strength after hot press forming (MPa) | Thickness of aluminum coating layer (μm) | Thickness of intermetallic compound layer (μm) | Thickness of coated steel sheet (mm) |
|---|---|---|---|
| 1800 | 15 | 3 | 2.0, 1.8, 1.6, 1.3 |
| 1500 | 22 | 5 | 2.0, 1.8, 1.6, 1.2 |
| 1300 | 17 | 6 | 1.6, 1.3, 1.2 |

Then, this coated steel sheet was cut out to form a square coated steel sheet having one side of 10 cm. Next, a first exposed portion and a second coated portion were formed on at least a part of both surfaces of the end portion located around the prepared coated steel sheet to prepare a steel sheet.

In a part of the coated steel sheet, an aluminum coating layer and an intermetallic compound layer were not removed. In addition, in a part of the coated steel sheet, only the aluminum coating layer was removed, and only the first exposed portion was formed while the second coated portion was not formed. Further, in a part of the coated steel sheet, the aluminum coating layer and the intermetallic compound layer were removed, and only the first exposed portion was formed while the second coated portion was not formed.

According to the type of the exposed portion shown in Table 4, in the first exposed portion, the aluminum coating layers formed on both surfaces, or the aluminum coating layer and the intermetallic compound layer were respectively removed to expose the base steel sheet.

[Table 4]

| No. | Coated steel sheet 1 | | Coated steel sheet 2 | | Before butt welding | | | | | | | | | | Remarks |
| | | | | | Type of exposed portion | Coated steel sheet 1 | | | | | Coated steel sheet 2 | | | | |
| | Tensile strength after hot press forming (MPa) | Thickness (mm) | Tensile strength after hot press forming (MPa) | Thickness (mm) | | Type of second coated portion | | Width of second coated portion (mm) | Width of first exposed portion (mm) | (Width of second coated portion/ (width of second coated portion + width of first exposed portion) × 100 (%) | Type of second coated portion | Width of second coated portion (mm) | Width of first exposed portion (mm) | (Width of second coated portion/ (width of second coated portion +width of first exposed portion) × 100 (%) | |
| 1 | 1500 | 1.8 | 1500 | 1.8 | A | - | | - | 1.30 | 0.00 | - | - | 1.30 | 0.00 | Comparative Example |
| 2 | 1500 | 1.8 | 1500 | 1.2 | A | - | | - | 1.30 | 0.00 | - | - | 1.30 | 0.00 | |
| 3 | 1500 | 1.8 | 1500 | 1.2 | B | - | | - | - | - | - | - | - | - | |
| 4 | 1500 | 1.8 | 1500 | 1.2 | C | - | | - | - | - | - | - | - | - | |
| 5 | 1800 | 1.8 | 1300 | 1.3 | A | One surface | E | 0.04 | 1.20 | 3.23 | - | - | 1.20 | 0.00 | |

EP 3 812 083 A1

| No. | Coated steel sheet 1 Tensile strength after hot press forming (MPa) | Thickness (mm) | Coated steel sheet 2 Tensile strength after hot press forming (MPa) | Thickness (mm) | Type of exposed portion | Before butt welding Coated steel sheet 1 Type of second coated portion | | Width of second coated portion (mm) | Width of first exposed portion (mm) | (Width of second coated portion/ (width of second coated portion + width of first exposed portion)×100 (%) | Coated steel sheet 2 Type of second coated portion | | Width of second coated portion (mm) | Width of first exposed portion (mm) | (Width of second coated portion/ (width of second coated portion +width of first exposed portion)×100 (%) | Remarks |
|---|---|---|---|---|---|---|---|---|---|---|---|---|---|---|---|---|
| 6 | 1500 | 1.6 | 1300 | 1.2 | A | One surface | E | 0.10 | 1.20 | 7.69 | One surface | E | 0.20 | 1.80 | 10.00 | Invention Example |
| 7 | 1800 | 1.6 | 1500 | 1.2 | A | Both surfaces | E | 0.05 | 1.30 | 3.70 | surfaces | E | 0.05 | 1.60 | 3.03 | |
| 8 | 1500 | 2.0 | 1300 | 1.6 | A | - | | - | 1.50 | 0.00 | One surface | E | 0.25 | 1.40 | 15.15 | |
| 9 | 1500 | 1.8 | 1300 | 1.2 | A | One surface | E | 0.20 | 1.20 | 14.29 | - | | - | 0.70 | 0.00 | |
| 10 | 1800 | 1.8 | 1800 | 1.3 | A | One surface | E | 0.20 | 0.70 | 22.22 | One surface | E | 0.15 | 1.20 | 11.11 | |
| 11 | 1800 | 1.8 | 1300 | 1.3 | A | surface | E | 0.20 | 0.30 | 40.00 | surface | E | 0.20 | 0.50 | 28.57 | |
| 12 | 1500 | 2.0 | 1500 | 1.2 | A | surface | E | 0.30 | 1.00 | 23.08 | One surface | E | 0.40 | 1.00 | 28.57 | |

EP 3 812 083 A1

43

The first exposed portion was formed by cutting with an end mill such that the removal width to be the first exposed portion as average value obtained by measuring the width at five places was in a range of 0.3 mm to 3.0 mm. In addition, the first exposed portion was formed over an entire length of 10 cm on both surfaces of the end portion of the coated steel sheet on only one side of the four sides of the coated steel sheet excluding the region including end edge of the coated steel sheet.

According to the type of the second coated portion shown in Table 4, while forming the first exposed portion, the second coated portion was formed in the region including the end edge of the coated steel sheet on a side closer to the end edge of the coated steel sheet than to the first exposed portion. The second coated portion was formed so as to have the width of the second coated portion shown in Table 4.

Next, as shown in Table 4, two coated steel sheets (two steel sheets for butt welding) were prepared (coated steel sheet 1 and coated steel sheet 2), the end surfaces of the end portion having the first exposed portion and the second coated portion were butted, and butt welding was performed by laser welding. Thus, a tailored blank was prepared. The welding was adjusted so as to perform penetration welding under the conditions of a laser output of 3.0 kW (kilowatt) to 5.0 kW and a welding rate of 4.0 m/min (meter per minute) to 7.0 m/min.

The prepared tailored blank was held in a furnace heated to 920°C for 4 minutes. Then, the tailored blank was formed with a water-cooled die and quenched to manufacture a flat hot stamped product.

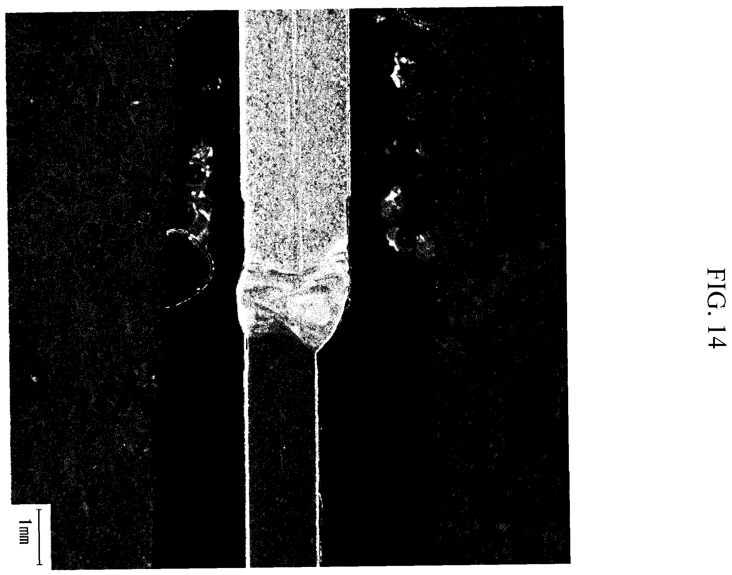

Here, the cross-sectional image of the tailored blank after hot press forming of Example No. 5 is shown in FIG. 14. A weld metal portion is present in the center portion of the tailored blank shown 14. The Vickers hardness of the weld metal portion was HV 420 or higher. In the cross-sectional image shown in FIG. 14, the white portion seen in the weld metal portion is not ferrite and this portion appears white due to light reflection.

<Evaluation>

(Fatigue Strength Test and Joint Static Strength)

From the obtained hot-stamping formed product, a dumbbell-shaped test piece having a welded portion was collected as a test piece for a tensile strength test and a test piece for a fatigue strength test.

The test piece was collected to have a parallel portion distance of 20 mm and a parallel portion width of 15 mm and to have a weld line in the center portion of the parallel portion over the entire length so as to be orthogonal to the longitudinal direction. Using this test piece, a fatigue strength test and a joint static strength were conducted.

The joint static strength (expressed as static strength) was calculated by dividing a load by the tensile strength $\times$ the cross section product on the side with the smaller sheet thickness of the base steel sheet.

The fatigue strength test (expressed as fatigue limit) was performed using an electromagnetic resonance type fatigue strength tester under the conditions of a load control axial force full pulsating tensile, a stress ratio of 0.1, a stress repetition number of $10^7$, and a repetition rate of about 80 Hz in a room temperature atmosphere. These results are shown in Table 5.

(Test for Corrosion Resistance After Painting)

After the obtained hot-stamping formed product was subjected to a chemical conversion treatment, electrodeposition painting was performed and a test for corrosion resistance after painting was performed. The chemical conversion treatment was performed with a chemical conversion treatment solution PB-SX35T manufactured by Nippon Parkerizing Co., Ltd. Thereafter, as an electrodeposition painting, a cationic electrodeposition painting POWERNICS 110 manufactured by Nippon Paint Co., Ltd. was used and the electrodeposition painting was applied to the hot-stamping formed product to have a target electrodeposition film thickness of about 15 $\mu$m. The hot-stamping formed product was washed with water and then baked by heating at 170°C for 20 minutes to prepare a test sheet. The test sheet had a size of a length of 65 mm long and a width of 100 mm (there is a welded portion at the center portion of the width).

Using this test sheet, the corrosion resistance after painting was evaluated the corrosion state after the elapse of 360 cycles (120 days) using a vehicle component external appearance corrosion test JASO M610-92.

The evaluation of the corrosion resistance after painting was performed based on the maximum corrosion depth, and the weld metal portion was evaluated using a point micrometer according to the following determination criteria.

-Determination Criteria-

A: The maximum corrosion depth is less than 0.2 mm.
D: The maximum corrosion depth is 0.2 mm or more.

The column of tensile strength of coated steel sheet after hot press forming and the column of thickness of coated steel sheet in Tables 2 to 4 are expressed as the nominal tensile strength and the nominal base steel sheet thickness. In addition, the coated steel sheet is a steel sheet obtained by applying aluminum coating to the base steel sheet.

Further, in Table 4, "A", "B", and "C" in the column of type of exposed portion are as follows. In A, the first exposed portion in which the base steel sheet is exposed is formed.

A: The aluminum coating layer and the intermetallic compound layer are removed.
B: The aluminum coating layer is removed.
C: The aluminum coating layer and the intermetallic compound layer remain (are not removed).

In Table 4, the notations "-" and "E" in the column of type of second coated portion are as follows.

- : There is no second coated portion (only the first exposed portion was formed). E: The aluminum coating layer and the intermetallic compound layer remain.

In Table 4, the width of the second coated portion is a value obtained by measuring the distance from the end edge of the coated steel sheet (steel sheet for butt welding) to the boundary between the second coated portion and the first exposed portion by the method described above.

In Table 5, the numerical value in the column of sheet thickness ratio is a value obtained by calculating the sheet thickness ratio of the base steel sheet according to Expression (11) above at the position corresponding to the first exposed portion of the coated steel sheet and the position of the first coated portion.

[Table 5]

| No. | After butt welding and hot press forming | | | | | Remarks |
|---|---|---|---|---|---|---|
| | Al concentration of first weld metal portion (mass%) | Sheet thickness ratio | Static strength (MPa) | Fatigue limit (MPa) | Corrosion resistance after painting | |
| 1 | 0.03 | 0.97 | 1530 | 470 | D | Comparative Example |
| 2 | 0.03 | 0.95 | 1542 | 430 | D | |
| 3 | 0.21 | 1.00 | 1530 | 345 | A | |
| 4 | 1.10 | 1.00 | 1280 | 340 | A | |
| 5 | 0.08 | 0.98 | 1320 | 420 | A | Invention Example |
| 6 | 0.17 | 0.92 | 1315 | 410 | A | |
| 7 | 0.12 | 1.00 | 1500 | 420 | A | |
| 8 | 0.11 | 0.95 | 1330 | 410 | A | |
| 9 | 0.12 | 0.95 | 1330 | 425 | A | |
| 10 | 0.14 | 0.96 | 1815 | 435 | A | |
| 11 | 0.17 | 0.97 | 1310 | 425 | A | |
| 12 | 0.39 | 0.98 | 1515 | 415 | A | |

In Table 5, the Al concentration of the first weld metal portion is a value measured according to the method described above.

As shown in Table 5, in Nos. 1 and 2 in which both the aluminum coating layer and the intermetallic compound layer are removed and the second coated portion is not provided, the fatigue strength is excellent. However, since the concentration of aluminum in the first weld metal portion is low, the corrosion resistance after painting is inferior.

In No. 3 in which the aluminum coating layer is removed, the intermetallic compound layer remains, and the first exposed portion of the base steel sheet is not provided, although the corrosion resistance after painting is excellent, the fatigue strength is inferior.

In No. 4 in which neither the aluminum coating layer nor the intermetallic compound layer was removed, the corrosion resistance after painting is excellent. However, the fatigue strength is inferior and further, the static strength is inferior.

On the other hand, as shown in Table 5, in Nos. 5 to 12 using a coated steel sheet having an end portion in which both the aluminum coating layer and the intermetallic compound layer are removed to form an exposed portion and further, the second coated portion is formed at the end edge of the coated steel sheet, the fatigue strength and the corrosion resistance after painting are excellent.

(Second Embodiment)

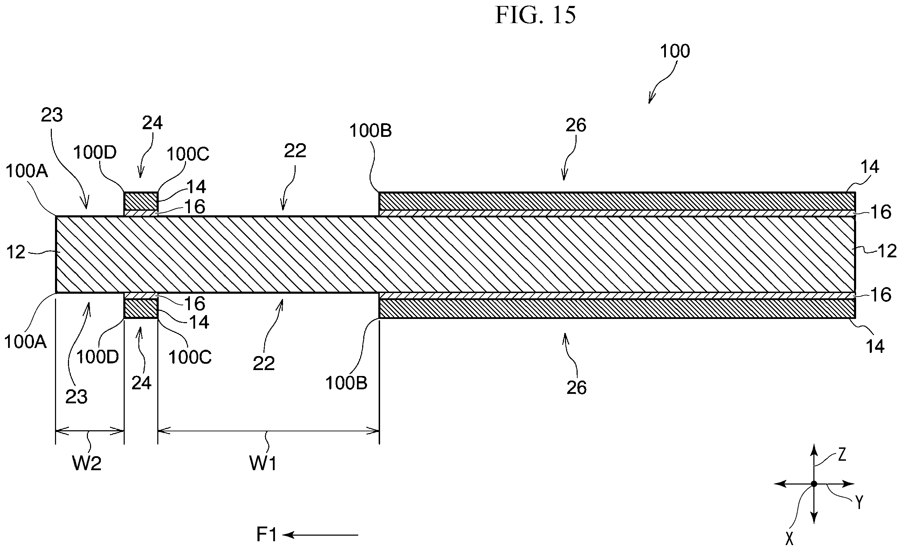

Next, a second embodiment of the present disclosure will be described with reference to FIGS. 15 to 20, 38, and 39. However, the same portions as those in the above embodiment are denoted by the same reference numerals, a description thereof is omitted, and only different points will be described.

In the following description, in a case where there is no distinction between the first exposed portion and the second exposed portion, these portions are simply referred to as an exposed portion.

In the steel sheet according to the first embodiment, the second coated portion is provided in the region including the end edge, but there is no limitation thereto. As long as the second coated portion is provided on the end edge side and is in a position incorporated in the weld metal portion during butt welding, the second coated portion and the end edge may be separated from each other. Hereinafter, the second embodiment in which the second exposed portion is provided between the second coated portion and the end edge of the steel sheet will be described.

<Steel Sheet>

The steel sheet of the present disclosure includes, in addition to each configuration of the steel sheet 100 of the first embodiment, a second exposed portion in which the base steel sheet 12 is exposed is provided between the end edge 100A of the steel sheet and a second coated portion 24 in the first direction.

The distance from the end edge of the steel sheet to the second coated portion 24 (the width of the second exposed portion) is preferably smaller than the distance from the end edge of the first coated portion 26 to the second coated portion 24 (the width of the first exposed portion).

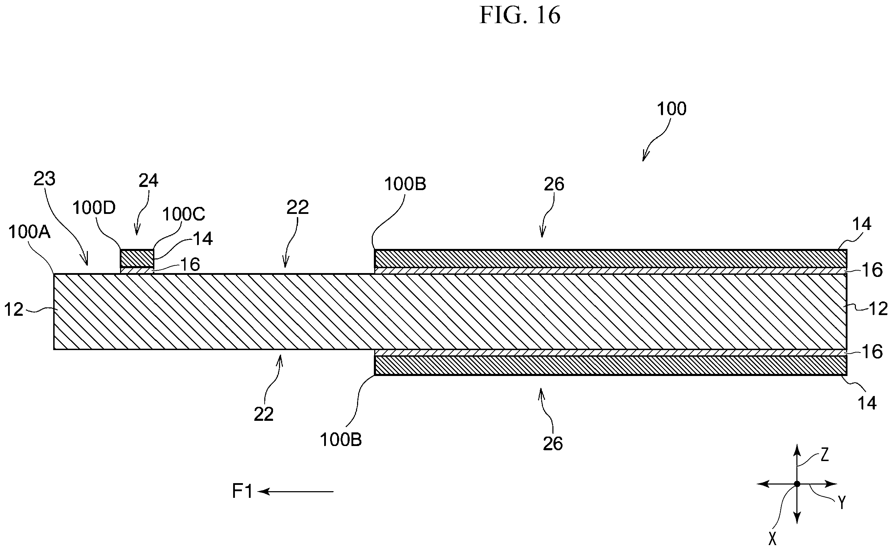

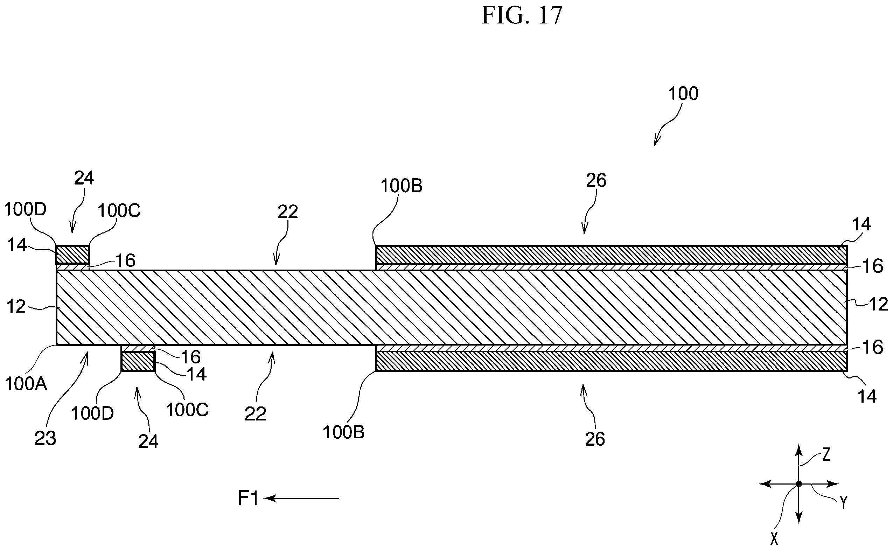

FIG. 15 is a schematic cross-sectional view showing an example of the end portion having the exposed portion of the base steel sheet, and the second coated portion in which the intermetallic compound layer and the aluminum coating layer remain in the steel sheet of the present disclosure. FIG. 16 is a schematic cross-sectional view showing another example of the end portion having the exposed portion of the base steel sheet, and the second coated portion in which the intermetallic compound layer and the aluminum coating layer remain in the steel sheet of the present disclosure. FIG. 17 is a schematic cross-sectional view showing still another example of the end portion having the exposed portion of the base steel sheet, and the second coated portion in which the intermetallic compound layer and the aluminum coating layer remain in the steel sheet of the present disclosure.

In FIGS. 15 to 17, 100C and 100D represent end edges in the second coated portion 24, respectively. 100D represents the end edge of the second coated portion 24 at the boundary with a second exposed portion 23 in the vicinity of the end edge 100A of the steel sheet 100. 100C represents the end edge of the second coated portion 24 at the boundary with the first exposed portion 22 located in the vicinity of the center portion (first coated portion 26) of the steel sheet 100.

As shown in FIGS. 15 to 17, the steel sheet 100 of the present disclosure includes, in addition to each configuration of the steel sheet 100 of the first embodiment, a second exposed portion 23 in which the base steel sheet 12 is exposed between the end edge 100A of the steel sheet 100 and the second coated portion 24 in the first direction F1. In the first direction F1, the end edge 100A of the steel sheet 100 and the second exposed portion 23 are adjacent to each other.

The second coated portion 24 is provided so as to be interposed between the first exposed portion 22 and the second exposed portion 23. The distance from the end edge 100A of the steel sheet 100 to the end edge 100D of the second coated portion 24 (W2 shown in FIG. 15, the width of the second exposed portion 23 in the first direction F1, hereinafter, also referred to as the width of the second exposed portion 23) is preferably smaller than the distance from the end edge 100B of the first coated portion 26 to the end edge 100C of the second coated portion 24 (W1 shown in FIG. 15, the width of the first exposed portion 22). That is, the second coated portion 24 is preferably provided such that the relationship between the width of the first exposed portion 22 and the width of the second exposed portion 23 satisfies the relationship between W2 < W1 (the width W2 of the second exposed portion 23 smaller than the width W1 of the first exposed portion 22).

As long as the second exposed portion 23 in which the base steel sheet 12 is exposed is provided between the end edge 100A of the steel sheet 100 and the second coated portion 24 in the first direction F1 in the steel sheet 100 of the present disclosure, the embodiment of the end portion is not particularly limited. In the steel sheet 100 shown in FIG. 15, although the embodiment in which the second coated portion 24 is provided at substantially the same position on both surfaces of the end portion, (that is, the distance between W1 s on both surfaces and the distance between W2s on both surfaces are the same) is shown, the second coated portion 24 may be provided at different positions. In the steel sheet 100 shown in FIG. 15, the second coated portion 24 provided on one surface may be provided closer to the end edge 100A of the steel sheet 100 than the second coated portion 24 provided on the other surface.

Further, the second coated portion 24 may be provided as shown in FIG. 16 or FIG. 17. In the steel sheet 100 shown in FIG. 16, the second coated portion 24 and the first exposed portion 22 are provided on one surface of the end portion. On the other hand, only the first exposed portion 22 is formed on the other surface of the end portion. That is, in the steel sheet 100 shown in FIG. 16, as in the steel sheet 100 shown in FIG. 15, the second coated portion 24 is formed to be interposed between the first exposed portion 22 and the second exposed portion 23 on one surface of the end portion. In addition, the first exposed portion 22 is formed over the region from the end edge 100A of the steel sheet 100 to the end edge 100B of the first coated portion 26 on the other surface of the end portion.

In the steel sheet 100 shown in FIG. 17, the second coated portion 24 and the first exposed portion 22 are provided on one surface of the end portion as in the steel sheet 100 shown in FIG. 15. The second coated portion 24 is provided in the region including the end edge 100A of the steel sheet 100 on the other surface of the end portion, and the end edge 100D of the second coated portion 24 is located at the end edge 100A of the steel sheet 100. That is, the first exposed portion 22 provided on the other surface of the end portion is provided between the end edge 100B in the first coated portion 26 to the end edge 100C of the second coated portion 24.

The steel sheet 100 of the present disclosure has been described above with reference to FIGS. 15 to 17, but the steel sheet of the present disclosure is not limited to these.

In addition, in the steel sheet 100 of the present disclosure, the thickness of the base steel sheet 12 in the exposed portion provided in the end portion of the steel sheet 100 may be the same as the thickness of the base steel sheet 12 at the first coated portion 26. Further, in the steel sheet 100 of the present disclosure, the thickness of the base steel sheet 12 in the exposed portion provided in the end portion of the steel sheet 100 may be smaller than the thickness of the base steel sheet 12 in the first coated portion 26.

Further, at the boundary between the first coated portion 26 and the first exposed portion 22, when the steel sheet 100 is viewed from the cross section, the end surface of the first coated portion 26 may be inclined to the outside in the thickness direction.

<Exposed Portion>

The exposed portion is formed in the end portion of the welding scheduled portion of the steel sheet 100. Then, as shown in FIG. 38, in the end portion in which the exposed portions 22 and 23 are formed, which is a welding scheduled portion, the exposed portions 22 and 23 in which the base steel sheet 12 is exposed are provided on at least a part of both surfaces. The exposed portions 22 and 23 have the first exposed portions 22 provided in contact with the end edge of the steel sheet 100 and along the end edge of the steel sheet 100 on at least one surface of the steel sheet 100. In addition, the exposed portions have the second exposed portions 23 provided in contact with the end edge of the second coated portion 24 and along the end edge of the second coated portion 24. The width W2 of the second exposed portion 23 is shorter than the width W1 of the first exposed portion 22.

In addition, in a case where the surface provided with only the exposed portion without providing the second coated portion 24 is provided in the end portion in which the exposed portion is formed, the exposed portion (first exposed portion 22) is provided over the entire width from the end edge of the end portion of the steel sheet 100 to the end edge 100B of the first coated portion 26 (refer to FIG. 16).

The first exposed portion 22 to be formed on both surfaces of the end portion of the steel sheet 100 may be formed as follows. That is, in the embodiment in which when the end portions of the steel sheet 100 are butt-welded, the first exposed portion 22 in which the base steel sheet 12 is exposed is formed between the weld metal portion and the first coated portion 26, the first exposed portion 22 is formed in the steel sheet 100. The second coated portion 24 is provided in the vicinity of the end edge of the steel sheet 100 by forming the second exposed portion 23 between the second coated portion and the end edge 100A of the steel sheet 100.

The width of the range in which the exposed portions 22 and 23 are formed may be 0.1 mm or more and 5.0 mm or less. In the present disclosure, the width of the range in which the exposed portion is formed is the distance from the end edge 100A of the end portion of the steel sheet 100 to the end edge 100B of the first coated portion 26 (in a case of FIG. 15, which represents a total of W1 and the width W2 of the second coated portion 24). Here, the position of the end edge 100D of the first exposed portion 22 is preferably within 0.9 mm from end edge 100A of the steel sheet 100 in the direction opposite to F1. More preferably, the position of end edge 100D of the first exposed portion 22 is within 0.5 mm. The width of the second exposed portion 23 may be close to 0, and can be set to, for example, 0.01 mm or more. The width of the second exposed portion 23 may be 0.8 mm or less from the viewpoint of improving fatigue strength. The preferable range of the width of the second exposed portion 23 is 0.05 mm to 0.40 mm.

In a case where the butt welding is laser welding, the width of the range in which the exposed portions 22 and 23 are formed is preferably 0.5 mm or more and the width of the range in which the exposed portions are formed is preferably 1.5 mm or less. By setting the width of the range in which the exposed portions 22 and 23 are formed to 0.5 mm or more, it is possible to prevent aluminum from remaining at the end portion of the weld metal portion during welding of the tailored blank (the end portion of the weld metal and the aluminum coating layer 14 do not come into contact with each other). By setting the width of the range in which the exposed portions 22 and 23 are formed to 1.5 mm or less, deterioration in corrosion resistance after painting can be suppressed. In a case where the butt welding is plasma welding, the width of the range in which the exposed portion is formed is preferably 1.0 mm or more and the width of the range in which the exposed portion is formed is preferably 4.0 mm or less. By setting the width of the range in which the exposed portion is formed to 0.2 mm to 4.6 mm (on average), when formed into a hot stamped product, deterioration in joint fatigue strength is easily controlled.

The thickness of the base steel sheet 12 in the exposed portion in the end portion of the steel sheet 100 is an average value of measurement values in the first exposed portion 22. The thickness of the base steel sheet 12 in the first coated portion 26 is an average thickness in this region. In addition, the sheet thickness ratio is an average value.

The thickness of the base steel sheet 12 in the first exposed portion 22 in the end portion of the steel sheet 100 and the thickness of the base steel sheet 12 in the center portion of the steel sheet 100 can be obtained by cutting the steel sheet 100 in the thickness direction and observing the cut cross section with an optical microscope. In the cut cross section, the thickness of the base steel sheet 12 in the first exposed portion 22 and the thickness of the base steel sheet 12 in the center portion of the steel sheet 100 may be measured.

In a case where a region in which the second coated portion 24 is provided to face the exposed portion is present on the surface opposite to the surface in which the second exposed portion is provided in the end portion of the steel sheet 100 to be applied as a blank material, the thickness of the base steel sheet 12 in the exposed portion is measured in a part excluding this region. That is, the thickness of the base steel sheet 12 in the exposed portion is an average value obtained by measuring the thicknesses in the part in which the base steel sheet 12 is exposed on both surfaces.

Specifically, the thickness of the base steel sheet 12 in the exposed portion is an average value obtained as follows. The thickness of the base steel sheet 12 at the exposed portion is measured from the cross section of the steel sheet 100 at a position where the width of the first exposed portion 22 in the first direction F1 is divided into two equal parts. At this time, the exposed portion is divided into five equal parts the longitudinal direction in plan view, and five places are measured to obtain the average value.

Regarding the thickness of the second coated portion 24, as in the first embodiment, in the longitudinal direction of the first exposed portion 22, at the positions of five places where the entire length of the second coated portion 24 in the third direction (X direction) is divided into five equal parts, the thickness of the second coated portion 24 is obtained at the positions where the width of the second coated portion 24 is divided into two equal parts in the first direction F1, and the average value of the obtained values is used as the thickness of the second coated portion 24.

The same applies to the thickness of the intermetallic compound layer 16 or the like.

<Second Coated Portion>

The second coated portion 24 is provided on at least one surface of the steel sheet 100 so as to be interposed between the first exposed portion 22 and the second exposed portion 23 in the first direction F1. The second coated portion 24 is provided in a range in which the width W2 of the second exposed portion 23 is smaller than the width W1 of the first exposed portion 22.

The second coated portion 24 to be formed on at least one surface of the end portion of the steel sheet 100 may be formed such that after welding is performed in a state in which the end surfaces of the steel sheet 100 having the exposed portion and the second coated portion 24 are butted together, the second coated portion 24 is not present at the boundary between a weld metal to be formed in the tailored blank and the steel sheet 100 (the exposed portion of the base steel sheet 12). That is, after butt welding, the second coated portion 24 is provided between the second exposed portion 23 provided on at least one surface of the end portion of the steel sheet 100 and the first exposed portion 22 provided along the end edge of the first coated portion 26 in the vicinity of the end edge of the steel sheet 100 so that the second coated portion is included in the weld metal.

The width of the weld metal portion may be 0.4 mm to 6 mm. In a case where the width of the weld metal portion is 0.4 mm, the width A1 which is the total of the width of the second exposed portion 23 and the width of the second coated portion 24 is preferably 0.04 mm or more and less than 0.2 mm, and when the width of the first exposed portion 22 is B1, the total of A1 and B1 is preferably 0.5 mm or more. In a case where the width of the weld metal portion is 1 mm, the width A1 is preferably 0.3 mm or less, and the total of the width A1 and the width B1 is preferably 0.8 mm or more. In a case where the width of the weld metal portion is 2 mm, the width A1 is preferably 0.8 mm or less, and the total of the width A1 and the width B1 is preferably 1.3 mm or more. In a case where the width of the weld metal portion is 6 mm, the width A1 is preferably 0.9 mm or less, and the total of the width A1 and the width B1 is preferably 3.3 mm or more.

The method of measuring these width values is the same as the method of measuring the width of the exposed portion described later.

Here, with reference to FIG. 15, the width W2 of the second exposed portion 23 is preferably 0.01 mm or more. The width W1 of the first exposed portion 22 is preferably 0.1 mm or more.

In a case where the second exposed portion is provided, the second coated portion 24 is preferably provided in a range of 0.9 mm from the end edge 100A of the steel sheet 100. The second coated portion 24 is more preferably provided in a range of 0.50 mm from end edge 100A of the steel sheet 100. When the second coated portion 24 is provided in this range, the second coated portion 24 is easily included in the weld metal after butt welding. Alternatively, by setting the region where the second coated portion 24 is present to this range, at least a region over 0.9 mm from the end edge 100A of the steel sheet 100 on the first coated portion side becomes the first exposed portion 22. Accordingly, at least the surface between the weld metal and the welded heat-affected zone after butt welding can be set to a region in which a hard intermetallic compound is not generated. As described above, by defining the range of the region in which the second coated portion 24 is present and the position of the first exposed portion 22, A1 required for improving the corrosion resistance of the weld metal can be supplied to the weld metal, and an intermetallic compound that deteriorates fatigue strength at the boundary between the weld metal and welded heat-affected zone can be prevented from being generated. The second coated portion 24 is more preferably provided in a range of 0.4 mm from the end edge 100A of the steel sheet 100 and even more preferably provided in a range of 0.3 mm from the end edge 100A of the steel sheet 100.

In addition, the width of the second coated portion 24 provided in the end portion of the steel sheet 100 is preferably as follows. In a case where butt welding is laser welding, the width of the second coated portion 24 is preferably 0.05 mm or more and the width of the second coated portion 24 is preferably 0.40 mm or less. In a case of using plasma welding, the width of the second coated portion 24 is preferably 0.10 mm or more and the width of the second coated portion 24 is preferably 0.60 mm or less.

In a case where the width of the second coated portion 24 changes at each position in the longitudinal direction of the second coated portion 24, the width of the second coated portion 24 may be defined as the maximum value of the width of the second coated portion 24 at each position in the longitudinal direction of the second coated portion 24.

Here, the width of the first exposed portion 22 is an average value obtained by measuring the width of the first exposed portion 22 at five places where the entire length in the longitudinal direction of the first exposed portion 22 is divided into five equal parts. Similarly, the width of the second exposed portion 23 is an average value obtained by measuring the width of the second exposed portion 23 at five places where the entire length in the longitudinal direction of the first exposed portion 22 is divided into five equal parts, and the width of the second coated portion 24 is an average value obtained by measuring the width of the second coated portion 24 at five places where the entire length in the longitudinal direction of the first exposed portion 22 is divided into five equal parts.

The width of the first exposed portion 22, the width of the second exposed portion 23, and the width of the second coated portion 24 are measured as follows.

Samples for measurement including a cross section in which the total width of the exposed portions 22 and 23 and the second coated portion 24 formed in the end portions of the steel sheet 100 can be observed (for example, a cross section of the steel sheet 100 along the first direction F1 in plan view) are collected at five places. The samples for measurement are collected from the positions of five places where the length of the exposed portions 22 and 23 formed along the end edge 100A of the steel sheet 100 is divided into five equal parts. Next, the steel sheet 100 is cut so as to expose the cross section thereof. Thereafter, each of the cut samples for measurement is embedded in a resin and polished and the cross section is magnified with a microscope. Then, for each sample, the width of the second exposed portion 23 which is the distance from the end edge 100A of the steel sheet 100 to the second coated portion 24, and the width of the first exposed portion 22 which is the distance from the second coated portion 24 to the first coated portion 26 are measured. In addition, the distance between both end edges in the second coated portion 24 is measured for each sample.

In addition, as the ratio of the width of the second coated portion 24 formed in the end portion in which welding is scheduled, a percentage of (width of second coated portion 24)/(width of second coated portion 24 + width of exposed portion), which is a value for a total of the width of the second coated portion 24 and the width of the exposed portion (the width of the first exposed portion 22 and the second exposed portion 23), may be in a range of 3% to 50%. When the ratio of the width of the second coated portion 24 is in this range, deterioration in fatigue strength is suppressed, and excellent corrosion resistance after painting can be effectively obtained. A preferable lower limit of the ratio of the width of the second coated portion 24 is 5%. On the other hand, a preferable upper limit of the ratio of the width of the second coated portion 24 is 40% and a more preferable upper limit is 30%.

In the steel sheet 100 of the present disclosure, not only the aluminum coating layer 14 but also the intermetallic compound layer 16 are removed on at least a part of both surfaces of the end portion of the steel sheet 100 and the exposed portion 22 and 23 in which the base steel sheet 12 is exposed are provided. Further, in the end portion in which the exposed portions 22 and 23 are provided, the second coated portion 24 is provided while being interposed between the two exposed portion 22 and 23. Then, the second coated portion 24 is provided such that the width of the second exposed portion 23 is smaller than the width of the first exposed portion 22. That is, the steel sheet 100 of the present disclosure does not have a hard and brittle intermetallic compound layer 16 in the exposed portions 22 and 23 in which the base steel sheet 12 is exposed. In addition, in the steel sheet 100 of the present disclosure, the second coated portion 24 in which the intermetallic compound layer 16 and the aluminum coating layer 14 remain is present in the vicinity of the end edge of the steel sheet 100 through the second exposed portion 23 between the second coated portion and the end edge 100A of the steel sheet 100.

Accordingly, a tailored blank obtained by using the steel sheets 100 of the present disclosure as blank materials and performing welding while butting the end surfaces of the end portions having the exposed portion and the second coated portion 24 in the steel sheets 100 of the present disclosure does not have a hard and brittle intermetallic compound layer 16 at the boundary between the weld metal and the steel sheet 100. A portion in the vicinity of the end edge 100B of the first coated portion 26 in the weld metal portion does not contain the aluminum of the intermetallic compound layer 16 and the aluminum coating layer 14. In addition, the second coated portion 24 is incorporated in the weld metal portion after butt welding (that is, an appropriate amount of aluminum of the second coated portion 24 is mixed into the weld metal portion).

For this reason, even in a case where this tailored blank is formed into a hot stamped product, it is considered that deterioration in the fatigue strength of the joint is suppressed. In addition, since the generation of scale is suppressed on the surface of the weld metal portion, chemical convertibility is improved and the adhesion of the coating is improved. Therefore, it is considered that even after painting the hot stamped product, the corrosion resistance after painting of the weld metal portion is excellent.

Further, the portion in the vicinity of the end edge 100B of the first coated portion 26 in the weld metal portion hardly contains aluminum of the intermetallic compound layer 16 and the aluminum coating layer 14. Thus, it is possible to suppress deterioration in the fatigue strength of the weld metal portion due to softening of the weld metal portion of this portion.

Further, in the steel sheet 100 of the present disclosure, the second coated portion 24 is present in the vicinity of the end edge 100A of the steel sheet 100 such that the second coated portion is separated from the end edge 100A of the steel sheet 100 and is interposed between the two exposed portions 22 and 23. Therefore, in handling such as conveyance before the steel sheets 100 are joined, the second coated portion 24 is hardly peeled off. As a result, there is an advantage that an appropriate amount of aluminum can be easily mixed in the weld metal portion.

In the steel sheet 100 of the present disclosure, in the end portion of the welding scheduled portion, the second coated portion 24 is formed to be interposed between the first exposed portion 22 and the second exposed portion 23 of the base steel sheet 12 described above. The second coated portion 24 includes the following embodiments as long as deterioration in the fatigue strength of the weld metal portion is suppressed and the corrosion resistance after painting can be maintained.

For example, when the coated steel sheet is punched to obtain a punched member that becomes a blank material, a cutting unit such as a shear may be employed. When cutting is performed with a shear, in a region including the end edge of the coated steel sheet, droop may occur on one surface, and burring may occur on the other surface.

The intermetallic compound layer and the aluminum coating layer are removed from the end portion of the coated steel sheet on which droop and burring occur by cutting, for example. At this time, by grinding the surface where the burring occurs, the second exposed portion 23 can be provided in the region in contact with the end edge of the coated steel sheet. In addition, the second coated portion 24 can be provided so that the intermetallic compound layer 16 and the aluminum coating layer 14 remain closer to the center portion of the coated steel sheet than to the region in which burring occurs. Further, the first exposed portion 22 can be provided closer to the center portion than to the region which becomes the second coated portion 24. On the other hand, in the portion in which droop occurs, the second coated portion 24 can be provided so that the intermetallic compound layer 16 and the aluminum coating layer 14 remain in the region including the end edge of the coated steel sheet. In the portion in which droop occurs, the intermetallic compound layer 16 and the aluminum coating layer 14 may be removed so that the base steel sheet 12 is exposed.

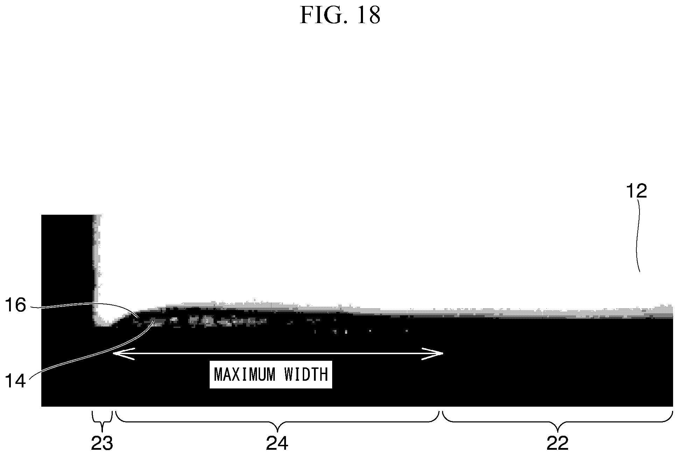

FIG. 18 is a cross-sectional image showing an example of the end portion having the exposed portions 22 and 23 of the base steel sheet 12 and the second coated portion 24 in the steel sheet 100 according to the present disclosure. The end portion of the steel sheet 100 shown in FIG. 18 is shown as an enlarged image when the exposed portions 22 and 23 and the second coated portion 24 are formed by removing the surface in which burring occurs by cutting in the end portion of the steel sheet 100.

The second exposed portion 23 is provided by cutting the surface in which burring occurs so that the base steel sheet 12 is exposed. In addition, the first exposed portion 22 is provided by cutting so that the base steel sheet 12 is exposed. The second coated portion 24 is provided by cutting so that the first exposed portion 22 in which the intermetallic compound layer 16 and the aluminum coating layer 14 remain is formed. The second coated portion 24 shown in FIG. 18 has the intermetallic compound layer 16 and the aluminum coating layer 14.

The aluminum contained in the second coated portion 24 is mixed with the weld metal in an appropriate amount, and thus the corrosion resistance after painting of the weld metal portion becomes excellent. Therefore, in the steel sheet 100 of the present disclosure, when cutting the surface where burring occurs, the aluminum coating layer 14 and the intermetallic compound layer 16 remaining closer to the center of the steel sheet 100 than to the portion where the burring occurs may be used as the second coated portion 24. The second coated portion 24 may be cut to a degree that the intermetallic compound layer 16 and the aluminum coating layer 14 remain.

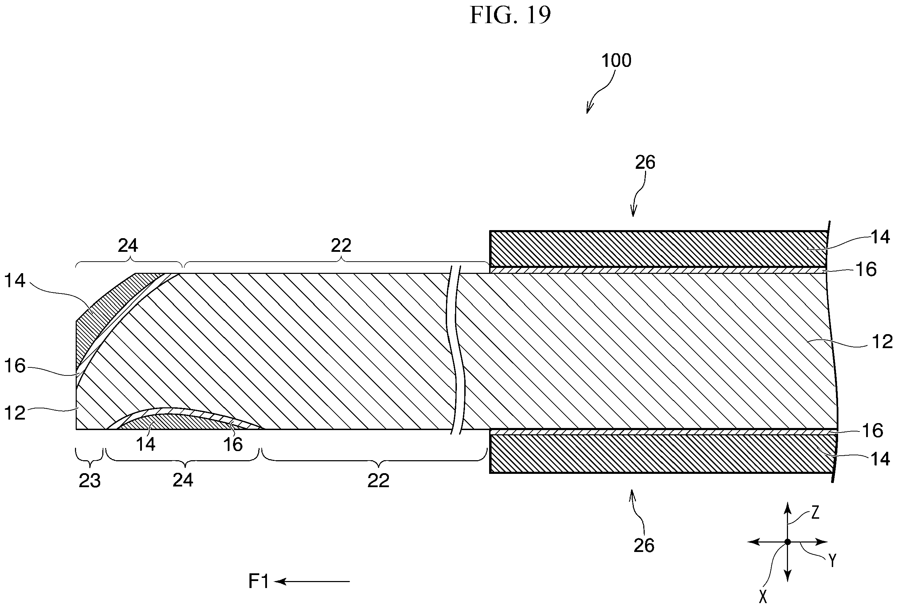

FIG. 19 is a schematic enlarged cross-sectional view showing another example of the end portion having the exposed portion of the base steel sheet 12 and the second coated portion 24 in the steel sheet for 100 according to the present disclosure. FIG. 19 schematically shows a state that the end portion of the steel sheet 100 in which droop occurs on one surface of the end portion and burring occurs on the other surface is cut. By allowing the intermetallic compound layer 16 and the aluminum coating layer 14 to remain in the portion in which droop occurs on the surface in which droop occurs, the second coated portion 24 is provided along the end edge of the steel sheet 100. On the surface in which burring occurs, the first exposed portion 22 and the second coated portion 24 are provided by cutting. By cutting the surface in which burring occurs, the second exposed portion 23 is formed. In addition, the second coated portion 24 is formed closer to the center portion of the steel sheet 100 than to the second exposed portion 23 so that the intermetallic compound layer 16 and the aluminum coating layer 14 remain. Further, the first exposed portion 22 is formed closer to the center portion of the steel sheet than to the second coated portion 24.

Although the second coated portion 24 is provided in the portion in which droop occurs in the end portion of the steel sheet 100 shown in FIG. 19, the base steel sheet 12 may be exposed by cutting the second coated portion 24 in the portion in which droop occurs. In addition, in the second coated portions 24 provided on both surfaces shown in FIG. 19, both the intermetallic compound layer 16 and the aluminum coating layer 14 remain.

As an example of a preferable method of forming the exposed portion and the second coated portion 24 on at least a part of both surfaces in the end portion of the coated steel sheet (steel sheet for butt welding), for example, the following method may be mentioned.

This method is a method including a step of removing the intermetallic compound layer 16 and the aluminum coating layer 14 formed on the base steel sheet 12 are removed by cutting on at least a part of both surfaces of the end portion of the coated steel sheet to provide the exposed portion in which the base steel sheet 12 is exposed and the second coated portion 24 in which the intermetallic compound layer 16 and the aluminum coating layer 14 remain (referred to as formation method C).

In the step, in the end portion in which the exposed portion is provided, on both surfaces of the coated steel sheet, as exposed portions, the second exposed portion 23 which is in contact with the end edge of the coated steel sheet and formed along the end edge of the coated steel sheet, and the first exposed portion 22 which is in contact with the end edge of the first coated portion 26 and formed along the end edge of the first coated portion 26 are formed. When the step is performed, the distance from the end edge of the coated steel sheet to the second coated portion 24 is preferably shorter than the distance from the end edge of the first coated portion 26 to the second coated portion 24.

The formation method C is, for example, a method of forming the exposed portion and the second coated portion 24 in the end portion of the coated steel sheet as follows. First, as a coated steel sheet (blank material) before the steel sheet is formed, a coated steel sheet cut into a desired size is prepared. Next, the aluminum coating layers 14 and the intermetallic compound layers 16 formed on both surfaces of the base steel sheet 12 are removed by cutting in at least a part of the both surfaces of the end portion of the cut coated steel sheet. Then, in the end portion of the coated steel sheet, the second exposed portion 23 in which the base steel sheet 12 is exposed is formed along the end edge of the coated steel sheet. At this time, the second coated portion 24 is formed adjacent to the second exposed portion 23 provided along the end edge in the end portion of the coated steel sheet. Further, the first exposed portion 22 is formed along the end edge in the first coated portion 26 to be adjacent to the second coated portion 24. The second coated portion 24 is formed such that the width of the second exposed portion 23 is smaller than the width of the first exposed portion 22.

When the exposed portions 22 and 23 and the second coated portion 24 described above are formed on at least a part of both surfaces of the end portion of the steel sheet 100, the order of forming the exposed portions 22 and 23 and the second coated portion 24 in the end portion is not limited to the above formation method C.

As an example of another preferable method of forming the exposed portions 22 and 23 and the second coated portion 24 described above on at least a part of both surfaces of the end portion of the coated steel sheet, for example, the following method may be used.

This method is a method including a step of removing the aluminum coating layer 14 and the intermetallic compound layer 16 formed on the base steel sheet 12 by cutting on at least a part of both surfaces of the coated steel sheet to provide the exposed portion in which the base steel sheet 12 is exposed, the second coated portion 24 in which the intermetallic compound layer 16 and the aluminum coating layer 14 remain, and the first coated portion 26 (referred to as formation method D).

In the step, a first process and a second process are performed.

As shown in FIG. 39(A), in the first process, in a portion which becomes the end portion in which the first coated portion 26 and the exposed portions 22 and 23 are provided, on at least one surface of the coated steel sheet 101, a first exposed portion region 22A which becomes the first exposed portion 22, a second coated portion region 24A which is adjacent to the first exposed portion region 22A and becomes the second coated portion 24, a second exposed portion region 23A which is adjacent to the second coated portion region 24A and becomes the second exposed portion 23, a second coated portion region 24B which is adjacent to the second exposed portion region 23A and becomes the second coated portion 24, and a first exposed portion region 22B which is adjacent to the second coated portion region 24B and becomes the first exposed portion 22 are formed in this order.

In the second process, as shown in FIG. 39(B), by cutting the coated steel sheet 100 at the second exposed portion region 23A, the first exposed portion 22 is formed along the end edge of the first coated portion 26, the second exposed portion 23 is formed along the end edge of the coated steel sheet 101, and the second coated portion 24 is formed to be interposed between the exposed portions 22 and 23. Through the above steps, two steel sheets 100 are manufactured.

In the second process, the distance from the end edge of the coated steel sheet 101 to the second coated portion 24 is preferably smaller than the distance from the end edge of the first coated portion 26 to the second coated portion 24.

For example, the formation method D is specifically the following method. First, a coated steel sheet 101 which is punched and cut into a desired size (blank material) is prepared. Next, on the cut coated steel sheet 101, an exposed portion region in which the base steel sheet 12 is exposed is formed by removing the aluminum coating layer 14 and the intermetallic compound layer 16 formed on the base steel sheet 12 by cutting. Three exposed portion regions are formed through the second coated portion 24 in regions excluding the first coated portion 26 so as to extend in one direction, for example. The three exposed portion regions include exposed portion regions which become the first exposed portions 22, and an exposed portion region which becomes the second exposed portion 23. In regions interposed between these three exposed portion regions, the two regions of the second coated portion 24 in which the intermetallic compound layer 16 and the aluminum coating layer 14 remain are formed to be adjacent to the exposed portion region which becomes the first exposed portions 22 and the exposed portion region which becomes the first exposed portion 22 to each other. Then, the steel sheet is cut at the exposed portion region which becomes the second exposed portion 23 (that is, the exposed portion region located in the center of the three exposed portion regions) to obtain two coated steel sheets (blank materials). The exposed portion region which becomes the second exposed portion 23 is cut so that the second exposed portion 23 is disposed along the end edge of the coated steel sheet in the cut coated steel sheet. Then, the obtained coated steel sheets are steel sheets before forming a tailored blank.

In a case of the formation method D, the width of the exposed portion region which becomes the second exposed portion 23 may be 0.05 mm to 12 mm and is preferably 0.2 mm to 10 mm. In addition, the position where the exposed portion region which becomes the second exposed portion 23 may be cut at a position in the vicinity of the center line of the exposed portion region or may be cut at a position other than the vicinity of the center line so as to have a desired width. In addition, the width of the exposed portion region in which the base steel sheet 12 is exposed may be removed by cutting so as to have a desired width.

The total width of the first exposed portion 22, the second exposed portion 23, and the second coated portion 24 formed in the formation method C and D described above may be 1.1 times or more larger than half of the width of the a melted region (weld metal portion). Thus, it is possible to prevent the melted region from coming into contact with the first coated portion 26.

In addition, the width of the second coated portion 24 in the steel sheet 100 before forming a tailored blank is formed to have a width included in the melted region after butt welding of the steel sheet 100.

Within these ranges, since an appropriate amount of aluminum is mixed into the weld metal portion after butt welding of the steel sheet 100, excellent corrosion resistance after painting is obtained and deterioration in (static) tensile strength is also suppressed. In addition, since there is no hard and brittle intermetallic compound layer 16 at the boundary between the weld metal portion and the steel sheet 100, deterioration in the fatigue strength of the steel sheet 100 after hot press forming is suppressed.

<Tailored Blank>

FIG. 20 is a schematic cross-sectional view showing an example of the tailored blank of the present disclosure.

A tailored blank 300 of the present disclosure includes a first weld metal portion, and at least two steel sheet portions connected to each other through the first weld metal portion. Each of the at least two steel sheet portions represents a portion corresponding to the steel sheet as a result of butt-welding the steel sheets (steel sheets for butt welding) of the present disclosure. Specifically, each of the at least two steel sheet portions includes the first coated portion 26 in which the intermetallic compound layer 16 and the aluminum coating layer 14 are provided on the surface of the base steel sheet 12 in order from the base steel sheet 12, and the first exposed portion 22 in which the base steel sheet 12 is exposed. In the tailored blank of the present disclosure, in the second direction F3, the first coated portion 26, the first exposed portion 22, and the first weld metal portion are provided such that the first coated portion 26, the first exposed portion 22, and the first weld metal portion are disposed in this order on the same plane.

The tailored blank 300 shown in FIG. 20 is formed by butt-welding end portions of welding scheduled portions of a steel sheet 110 of the present disclosure and a steel sheet 120 of the present disclosure. In the tailored blank 300, the steel sheet 110 and the steel sheet 120 whose sheet thickness is smaller than the sheet thickness of the steel sheet 110 are joined by the first weld metal portion 150. In addition, the tailored blank 300 has the first exposed portion 22 adjacent to the first weld metal portion 150 and has the first coated portions 26 of the steel sheets 110 and 120 adjacent to a side of the first exposed portion 22 apart from the first weld metal portion 150. The second coated portion 24 provided in the end portion of the welding scheduled portion of each of the steel sheet 110 and the steel sheet 120 is incorporated in the first weld metal portion 150 by butt welding, and disappears from the end portion of each of the steel sheets 110 and 120.

It is preferred that the entire second coated portion 24 in the butted end portion of the steel sheets 110 and 120 is incorporated (included) in the first weld metal portion 150.

<Hot Stamped Product>

In the second embodiment, when a hot stamped product is manufactured, the differences from the first embodiment are as follows.

After a punched member is obtained by punching the coated steel sheet in which both surfaces of the base steel sheet 12 are coated with aluminum, the following steps are performed.

The aluminum coating layer 14 and the intermetallic compound layer 16 are removed on at least a part of both surfaces of the end portion of the coated steel sheet to form an exposed portion of the base steel sheet 12. At this time, on at least one surface of the end portion of the coated steel sheet, a second exposed portion 23 provided along the end edge of the end portion of the coated steel sheet, a first exposed portion 22 provided along the end edge of the first coated portion 26, and a second coated portion 24 provided in the vicinity of the end edge of the coated steel sheet to be interposed between the two exposed portions 22 and 23 are formed to obtain the steel sheet 100 of the present disclosure.

Here, the exposed portions 22 and 23 and the second coated portion 24 formed on the end portion of the coated steel sheet may be formed in a state in which after the coated steel sheet is wound in a coil shape, the coated steel sheet wound in a coil shape is drawn out. In this case, after the exposed portion is formed, punching is performed so that the exposed portion and the second coated portion 24 are provided in the end portion of the coated steel sheet to obtain a punched member.

In addition, the exposed portion and the second coated portion 24 formed in the end portion of the coated steel sheet may be formed after a punched member is formed by drawing out the coated steel sheet wound in a coil shape and punching the drawn-out coated steel sheet. In this case, the exposed portion and the second coated portion 24 may be formed in the end portion of the punched member. In addition, in portions other than the end portion of the punched member, for example, an exposed region A which becomes the first exposed portion 22, a first remaining region which becomes the second coated portion 24, an exposed region B which becomes the second exposed portion 23, a second remaining region which becomes the second coated portion 24, and an exposed region C which becomes the first exposed portion 22 are formed in this order in the width direction of the coated steel sheet so as to extend in one direction. Then, the steel sheet may be cut at the exposed region B which becomes the second exposed portion 23 to obtain the steel sheets 100 of the present disclosure.

The concept of the specifications of the steel sheet required to make the concentration of aluminum contained in the first weld metal portion of the tailored blank described in the first embodiment 0.065 mass% to 1 mass% can be applied to the steel sheet 100 of the second embodiment.

<Examples>

Examples of the second embodiment of the present disclosure will be illustrated below, but the present disclosure is not limited to the following examples.

<Example 2>

First, a coated steel sheet coated with aluminum so as to have the thickness shown in Table 6 was prepared using a base steel sheet having the chemical composition shown in Table 2 above.

[Table 6]

| Tensile strength after hot press forming (MPa) | Thickness of aluminum coating layer ($\mu$m) | Thickness of intermetallic compound layer ($\mu$m) | Thickness of coated steel sheet (mm) |
|---|---|---|---|
| 1800 | 15 | 3 | 1.8, 1.6, 1.3 |
| 1500 | 22 | 5 | 2.0, 1.8, 1.6, 1.2 |
| 1300 | 17 | 6 | 1.6, 1.3, 1.2 |

Then, the coated steel sheet was cut out to form a square coated steel sheet (blank material) having a side of 10 cm. Next, the exposed portion and the second coated portion were formed on at least a part of both surfaces in the end portion of the welding scheduled portion of the prepared coated steel sheet.

In a part of the coated steel sheet, only the exposed portion was formed by removing the aluminum coating layer and the intermetallic compound layer and the second coated portion was not formed.

According to the type of the exposed portion shown in Table 7, the aluminum coating layer and the intermetallic compound layer formed on both surfaces were respectively removed in the exposed portion to expose the base steel sheet.

[Table 7]

| No. | Coated steel sheet 1 Tensile strength after hot press forming (MPa) | Thick-ness (mm) | Coated steel sheet 2 Tensile strength after hot press forming (MPa) | Thick-ness (mm) | End portion | Coated steel sheet 1 Type of ex-posed portion | Type of second coated portion | Distance from end edge of coated steel sheet to second coated portion (mm) | Width of sec-ond coated portion (mm) | Dis-tance from first coated portion end edge to second coated portion (mm) | Width of second coated portion/(width of second coated portion+width of ex-posed portion)×100 (%) | Coated steel sheet 2 Type of ex-posed portion | Type of second coated portion | Distance from end edge of coated steel sheet to second coated portion (mm) | Width of sec-ond coated portion (mm) | Dis-tance from first coated portion end edge to second coated portion (mm) | Width of second coated portion/(width of second coated portion+width of ex-posed portion)×100 (%) | Remarks |
|---|---|---|---|---|---|---|---|---|---|---|---|---|---|---|---|---|---|---|
| 1 | 1500 | 1.8 | 1500 | 1.2 | First surface | A | - | - | - | 1.50 | 0 | A | - | - | - | 1.50 | 0 | Compara-tive Exam-ple |
|  |  |  |  |  | Second surface |  | - | - | - | 1.50 | 0 |  | - | - | - | 1.50 | 0 |  |
| 2 | 1800 | 1.8 | 1300 | 1.3 | First surface | A | E | 0.05 | 0.15 | 1.30 | 10.00 | A | - | - | - | 1.20 | 0.00 |  |
|  |  |  |  |  | Second surface |  | - | - |  | 1.30 | 0 |  | - | - | - | 1.20 | 0 |  |
| 3 | 1500 | 1.6 | 1300 | 1.2 | First surface | A | E | 0.05 | 0.30 | 1.05 | 21.43 | A | E | 0.05 | 0.20 | 1.30 | 12.90 |  |
|  |  |  |  |  | Second surface |  | - | - | - | 1.05 | 0 |  | - | - | - | 1.55 | 0 |  |

EP 3 812 083 A1

(continued)

| No. | Coated steel sheet 1 Tensile strength after hot press forming (MPa) | Thickness (mm) | Coated steel sheet 2 Tensile strength after hot press forming (MPa) | Thickness (mm) | End portion | Before butt welding — Coated steel sheet 1 Type of exposed portion | Type of second coated portion | Distance from end edge of coated steel sheet to second coated portion (mm) | Width of second coated portion (mm) | Distance from first coated portion end edge to second coated portion (mm) | Width of second coated portion/(width of second coated portion+ width of exposed portion) × 100 (%) | Coated steel sheet 2 Type of exposed portion | Type of second coated portion | Distance from end edge of coated steel sheet to second coated portion (mm) | Width of second coated portion (mm) | Distance from first coated portion end edge to second coated portion (mm) | Width of second coated portion/(width of second coated portion+ width of exposed portion) × 100 (%) | Remarks |
|---|---|---|---|---|---|---|---|---|---|---|---|---|---|---|---|---|---|---|
| 4 | 1800 | 1.8 | 1800 | 1.3 | First surface | A | E | 0.05 | 0.10 | 1.05 | 8.33 | A | E | 0.05 | 0.10 | 1.20 | 7.41 | Invention Example |
| | | | | | Second surface | | - | - | - | 1.05 | 0 | | - | - | - | 1.35 | 0 | |
| 5 | 1500 | 1.8 | 1800 | 1.8 | First surface | A | E | 0.03 | 0.30 | 0.87 | 25.00 | A | E | 0.05 | 0.30 | 0.85 | 25.00 | |
| | | | | | Second surface | | - | - | - | 1.20 | 0 | | - | - | - | 1.20 | 0 | |
| 6 | 1500 | 2.0 | 1500 | 1.2 | First surface | A | E | 0.25 | 0.30 | 0.65 | 25.00 | A | E | 0.05 | 0.30 | 0.85 | 25.00 | |
| | | | | | Second surface | | - | - | - | 1.20 | 0 | | - | - | - | 1.20 | 0 | |

EP 3 812 083 A1

(continued)

| No. | Coated steel sheet 1 Tensile strength after hot press forming (MPa) | Thick-ness (mm) | Coated steel sheet 2 Tensile strength after hot press forming (MPa) | Thick-ness (mm) | End portion | Before butt welding — Coated steel sheet 1 Type of ex-posed portion | Type of second coated portion | Distance from end edge of coated steel sheet to second coated portion (mm) | Width of sec-ond coated portion (mm) | Dis-tance from first coated portion end edge to second coated portion (mm) | Width of second coated portion/(width of second coated portion+ width of ex-posed portion) × 100 (%) | Coated steel sheet 2 Type of ex-posed portion | Type of second coated portion | Distance from end edge of coated steel sheet to second coated portion (mm) | Width of sec-ond coated portion (mm) | Dis-tance from first coated portion end edge to second coated portion (mm) | Width of second coated portion/ (width of second coated portion+ width of ex-posed portion) × 100 (%) | Remarks |
|---|---|---|---|---|---|---|---|---|---|---|---|---|---|---|---|---|---|---|
| 7 | 1800 | 1.8 | 1300 | 1.3 | First surface | A | E | 0.05 | 0.30 | 0.85 | 25.00 | A | E | 0.2 | 0.30 | 1.10 | 18.75 | |
| | | | | | Second surface | | - | - | - | 1.20 | 0 | | - | - | - | 1.20 | 0 | |
| 8 | 1800 | 1.8 | 1800 | 1.3 | First surface | A | E | 0.05 | 0.30 | 0.85 | 25.00 | A | E | 0.05 | 0.30 | 0.85 | 25.00 | |
| | | | | | Second surface | | E | 0.05 | 0.30 | 0.85 | 25.00 | | - | - | | 1.20 | 0 | |
| 9 | 1800 | 1.8 | 1300 | 1.3 | First surface | A | E | 0.05 | 0.30 | 0.85 | 25.00 | A | E | 0.05 | 0.30 | 0.85 | 25.00 | |
| | | | | | Second surface | | E | | 0.05 | 1.00 | 4.76 | | E | | 0.30 | 0.90 | 25.00 | |

EP 3 812 083 A1

The exposed portion was formed by cutting with an end mill. In addition, the exposed portion was formed over an entire length of 10 cm on only one side of the four sides of the coated steel sheet on both surfaces of the end portion of the coated steel sheet excluding the region including the end edge of the coated steel sheet. The width of the exposed portion is a total of the distance from the end edge of the coated steel sheet to the second coated portion and the distance from the end edge of the first coated portion to the second coated portion. In No. 1 shown in Table 7, the second coated portion is not present. That is, the numerical value of the column "Distance from first coated portion end edge to second coated portion (mm)" in No. 1 represents the distance from the end edge to the end edge of the end portion of the coated steel sheet in the region excluding the first coated portion.

At the same time as formation of the exposed portions, the second coated portion was formed in a region interposed between the two exposed portions while being separated from the end edge of the coated steel sheet according to the type of the second coated portion shown in Table 7. The second coated portion was formed so as to have the width of the second coated portion shown in Table 7.

Next, as shown in Table 7, two coated steel sheets (steel sheets for butt welding) (coated steel sheet 1 and coated steel sheet 2) were prepared, the end surfaces of the end portions of the welding scheduled portions were butted, and butt welding is performed by laser welding to prepare a tailored blank. The welding was adjusted so as to perform penetration welding under the conditions of a laser output of 3.0 kW to 5.0 kW and a welding rate of 4.0 m/min to 7.0 m/min.

The prepared tailored blank was held in a furnace heated to 920°C for 4 minutes. Then, the tailored blank was formed with a water-cooled die and quenched to manufacture a flat hot stamping-formed product.

Here, the Vickers hardness of the weld metal for joining the coated steel sheet 1 and the coated steel sheet 2 was HV 450 or higher.

<Evaluation>

(Fatigue Strength Test and Joint Static Strength)

The test was performed in the same manner as in Example 1 in the first embodiment. The test results are shown in Table 8.

[Table 8]

| No. | After butt welding and hot press forming | | | | | Remarks |
|---|---|---|---|---|---|---|
| | Al concentration of first weld metal portion (mass%) | Sheet thickness ratio | Static strength (MPa) | Fatigue limit (MPa) | Corrosion resistance after painting | |
| 1 | 0.03 | 0.97 | 1541 | 420 | D | Comparative Example |
| 2 | 0.12 | 0.97 | 1330 | 415 | A | Invention Example |
| 3 | 0.26 | 0.94 | 1318 | 415 | A | |
| 4 | 0.12 | 0.95 | 1841 | 420 | A | |
| 5 | 0.23 | 0.98 | 1538 | 452 | A | |
| 6 | 0.20 | 0.97 | 1521 | 425 | A | |
| 7 | 0.25 | 0.93 | 1320 | 435 | A | |
| 8 | 0.43 | 0.97 | 1852 | 440 | A | |
| 9 | 0.39 | 0.91 | 1365 | 425 | A | |

(Test for Corrosion resistance after painting)

The test was performed in the same manner as in Example 1 in the first embodiment. The determination criterion are the same as those in Example 1.

The coated steel sheets in Tables 6 and 7 are steel sheets obtained by coating the base steel sheet with aluminum.

In Table 7, the notations of "A", "B", and "C" in the column of type of exposed portion and the notations of "-" and "E" in the column of type of second coated portion are the same as in Example 1.

In Table 7, "Distance from coated steel sheet end edge to second coated portion", "Width of second coated portion", and "Distance from first coated portion end edge to second coated portion" were measured by the methods described above. The numerical value in "Distance from first coated portion end edge to second coated portion" on the surface on which the second coated portion is not formed represents the distance from the first coated portion end edge to the coated steel sheet end edge.

In Table 8, the numerical value in the column of sheet thickness ratio is a value obtained by calculating the sheet thickness ratio of the base steel sheet from Expression (29) at the position corresponding to the first exposed portion of the coated steel sheet and the position corresponding to the first coated portion. Each thickness is measured by the method described above.

$$\text{Sheet thickness ratio} = (\text{thickness of base steel sheet in first exposed portion: } t_b)/(\text{thickness of base steel sheet in portions other than end portion of coated steel sheet: } t_a) \ldots (29)$$

In Table 8, the concentration of aluminum of the first weld metal portion is a value measured according to the method described above.

As shown in Table 8, No. 1 in which both the aluminum coating layer and the intermetallic compound layer are removed and the second coated portion is not provided has a low aluminum concentration in the first weld metal portion, and thus the corrosion resistance after painting is inferior.

On the other hand, as shown in Table 8, in Nos. 2 to 9 using steel sheets in which both the aluminum coating layer and the intermetallic compound layer are removed to form exposed portions and further, the second coated portion is formed to be interposed between two exposed portions in the vicinity of the end edge of the coated steel sheet, both fatigue strength and corrosion resistance after painting are excellent.

(Third Embodiment)

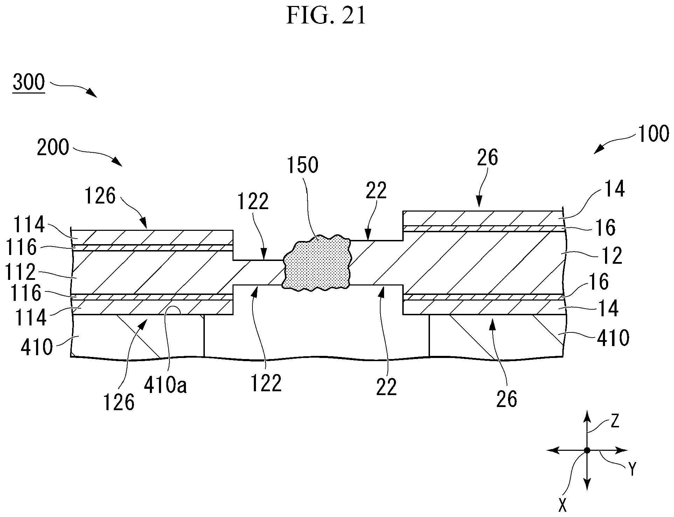

Next, a third embodiment of the present disclosure will be described with reference to FIGS. 21 to 33. However, the same portions as those in the above embodiment will be denoted by the same reference numerals, and a description thereof will be omitted. Only different points will be described.

<Tailored Blank>

As shown in FIG. 21, a tailored blank 300 manufactured by the method of manufacturing a tailored blank according to the present disclosure is configured by butt-welding two steel sheets 100 and 200 with a first weld metal portion 150 interposed between the steel sheets 100 and 200.

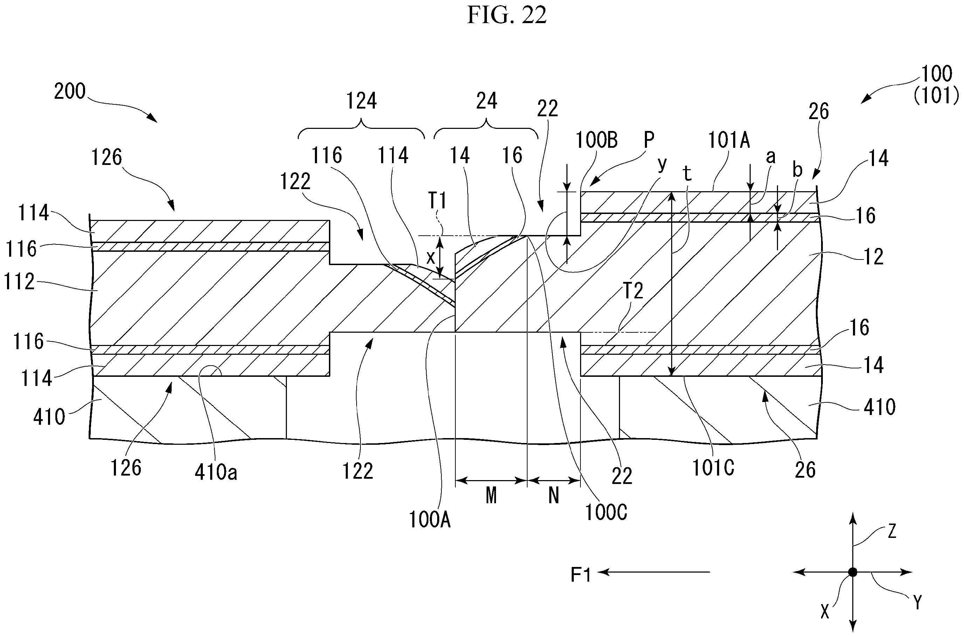

Hereinafter, first, the structure of the steel sheet 100 before being butt-welded shown in FIG. 22 will be described.

<Steel Sheet>

The embodiment of the steel sheet 100 of the present disclosure is the same as the embodiment of the steel sheet 100 in the first embodiment.

An aluminum coating layer 14 is provided on a first surface of a base steel sheet 12 and a second surface opposite to the first surface, respectively. An intermetallic compound layer 16 is formed between the first surface of the base steel sheet 12 and the aluminum coating layer 14 provided on the first surface. Further, the intermetallic compound layer 16 is formed between the second surface opposite to the first surface of the base steel sheet 12 and the aluminum coating layer 14 provided on the second surface.

The thickness per one side (one layer) of the base steel sheet 12 in the aluminum coating layer 14 is denoted by a ($\mu$m) (micrometer). The thickness per one side (one layer) of the base steel sheet 12 in the intermetallic compound layer 16 is denoted by b ($\mu$m).

In the steel sheet 100 configured as described above, with reference to FIG. 22, a first exposed portion 22 in which the base steel sheet 12 is exposed on both surfaces of the end portion located around the steel sheet 100. A first coated portion 26 in which the intermetallic compound layer 16 and the aluminum coating layer 14 are provided on the base steel sheet 12 is provided on a side closer to the center portion of the steel sheet 100 than to the first exposed portion 22. On at least one surface of the end portion located around the steel sheet 100, a second coated portion 24 in which the intermetallic compound layer 16 and the aluminum coating layer 14 remain is provided on a side closer to the end edge 100A of the steel sheet 100 than to the first exposed portion 22.

In this example, the aluminum coating layer 14 and the intermetallic compound layer 16 remain in the second coated portion 24. In this example, although the second coated portion 24 is formed on one surface of the end portion of the steel sheet 100, the second coated portion 24 may be formed on each of both surfaces of the end portions of the steel sheet 100.

Referring to FIG. 22, the steel sheet 200 has a base steel sheet 112, an aluminum coating layer 114, and an intermetallic compound layer 116 similarly configured as the base steel sheet 12, the aluminum coating layer 14, and the intermetallic compound layer 16 of the steel sheet 100.

In this example, only the thickness of the base steel sheet 112 is different from the thickness of the base steel sheet 12. The base steel sheet 112 and the base steel sheet 12 may have the same thickness.

A first exposed portion 122 in which the base steel sheet 112 is exposed is formed on both surfaces of the end portion located around the steel sheet 200. On one surface of the end portion located around the steel sheet 200, a second coated portion 124 in which the aluminum coating layer 114 and the intermetallic compound layer 116 remain is provided on the end edge side of the steel sheet 200 from the first exposed portion 122. A first coated portion 126 in which the intermetallic compound layer 116 and the aluminum coating layer 114 are provided on the base steel sheet 112 is provided on the center portion side of the steel sheet 200 than to the first exposed portion 122.

<First Weld Metal Portion>

The first weld metal portion is formed by melting and solidifying the end portions of the two steel sheets when the two steel sheets are butt-welded. The concentration of aluminum contained in the first weld metal portion is preferably 0.065 mass% to 1 mass%.

<Method of Manufacturing Tailored Blank>

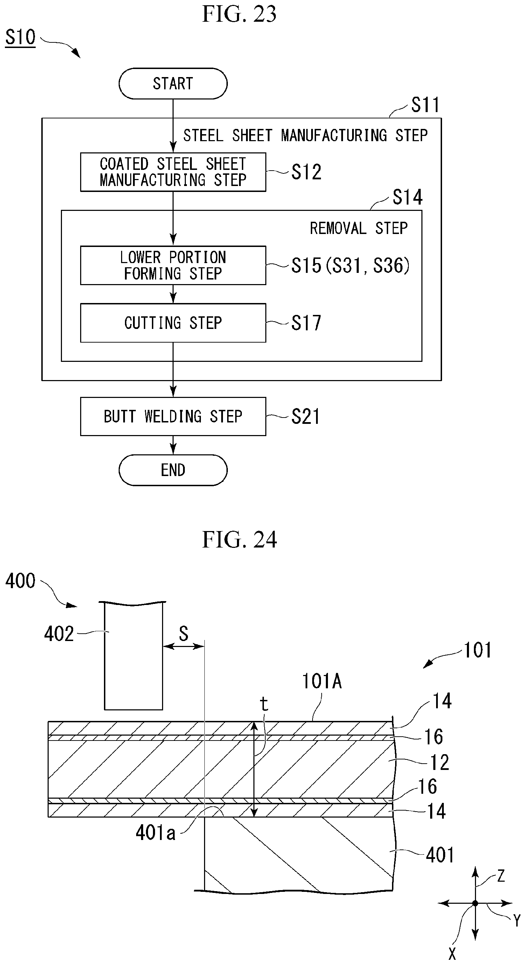

Next, a method of manufacturing a tailored blank of the present disclosure including forming the first exposed portions 22 and 122 and the second coated portions 24 and 124 on the coated steel sheet to manufacture steel sheets 100 and 200, and further butt-welding the steel sheets 100 and 200 together to manufacture the tailored blank 300 will be described. FIG. 23 is a flow chart showing a method of manufacturing a tailored blank S10 according to the present disclosure.

In the present disclosure, the method of manufacturing a tailored blank S10 using two steel sheets for butt welding of the present disclosure will be described. However, the number of steel sheets for welding used in the method of manufacturing a tailored blank may be 3 or more. Then, of the two or more welding steel sheets, at least one steel sheet manufactured by the method of manufacturing a steel sheet according to the present disclosure may be used.

First, in the method of manufacturing a steel sheet (the method of manufacturing a steel sheet for butt welding) (Step S11 in FIG. 23), a coated steel sheet manufacturing step S12 is performed. In the coated steel sheet manufacturing step S12, a coated steel sheet 101 shown in FIG. 24 is manufactured. In the coated steel sheet manufacturing step S12, by a known method, the coated steel sheet 101 in which an intermetallic compound layer 16 and an aluminum coating layer 14 are provided in order from a base steel sheet 12 side is manufactured on each surface of the base steel sheet 12. In the coated steel sheet 101, a first exposed portion 22 and the second coated portion 24 may not be formed on the above-described steel sheet 100.

Here, the thickness of the coated steel sheet 101 is denoted by t μm. The thickness of the coated steel sheet 101 is equal to the thickness in the first coated portion 26 of the steel sheet 100 shown in FIG. 22.

When the coated steel sheet manufacturing step S12 is completed, the process proceeds to a removal step S14 of Step S14. The removal step S14 is a step of mechanically removing the aluminum coating layer 14 and the intermetallic compound layer 16.

Next, in the removal step S14, a lower portion forming step S15 is performed.

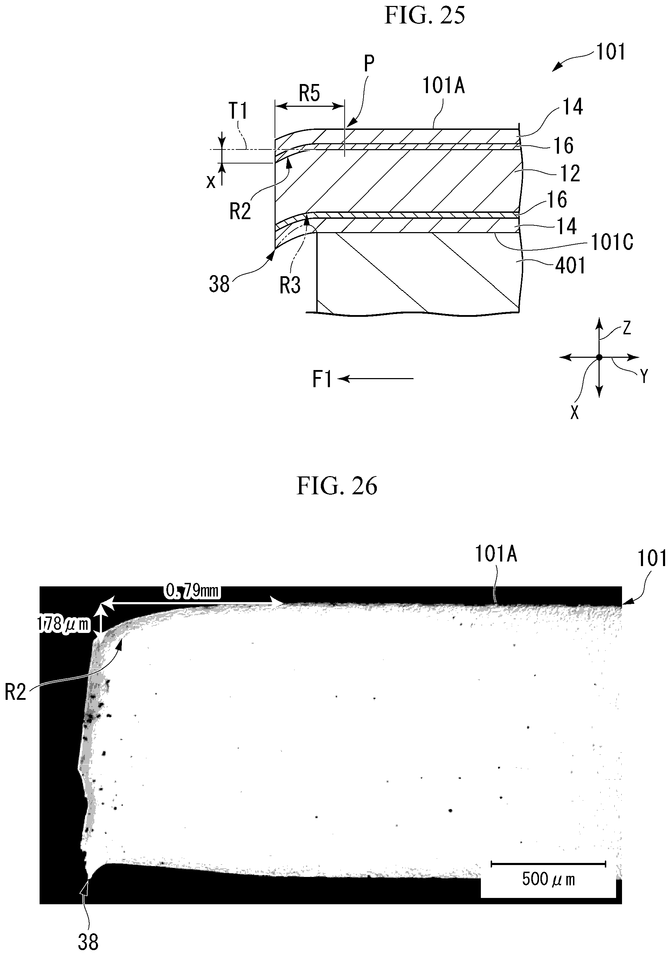

In the lower portion forming step S15, as shown in FIG. 25, a lower region R2 is formed on the surface of the base steel sheet 12 of the coated steel sheet 101 by cutting the coated steel sheet 101 and deforming a part of the coated steel sheet 101. The lower region R2 is formed at the end edge of the base steel sheet 12.

Here, the first direction F1 is defined. The first direction F1 is a direction which is perpendicular to the thickness direction of the coated steel sheet 101 and is a direction from the center portion of the coated steel sheet 101 to one end edge of the coated steel sheet 101 in plan view. This first direction F1 corresponds to the first direction F1 of the steel sheet 100 when the coated steel sheet 101 is processed into the steel sheet 100. The lower region R2 referred to here is a region of the aluminum coating layer 14 and the intermetallic compound layer 16 located on the inner side of the base steel sheet 12 from a virtual plane T1 in which the surface of a portion of the base steel sheet 12, which is not deformed at the time of cutting, (for example, the first exposed portion 22) in the first direction F1 extends in the thickness direction. It should be noted that the virtual plane T1 becomes a virtual line when viewed from a cross section perpendicular to the thickness direction.

In this example, in the lower portion forming step S15, the coated steel sheet 101 is cut by shearing which is a mechanical method, and the lower region R2 is formed in the coated steel sheet 101. The lower region R2 may be formed on the coated steel sheet 101 using blanking (punching) instead of shearing. The mechanical method mentioned here means a method in which a tool is directly brought into contact with the coated steel sheet 101 and the coated steel sheet 101 is processed with the contacted tool.

In the lower portion forming step S15, specifically, as shown in FIG. 24, the coated steel sheet 101 is placed on an upper surface 401a of a support table 401 of a shearing device 400. The upper surface 401a is flat and is disposed along a horizontal plane. At this time, the end portion of the coated steel sheet 101 is disposed so as to protrude from the support table 401.

A blade portion 402 of the shearing device 400 is disposed above the upper surface 401a of the support table 401 with a certain space S from the support table 401 along the upper surface 401a.

When the blade portion 402 is moved downward and the coated steel sheet 101 is cut in the thickness direction of the coated steel sheet 101 as shown in FIG. 25, the end portion of the coated steel sheet 101 is cut. At this time, a droop lower region R2 is formed on a first surface 101A of the coated steel sheet 101. A protrusion portion 38 with burring is formed on a lower surface of the coated steel sheet 101.

Here, the deepest lower portion depth of the lower region R2 is denoted by x ($\mu$m). The lower portion depth x represents the distance (the maximum value) from the virtual plane T1 to the surface of the base steel sheet 12 in the lower region R2. The lower portion depth x can be measured with a known laser profile meter or the like.

A cross-sectional image showing an example of a state in which the lower region R2 is formed on the coated steel sheet 101 of the present disclosure is shown in FIG. 26.

The lower region R2 is formed in a range of 0.79 mm from the end edge of the coated steel sheet 101 along the first surface 101 A. The lower portion depth x is 178 $\mu$m.

By adjusting the material of the coated steel sheet 101, the space S, and the like, while forming the protrusion portion 38, a lower region R3 may be formed by deforming the lower surface of the coated steel sheet 101 as shown by the two-dot chain line in FIG. 25. The two-dot chain line represents the shape of the lower surface of the coated steel sheet 101.

In this case, in the lower portion forming step S15, the lower region R2 is formed on the upper surface of the coated steel sheet 101, and a lower region R3 is formed on the lower surface, respectively. For example, it is considered that the lower region R3 is formed by drawing the material forming the coated steel sheet 101 toward the protrusion portion 38 due to the rigidity of the coated steel sheet 101 when the protrusion portion 38 is formed.

When the lower portion forming step S15 is completed, the process proceeds to Step S17.

Next, in the cutting step (elimination step) S17, the coated steel sheet 101 is cut using a mechanical cutting method to form the first exposed portion 22 and the second coated portion 24, and thus the steel sheet 100 is manufactured. In the present disclosure, an end mill is used for cutting, and at least the aluminum coating layer 14 and the intermetallic compound layer 16 present on the outer side of the coated steel sheet 101 in the thickness direction from the virtual plane T1 is removed by cutting with the end mill. The coated steel sheet 101 is cut by bringing the end mill blade rotating around the axis line into direct contact with the coated steel sheet 101.

In the cutting S17, in addition to the end mill, for example, a bite, an end mill, a metal saw, or the like is used. In the elimination step, the aluminum coating layer 14 and the intermetallic compound layer 16 may be removed by grinding. A grinding stone, a grinder, and the like are used for grinding.

In the cutting step S17, a region R5 from the end edge of the coated steel sheet 101 to the exceeding position P larger than the lower region R2 is cut in the direction opposite to the first direction F1. The exceeding position P is a position that becomes the end edge 100B of the first coated portion 26 in the subsequent step, and a range between the lower region R2 and the exceeding position P becomes the first exposed portion 22. At this time, the depth of cutting the region R5 of the coated steel sheet 101 is constant. Thus, the production cost required for cutting can be suppressed. The aluminum coating layer 14 and the intermetallic compound layer 16 on the lower region R2 in the region R5 may not be cut.

The depth at which the coated steel sheet 101 is cut is less than the total value of the thickness a of the aluminum coating layer 14, the thickness b of the intermetallic compound layer 16, and the lower portion depth x. That is, cutting is performed such that at least the intermetallic compound layer 16 and the aluminum coating layer 14 located in the lower region R2 partially remain.

As shown in FIG. 22, in the cutting step S14, the depth (length) of the coated steel sheet 101 in the thickness direction for cutting the aluminum coating layer 14 and the intermetallic compound layer 16 per one surface of the coated steel sheet 101 is denoted by y $\mu$m.

By the above cutting, as shown in FIG. 22, the base steel sheet 12 is exposed to the outside and a first exposed portion 22 is formed between the lower region R2 and the exceeding position P in the first direction F1. A second coated portion 24 in which the intermetallic compound layer 16 and the aluminum coating layer 14 remain is formed on the lower region R2 on the side closer to the end edge of the coated steel sheet 101 than to the first exposed portion 22. In the first direction F1, on at least one surface of the base steel sheet 12, the first coated portion 26, the first exposed portion 22, the second coated portion 24, and the end edge of the coated steel sheet 101 are provided such that the first coated portion 26, the first exposed portion 22, the second coated portion 24, and the end edge of the coated steel sheet 101 are disposed this order. In the first direction FI, on the other surface of the base steel sheet 12, at least the first coated portion 26, the first exposed portion 22, and the end edge of the coated steel sheet 101 are provided such that the first coated portion 26, the first exposed portion 22, and the end edge of the coated steel sheet 101 are disposed this order.

The steel sheet 100 is manufactured by forming the first exposed portion 22 and the second coated portion 24 on the coated steel sheet 101 by the above cutting.

In the first direction, the first coated portion 26, the first exposed portion 22, the second coated portion 24, and the end edge of the coated steel sheet may be disposed in this order on the other surface of the base steel sheet 12.

In the steel sheet 100, the thickness of the base steel sheet 12 corresponding to the portion in which the first exposed portion 22 and the second coated portion 24 are formed may be thinner than the thickness of the base steel sheet 12 corresponding to a portion in which the first exposed portion 22 and the second coated portion 24 are not formed.

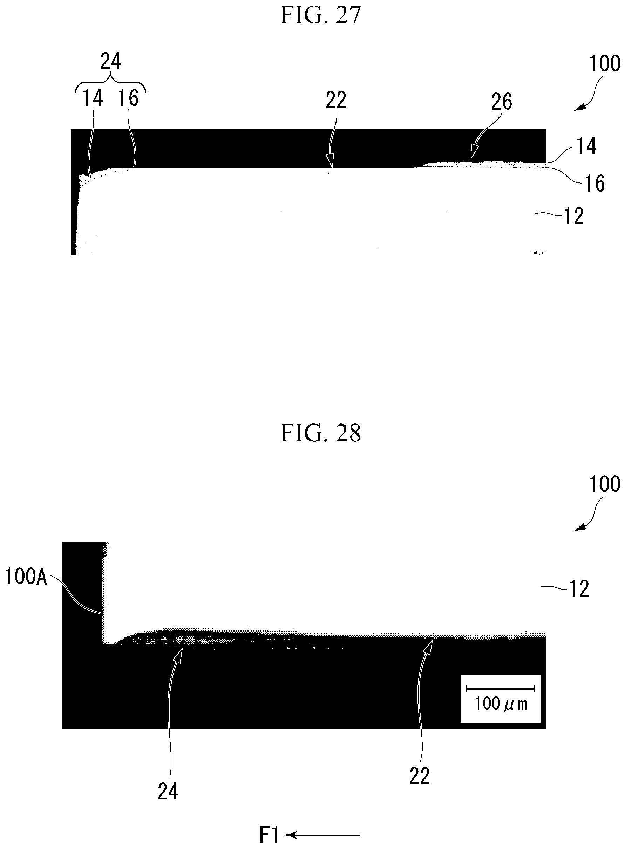

A cross-sectional image showing an example of a state in which the first exposed portion 22 and the second coated portion 24 are formed on the steel sheet 100 of the present disclosure is shown in FIG. 27.

In this example, as shown in FIG. 22, the first exposed portion 22 is also formed on a second surface 101C opposite to the first surface 101A of the steel sheet 100.

Here, the distance from the end edge 100A to the end edge 100C of the steel sheet 100 (the width of the second coated portion 24) is denoted by M $\mu$m. The distance between the first coated portion 26 and the second coated portion 24 (the width of the first exposed portion 22) is denoted by N $\mu$m.

For example, when the lower portion depth x is larger than the thickness a of the aluminum coating layer 14, the aluminum coating layer 14 remains in the second coated portion 24.

That is, in a case where the aluminum coating layer 14 in the region in which the lower region R2 is not formed is tried to be removed, the first surface 101A of the coated steel sheet 101 is removed by a mechanical method in a planar manner by the thickness of the aluminum coating layer 14. In a case where the cutting depth y is larger than the thickness a of the aluminum coating layer 14, the aluminum coating layer 14 can be removed in the region in which the lower region R2 is not formed by the mechanical method. However, in the region in which the lower region R2 is formed, as compared with the region in which the lower region R2 is not formed, as a result, the position of the aluminum coating layer 14 escapes in the thickness direction by the depth of the lower region R2. Therefore, the aluminum coating layer 14 remains on the lower region R2 as described above.

At this time, it is preferable to satisfy Expressions (31) to (36).

$$9 \leq a + b < 60 \ldots (31)$$

$$2\% \leq (x/t) \leq 15\% \ldots (32)$$

$$a + b < y \ldots (33)$$

$$(y/t) \leq 7\% \ldots (34)$$

$$N \geq 200 \ldots (35)$$

$$M \leq 1300 \ldots (36)$$

Regarding Expression (31), when a value of (a + b) is 10 or more, the surface of the base steel sheet 12 is sufficiently coated and thus the corrosion resistance after painting of the base steel sheet 12 can be secured. In addition, when the value of (a + b) is less than 50, the aluminum coating layer 14 and the intermetallic compound layer 16 can be prevented from becoming too thick.

By satisfying Expression (32), the amount of aluminum contained in the second coated portion 24 can be adjusted to an appropriate range. When the ratio (x/t) between the depth of a bottom part and the sheet thickness is 2% or more, the depth x of the lower portion depth x is increased and thus the second coated portion 24 can be prevented from being disposed in the vicinity of the end edge 100B of the first coated portion 26.

By satisfying Expression (33), cutting is performed with the length y in the thickness direction larger than the total of the thickness a of the aluminum coating layer 14 and the thickness b of the intermetallic compound layer 16, and thus the first exposed portion 22 can be more reliably formed by the steel sheet 100.

By satisfying Expression (34), when the aluminum coating layer 14 or the like is cut, it is possible to prevent the steel sheet 100 from becoming too thin and reducing the strength of the steel sheet 100.

Regarding Expressions (35) and (36), a butt welding step S21 described later will be described.

In the cutting step S17, from the second surface 101C side of the coated steel sheet 101, cutting is performed while moving along a virtual plane T2 shown in FIG. 22 without changing the position of the cutting reaching point in the thickness direction on the virtual plane T2. Thus, the intermetallic compound layer 16 and the aluminum coating layer 14 formed in the lower region R3 located on the inner side in the thickness direction from the virtual plane T2 remain as the second coated portion 24. At this time, a portion of the protrusion portion 38 with burring is cut to become the second exposed portion 23.

When the cutting step S17 is performed, the steel sheet 100 in which the first exposed portion 22 and the second coated portion 24 are formed is manufactured.

That is, in the coated steel sheet 101, by partially removing the aluminum coating layer 14 and the intermetallic compound layer 16, the first exposed portion 22 in which the base steel sheet 12 is exposed, the first coated portion 26 in which the intermetallic compound layer 16 and the aluminum coating layer 14 remain on the surface of the base steel sheet 12 in order from the base steel sheet 12 side, and the second coated portion 24 in which the intermetallic compound layer 16 and the aluminum coating layer 14 remain on the surface of the base steel sheet 12 are formed. In this example, the second coated portion 24 is formed on the surface of the base steel sheet 12 such that the intermetallic compound layer 16 and the aluminum coating layer 14 remain in order from the base steel sheet 12 side.

Thus, the steel sheet 100 is manufactured.

In the steel sheet 100, in the first direction FI, the first coated portion 26, the first exposed portion 22, the second coated portion 24, and the end edge 100A of the steel sheet 100 are disposed in this order on the same plane.

A cross-sectional image showing an example of a state in which the second coated portion 24 is formed in the steel sheet 100 of the present disclosure by burring is shown in FIG. 28. The first exposed portion 22 is formed on the second coated portion 24 in a direction opposite to the first direction F1.

When the cutting step S17 is completed, the removal step S14 is completed and further, a steel sheet manufacturing step S11 is completed and the process proceeds to Step S21. In this manner, in the steel sheet manufacturing step S11, the first exposed portion 22 and the second coated portion 24 are formed using at least a mechanical method such as shearing and cutting.

In addition, similarly, the first exposed portion 22, the second coated portion 24, and the second exposed portion 23 may be formed on both surfaces of the end portion of the coated steel sheet 101.

Next, in the butt welding step S21, a steel sheet 200 is manufactured in the same step as the steel sheet manufacturing step S11.

As shown in FIG. 22, the end portions of the steel sheets 100 and 200 are disposed on an upper surface 410a of a welding table 410 in a state in which the end portions are butted together. At this time, the steel sheets 100 and 200 are disposed in a state in which the steel sheets are butted together through the end edge 100A of the steel sheet 100 having the first exposed portion 22 and the second coated portion 24 of the steel sheet 100 and the end edge of the steel sheet for butt welding 200 having the first exposed portion 122 and the second coated portion 124 of the steel sheet 200. Since the upper surface 410a of the welding table 410 is flat, the steel sheets 100 and 200 are disposed such that the lower surfaces of the steel sheets are flush with each other.

For example, the end portions of the steel sheets 100 and 200 is butt-welded using a known laser welding device (not shown). Thus, as shown in FIG. 21, the first weld metal portion 150 is formed between the steel sheets 100 and 200 to manufacture a tailored blank 300.

At this time, the welding conditions are determined such that the second coated portions 24 and 124 are melted and included in the first weld metal portion 150 during welding, and the first weld metal portion 150 does not reach the first coated portion 26 beyond the first exposed portions 22 and 122.

By satisfying above Expression (35), it is possible to prevent aluminum from being included in the portion between the first weld metal portion 150 and the first coated portion 26 by contact of the first weld metal portion 150 with the aluminum coating layers 14 and 114, and the like.

By satisfying Expression (36), the amount of aluminum contained in the portion between the first weld metal portion 150 and the first coated portion 26 is suppressed and thus the fatigue strength of a portion of the first weld metal portion 150 in the vicinity of the end edge 100B of the first coated portion 26 can be more reliably maintained.

When the second coated portion 24 is formed only in the lower region R2 formed by droop, during laser welding of the steel sheets 100 and 200, the aluminum coating layer 14 is easily melted and stirred, and an aluminum concentrated portion is hardly formed in the first weld metal portion 150. Accordingly, both the fatigue strength and the corrosion resistance after painting of the first weld metal portion 150 can be enhanced.

When the butt welding step S21 is completed, all steps of the method of manufacturing a tailored blank S10 is completed and thus a tailored blank 300 is manufactured.

The distance M in FIG. 22 is more preferably equal to or less than half of the distance between the end edge 100A of the steel sheet 100 and the first coated portion 26. That is, it is more preferable that the second coated portion 24 is disposed only on a side closer to the end edge 100A than to a middle position between the end edge 100A of the steel sheet 100 and the end edge 100B of the first coated portion 26, and the first exposed portion 22 is formed on sides closer to the first coated portion 26 than to the middle position to expose the base steel sheet 12.

With such a configuration, it is possible to more reliably prevent aluminum from being mixed in the portion between the first weld metal portion 150 and the first coated portion 26 by contact of the first weld metal portion 150 with the aluminum coating layers 14 and 114 and the like.

As described above, according to the method of manufacturing a steel sheet S11 in the present disclosure, in the steel sheet 100, the first exposed portion 22 is formed in the end portion and the second coated portion 24 is formed on the side closer to the end edge 100A of the steel sheet 100 than to the first exposed portion 22 using at least a mechanical method. Therefore, for the same reason as the steel sheet 100 of the first embodiment, it is possible to suppress deterioration in fatigue strength while maintaining the corrosion resistance after painting of the first weld metal portion 150.

Further, by forming the first exposed portion 22 and the second coated portion 24 using at least a mechanical method in the mechanical removal step, it is possible to effectively cut the aluminum coating layer 14 and the intermetallic compound layer 16 at a time.

In the method of manufacturing a steel sheet S11 of the present disclosure, a mechanical method may not be used.

The mechanical method used in steel sheet manufacturing step S11 includes cutting. Therefore, the step of forming the lower region R2 on the coated steel sheet 101 or cutting the coated steel sheet 101 can be efficiently performed.

In the mechanical removal step, the cutting step S17 is performed. In the cutting step S17, the first exposed portion 22 and the second coated portion 24 can be easily formed by removing the aluminum coating layer 14 and the intermetallic compound layer 16 by cutting.

In the lower portion forming step S15, by forming the lower region R2 and the lower region R3 at the same time, a plurality of the lower regions R2 and R3 can be effectively formed.

In addition, according to the method of manufacturing a tailored blank S10 in the present disclosure, the method of manufacturing a tailored blank S10 can be performed using the method of manufacturing a steel sheet S11 capable of maintaining fatigue strength while maintaining the corrosion resistance after painting of the first weld metal portion 150.

The concentration of aluminum contained in the first weld metal portion 150 is 0.065 mass% to 1 mass%. When the concentration of aluminum is within this range, excellent corrosion resistance after painting can be effectively obtained and fracture in the first weld metal portion 150 is suppressed.

In addition, deterioration in the fatigue strength of the first weld metal portion 150 is suppressed. From this point, the upper limit of the concentration of aluminum contained in the first weld metal portion 150 is preferably 1 mass%, more preferably 0.8 mass%, and still more preferably 0.4 mass%. The lower limit of the concentration of aluminum contained in the first weld metal portion 150 is preferably 0.08 mass% and more preferably 0.1 mass%.

In the method of manufacturing a steel sheet of the present disclosure, the first exposed portion 22 and the second coated portion 24 may be formed as follows.

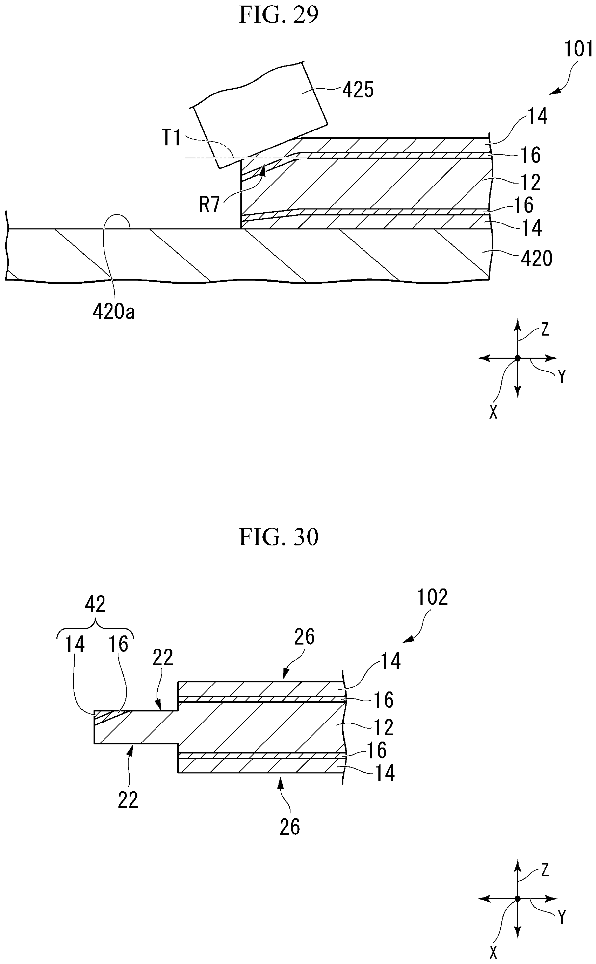

In the lower portion forming step S31 shown in FIG. 23, as shown in FIG. 29, the coated steel sheet 101 is placed on an upper surface 420a of a support table 420. Using a mechanical method of compressing the end portion of the coated steel sheet 101 in the thickness direction of the coated steel sheet 101 with a pressing member 425 such as a pressure roll, a lower region R7 is formed on the upper surface of the coated steel sheet 101. The lower region R7 is formed at the end edge of the coated steel sheet 101. The direction of compressing the steel sheet by the pressing member 425 may be inclined with respect to the thickness direction.

In the lower region R7, the deepest recessed portion is located at the end edge of the coated steel sheet 101.

Next, when the cutting step S17 is performed, as shown in FIG. 30, a steel sheet 102 in which a first exposed portion 22, a second exposed portion 23, and a second coated portion 42 are formed is manufactured.

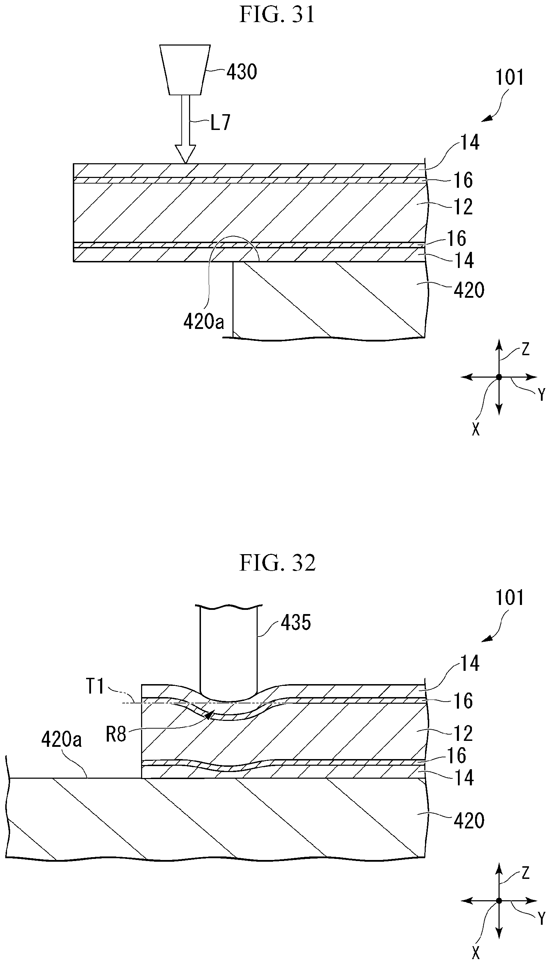

In a lower portion forming step S36 shown in FIG. 23, as shown in FIG. 31, the coated steel sheet 101 is placed on the upper surface 420a of the support table 420. At this time, the end portion of the coated steel sheet 101 is disposed so as to protrude from the support table 420.

In this example, a laser processing method that is not a mechanical method is used. Laser light L7 is emitted to the end portion of the coated steel sheet 101 from a laser processing apparatus 430 in the thickness direction of the coated steel sheet 101. Thus, the end portion of the coated steel sheet 101 is cut, but at this point, a lower region is not yet formed in the coated steel sheet 101.

Further, as shown in FIG. 32, using a mechanical method of compressing the end portion of the coated steel sheet 101 in the thickness direction of the coated steel sheet 101 with a pressing member 435 such as a pressure roll, a lower region R8 is formed on the upper surface of the coated steel sheet 101 including the end edge. In the lower region R8, the deepest recessed portion is separated from the end edge of the coated steel sheet 101. Hereinafter, such a method of forming the lower region is referred to as a partial indentation method.

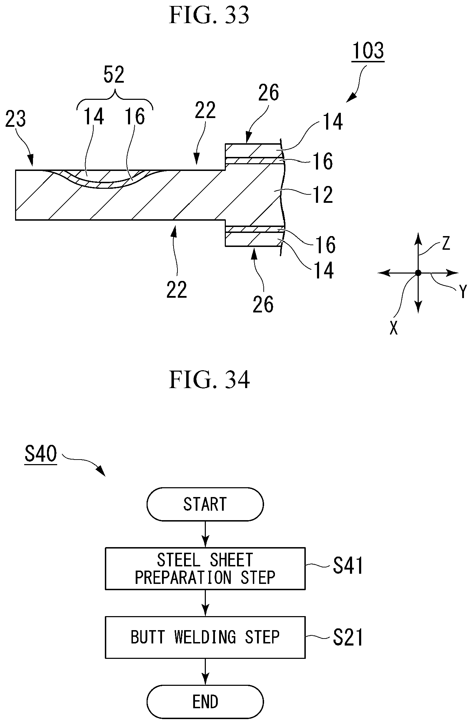

Next, when the cutting step S17 is performed, as shown in FIG. 33, a steel sheet 103 in which a first exposed portion 22, a second exposed portion 23, and a second coated portion 52 are formed is manufactured.

As shown in FIG. 34, in a method of manufacturing a tailored blank S40 of the present disclosure, a steel sheet preparation step S41 of obtaining a steel sheet for butt welding 100 by purchasing the steel sheet 100 without manufacturing the steel sheet 100 may be performed. In this case, the butt welding step S21 is performed using the steel sheet 100 obtained in the steel sheet preparation step S41.

In this case, in the method of manufacturing a tailored blank, at least two steel sheets of the present disclosure are butt-welded. Then, at least two steel sheet portions are connected to each other through a first weld metal portion to manufacture a tailored blank.

At this time, it is preferable that the end edges having the second coated portion 24 of the steel sheets 100 are butt-welded and the entire second coated portion 24 melted during the butt welding is incorporated in the first weld metal portion.

<Method of Manufacturing Hot Stamped Product>

In a method of manufacturing a hot stamped product of the present disclosure, the tailored blank 300 manufactured by the method of manufacturing a tailored blank S10 is hot press-formed to manufacture a hot stamped product (hot-stamping formed product).

<Method of Manufacturing Steel Pipe>

In a method of manufacturing a steel pipe of the present disclosure, the end portions of an open tube formed using the steel sheet 100 manufactured by the method of manufacturing a steel sheet S11 are welded to manufacture a steel pipe.

In the method of manufacturing a steel pipe of the present disclosure, a method of manufacturing a steel pipe may be performed using a steel sheet 100 obtained by purchasing the steel sheet 100 without manufacturing the steel sheet 100.

In this case, in the method of manufacturing a steel pipe, the steel sheet 100 is formed into an open tubular shape such that two end portions in the circumferential direction face each other, and the second coated portion 24 is disposed in at least one of the two end portions. Then, the two end portions of the steel sheet 100 are butt-welded and the two end portions are connected to each other through the third weld metal portion.

At this time, it is preferable that the entire second coated portion 24 melted during the butt welding is incorporated in the third weld metal portion.

<Method of Manufacturing Hollow Hot Stamped Product>

In a method of manufacturing a hollow hot stamped product of the present disclosure, a steel pipe manufactured by the method of manufacturing a steel pipe is quenched to manufacture a hollow hot stamped product (hollow hot-stamping formed product).

<Examples>

Examples of the third embodiment of the present disclosure will be illustrated below, but the present disclosure is not limited to the following examples.

<Example 3>

First, the coated steel sheet was cut using the base steel sheet having the chemical composition shown in Table 2 under the conditions shown in steel sheets 1 to 7 shown in Table 9.

Table 9

| Steel sheet | Tensile strength after hot press forming | Thickness of coated steel sheet | Total thickness of both layers | Specific amount of cutting of coated steel sheet | Lower portion depth | Ratio between lower portion depth and sheet thickness | Width of lower region | Distance from deepest part of lower region and end edge of coated steel sheet | Distance | Remarks |
|---|---|---|---|---|---|---|---|---|---|---|
| | | t | a + b | | x | (x/t) | | | N | |
| | MPa | μm | μm | | μm | % | μm | μm | μm | |
| 1 | 1300 | 1200 | 30 | Coated steel sheet was cut by laser processing. | 0 | 0.0 | 0 | - | - | Comparative Example |
| 2 | 1300 | 1200 | 30 | Coated steel sheet was cut by shearing. | 30 | 2.5 | 300 | 0 | 1200 | Invention Example |
| 3 | 1300 | 1200 | 30 | Coated steel sheet was cut by shearing. | 60 | 5.0 | 500 | 0 | 1000 | Invention Example |
| 4 | 1300 | 1200 | 30 | Coated steel sheet was cut by shearing. | 150 | 12.5 | 700 | 0 | 800 | Invention Example |
| 5 | 1500 | 1600 | 30 | Coated steel sheet was cut by shearing. | 80 | 5.0 | 500 | 0 | 1000 | Invention Example |
| 6 | 1800 | 1800 | 30 | Coated steel sheet was cut by shearing. | 90 | 5.0 | 500 | 0 | 1000 | Invention Example |
| 7 | 1300 | 1200 | 30 | Coated steel sheet was cut by laser processing and partial indentation method was performed. | 60 | 5.0 | 1000 | 500 | 500 | Invention Example |

In Table 9, for the steel sheets 1 to 7, the tensile strength after hot press forming (MPa), the thickness t of the coated steel sheet ($\mu$m), the total thickness of both layers (a + b) ($\mu$m), the specific amount of cutting of the coated steel sheet, the lower portion depth x ($\mu$m), the ratio (x/t) between the bottom part depth and the sheet thickness according to Expression (32), the width of lower region ($\mu$m), and the distance N ($\mu$m) between the deepest part of the lower region and the end edge of the coated steel sheet are respectively shown.

In each of the steel sheets 1 to 7, the length of the aluminum coating layer and intermetallic compound layer cut from the end edge of the coated steel sheet (the value of (M + N) in FIG. 22) is 1500 $\mu$m.

The tensile strength after hot press forming of the steel sheets 1 to 4 and 7 is 1300 MPa. For example, the amount of Al of the steel sheets 1 to 4 and 7 is 0.02% in Table 2. The tensile strength of the steel sheet 5 is 1500 MPa and the tensile strength of the steel sheet 6 is 1800 MPa.

The steel sheets 1 to 4 and 7 each have a thickness t of 1200 $\mu$m. The thickness t of the steel sheet 5 is 1600 $\mu$m and the thickness t of the steel sheet 6 is 1800 $\mu$m.

The total thickness of both layers means a total of the thickness of the aluminum coating layer and the thickness of the intermetallic compound layer. The total thickness of both layers in each of the steel sheets 1 to 7 is 30 $\mu$m.

The specific amount of cutting the coated steel sheet represents the specific amount of processing the steel sheets 1 to 7.

In the steel sheet 1, the coated steel sheet is cut by laser processing, but a lower region is not formed by a partial indentation method or the like. Further, the steel sheet 1 has no first exposed portion 22 formed by laser processing. In the steel sheets 2 to 6, the coated steel sheet was cut by shearing. In the steel sheet 7, the coated steel sheet was cut by laser processing and then a lower region was formed by a partial indentation method.

In the steel sheet 1, since the lower region is not formed, the lower portion depth x is 0 $\mu$m.

The lower portion depths x of the steel sheets 2 to 7 are respectively 30 $\mu$m, 60 $\mu$m, 150 $\mu$m, 80 $\mu$m, 90 $\mu$m, and 60 $\mu$m.

Thus, the ratios (x/t) between the bottom part depth and the sheet thickness of the steel sheets 2 to 7 by Expression (32) are respectively 0.0%, 2.5%, 5.0%, 12.5%, 5.0%, 5.0%, and 5.0%.

In the steel sheet 1, since the lower region is not formed, the width of the lower region is 0 $\mu$m.

The widths of the lower regions in the steel sheets 2 to 7 are respectively 300 $\mu$m, 500 $\mu$m, 700 $\mu$m, 500 $\mu$m, 500 $\mu$m, and 1000 $\mu$m.

In the steel sheet 1, since the lower region is not formed, there is no value for the distance between the deepest part of the lower region and the end edge of the coated steel sheet.

In the steel sheets 2 to 6, since the lower region is formed by shearing, the deepest part of the lower region is located at the end edge of the coated steel sheet. Therefore, each distance between the deepest part of the lower region and the end edge of the coated steel sheet is 0 $\mu$m.

In the steel sheet 7, the distance is 500 $\mu$m.

The distance N when the aluminum coating layer and the intermetallic compound layer are cut as described above means the distance between the end edge 100B of the first coated portion 26 and the second coated portion 24. At this point, since both layers were not yet cut, the distance N when both the layers were cut by 1500 $\mu$m as scheduled was obtained.

In the steel sheet 1, since the first exposed portion 22 and the lower region are not formed, there is no value for the distance N.

In the steel sheets 2 to 6, since the lower region is formed by shearing, the width of the lower region is the value of the distance M. Therefore, the distance N is a value obtained by subtracting the distance M from 1500 $\mu$m. Accordingly, the distances N from the steel sheets 2 to 6 are respectively 1200 $\mu$m, 1000 $\mu$m, 800 $\mu$m, 1000 $\mu$m, and 1000 $\mu$m.

In the steel sheet 7, since the lower region is formed by a partial indentation method, 500 $\mu$m, which is a value by subtracting the distance between the deepest part of the lower region and the end edge of the coated steel sheet and further a half value of the width of the lower region from 1500 $\mu$m, is the distance N.

The steel sheet 1 in which the lower region is not formed is Comparative Example, and the steel sheets 2 to 7 in which the lower region is formed are Invention Examples (Examples).

Next, under the conditions shown in Nos. 1 to 10 shown in Table 10, the aluminum coating layers and the intermetallic compound layers of the coated steel sheets were cut. The coated steel sheets were butt-welded to manufacture a tailored blank. Then, the (static) tensile strength of the tailored blank, and the corrosion resistance after painting of the first weld metal portion of the hot stamped product were determined.

[Table 10]

| No. | Set of steel sheets | Cutting depth | Ratio between cutting depth and sheet thickness | Distance | Concentration of aluminum contained in first weld metal portion | Corrosion resistance after painting of first weld metal portion | Tensile strength | Overall determination | Remarks |
|---|---|---|---|---|---|---|---|---|---|
| | | y | (y/t) | M | mass% | | | | |
| | | μm | % | μm | | | | | |
| 1 | Steel sheets 1 | 0 | 0.0 | 1500 | 1.52 | A | D | D | Comparative Example |
| 2 | Steel sheets 1 | 10 | 0.8 | 1500 | 1.01 | A | D | D | Comparative Example |
| 3 | Steel sheets 1 | 50 | 4.2 | 0 | 0.02 | D | A | D | Comparative Example |
| 4 | Steel sheets 2 | 30 | 2.5 | 270 | 0.43 | A | A | A | Invention Example |
| 5 | Steel sheets 2 | 100 | 8.3 | 0 | 0.02 | D | A | D | Comparative Example |
| 6 | Steel sheets 3 | 50 | 4.2 | 240 | 0.39 | A | A | A | Invention Example |
| 7 | Steel sheets 4 | 50 | 4.2 | 470 | 0.74 | A | A | A | Invention Example |
| 8 | Steel sheets 5 | 50 | 3.1 | 270 | 0.34 | A | A | A | Invention Example |
| 9 | Steel sheets 6 | 50 | 2.8 | 290 | 0.33 | A | A | A | Invention Example |
| 10 | Steel sheets 7 | 50 | 4.2 | 470 | 0.74 | A | A | A | Invention Example |

The aluminum coating layer and the intermetallic compound layer were cut with an end mill. As the end mill, a tool bottom blade having a diameter $\varphi$ of 6mm and a tip end radius of 0.5 mm was used. The rotational rate of the end mill was set to 40000 rpm and the feed rate was set to 6 m/min to obtain 1.5 mm flat cutting.

In Table 10, for Nos. 1 to 10, the sets of steel sheets, the cutting depth y ($\mu$m), the value of the ratio (y/t) between cutting depth and the sheet thickness according to Expression (34), the distance M, the concentration of aluminum contained in the first weld metal portion, the corrosion resistance after painting of the first weld metal portion, the tensile strength, and the overall determination are respectively shown.

The fact that the set of steel sheets for No. 1 are the steel sheets 1 means that a pair of steel sheets 1 in Table 9 are used.

The sets of steel sheets for Nos. 2 and 3 are the steel sheets 1. The sets of steel sheets for Nos. 4 and 5 are the steel sheets 2. The sets of steel sheets for Nos. 6 to 10 are the steel sheets 3 to 7, respectively.

The fact that the cutting depth y for No. 1 is 0 $\mu$m means that in each steel sheet 1, without cutting the aluminum coating layer and the intermetallic compound layer, in a range of 1500 $\mu$m in which the aluminum coating layer and the intermetallic compound layer are scheduled to be cut, the aluminum coating layer and the intermetallic compound layer remain as it is.

The cutting depths y of Nos. 2 to 10 are 10 $\mu$m, 50 $\mu$m, 30 $\mu$m, 100 $\mu$m, 50 $\mu$m, 50 $\mu$m, 50 $\mu$m, 50 $\mu$m, and 50 $\mu$m, respectively. The first surface and the second surface of each coated steel sheet were respectively cut at the cutting depth y. However, since the lower region is not formed on the second surface of the coated steel sheet, the second surface of the coated steel sheet is cut and then the second coated portion is not formed on the second surface of the coated steel sheet.

Since the total thicknesses of both layers of each of the steel sheets 1 to 7 is 30 $\mu$m, when the cutting depth y is 30 $\mu$m, the base steel sheet is not cut and both the aluminum coating layer and the intermetallic compound layer are cut.

Thus, the values of the ratios (y/t) between the cutting depth and the sheet thickness obtained by Expression (34) of Nos. 1 to 10 are 0.0%, 0.8%, 4.2%, 2.5%, 8.3%, 4.2%, 4.2%, 3.1%, 2.8%, and 4.2%, respectively.

The distance M means the distance from the end edge of the steel sheet to the end edge opposite to the end edge of the steel sheet in the second coated portion as described above.

In No. 1, in a range of 1500 $\mu$m in which the aluminum coating layer and the intermetallic compound layer are scheduled to be cut, the aluminum coating layer and the intermetallic compound layer remain as it is. Thus, the distance M is 1500 $\mu$m.

In No. 2, since both layers having a thickness of 30 $\mu$m before cutting partially remains, the distance M is 1500 $\mu$m.

In No. 3, since the lower region is not formed in the steel sheet 1 and both the aluminum coating layer and the intermetallic compound layer are cut, the distance M is 0 $\mu$m.

In Nos. 4 to 10, the distances M are respectively 270 $\mu$m, 0 $\mu$m, 240 $\mu$m, 470 $\mu$m, 270 $\mu$m, 290 $\mu$m, and 470 $\mu$m.

The concentration of aluminum contained in the first weld metal portion in Nos. 1 to 10 was measured using, for example, the above-mentioned electron beam microanalyser. The concentrations of aluminum of Nos. 1 to 10 are respectively 1.52% (mass), 1.01%, 0.02%, 0.43%, 0.02%, 0.39%, 0.74%, 0.34%, 0.33%, and 0.74%.

<Evaluation>

(Test for Corrosion resistance after painting)

The first weld metal portion was tested in the same manner as in Example 1 of the first embodiment. The determination criterion are the same as those in Example 1.

In Nos. 3 to 5, it was found that the evaluation of the corrosion resistance after painting of the first weld metal portion was "D" (inferior).

In Nos. 1, 2, 4, and 6 to 10, it was found that the evaluation of the corrosion resistance after painting of the first weld metal portion was "A" (excellent).

(Tensile Strength)

From the hot stamped product obtained above, a dumbbell-shaped test piece having a welded portion was collected as a test piece for a tensile strength test.

The test piece was collected to have a parallel portion distance of 20 mm and a parallel portion width of 15 mm and to have a weld line in the center portion of the parallel portion over the entire length so as to be orthogonal to the longitudinal direction. Using this test piece, a tensile strength test was conducted.

-Determination Criteria-

A: Fracture occurred in the steel sheet (base steel sheet).
D: Fracture occurred in the weld metal portion or the like other than the steel sheet (base steel sheet).

In Nos. 1 and 2, it was found that the evaluation of the tensile strength was "D" (inferior).

In Nos. 3 to 10, it was found that the evaluation of the tensile strength was "A" (excellent).

When the evaluation of the corrosion resistance after painting of the first weld metal portion is "A" and the evaluation of the tensile strength is "A", the overall determination evaluation is "A" (excellent). When at least one of the evaluation of the corrosion resistance after painting of the first weld metal portion or the evaluation of the tensile strength is "D", the overall determination evaluation is "D" (inferior).

In Nos. 1 and 3 to 5, it was found that the overall determination evaluation was "D" and in Nos. 4, and 6 to 10, the overall determination evaluation was "A".

In the first weld metal portion formed when a tailored blank is manufactured by butt-welding two steel sheets having the same thickness, and the third weld metal portion formed when a steel pipe is manufactured by welding the end portions of an open tube formed using the steel sheet, the relationships between the specifications of the end portion of the steel sheet and the concentrations of aluminum contained in the first and third weld metal portions are equal to each other. Therefore, examples in which the thicknesses of the coated steel sheet 1 and the coated steel sheet 2 in the first and second embodiments are the same are examples relating to the concentration of aluminum contained in the third weld metal portion when a steel sheet and a steel pipe are manufactured using the coated steel sheet. The same applies to the example Nos. 1 to 10 in the third embodiment.

Conventionally, in a case where an aluminum coated steel sheet is butt-welded, an intermetallic compound is formed due to an increase in the amount of aluminum in the weld metal. Here, in a case where mechanical stress is applied, cracks initiate and the strength of the tailored blank is deteriorated. Alternatively, in a heating step before hot stamping, the aluminum solid-soluted in the weld metal is inhibits austenite transformation in the region and thus deteriorates the strength of the hot stamp forming body. In the steel sheet according to the present disclosure, in the steel sheet end portion region, an exposed layer excluding the intermetallic compound layer is provided. After the steel sheets are butt-welded, in this exposed portion, the intermetallic compound present in the welded portion of the tailored blank is eliminated and the above-mentioned strength deterioration is prevented.

Also, according to the steel sheet according to the present disclosure, during butt welding, all A1 contained in the second coated portion (aluminum coating layer) provided on the end edge side is introduced into the weld metal portion. That is, the concentration of aluminum of the weld metal portion of the tailored blank is adjusted by the amount of A1 of the second coated portion. Thus, the corrosion resistance of the weld metal is improved. In other words, by adjusting the size of the second coated portion, the concentration of aluminum in the weld metal portion of the tailored blank can be adjusted, and the corrosion resistance can be easily controlled. Further, the second coated portion of the present disclosure includes an aluminum coating layer and does not require a large dimension. For example, even when the width of the second coated portion is equal to or less than half of the width of the weld metal portion to be formed in the tailored blank (for example, 500 $\mu$m), the amount of A1 sufficient to improve the corrosion resistance of the weld metal portion can be introduced into the weld metal portion.

According to the present disclosure, the entire second coated portion is incorporated in the weld metal portion and the first exposed portion adjacent to the second coated portion becomes an exposed portion between the weld metal portion and the first coated portion in the tailored blank. That is, by providing the first exposed portion at the position adjacent to the second coated portion including the aluminum coating layer, it is possible to form the first exposed portion between the weld metal portion and the first coated portion while adding a desired amount of Al to the weld metal portion simply by performing butt welding. That is, by butt-welding the steel sheet of the present disclosure, it is possible to form a tailored blank having excellent corrosion resistance and strength.

[Industrial Applicability]

The steel sheet, the tailored blank, the hot stamped product, the steel pipe, the hollow hot stamped product, the method of manufacturing a steel sheet, the method of manufacturing a tailored blank, the method of manufacturing a hot stamped product, the method of manufacturing a steel pipe, and the method of manufacturing a hollow hot stamped product of the present disclosure can be suitably used for maintaining the corrosion resistance after painting and fatigue strength of the weld metal portion.

[Brief Description of the Reference Symbols]

12, 112, 212, 512: base steel sheet
14, 114: aluminum coating layer
16, 116: intermetallic compound layer
22, 122: first exposed portion
23: second exposed portion
24, 124: second coated portion
26, 126: first coated portion
100, 102, 103, 104, 110, 120, 200: steel sheet
100A: end edge
150: first weld metal portion
222: third exposed portion
226, 526: intermetallic compound portion
250: second weld metal portion
300: tailored blank
312: third weld metal portion
522: fourth exposed portion
F1: first direction
F3: second direction
$G_1$: virtual line
$G_2$: virtual line
T1: virtual plane
T2: virtual plane
R2, R3, R7, R8: lower region
S11: steel sheet manufacturing step (steel sheet manufacturing method)
S12: coated steel sheet manufacturing step
S14: removal step
S15: lower portion forming step
S17: cutting step (elimination step)
$Z_1$: first end
$Z_2$: second end

**Claims**

1.  A steel sheet comprising:

    a base steel sheet;
    a first coated portion in which an intermetallic compound layer and an aluminum coating layer are provided on a surface of the base steel sheet in order from the base steel sheet side;
    a first exposed portion in which the base steel sheet is exposed; and
    a second coated portion in which the intermetallic compound layer and the aluminum coating layer are provided on the surface of the base steel sheet in order from the base steel sheet side,
    wherein in a first direction which is perpendicular to a thickness direction of the steel sheet and is directed from the first coated portion to one end edge of the steel sheet, the first coated portion, the first exposed portion, the second coated portion, and the end edge of the steel sheet are disposed in this order on one surface of the base steel sheet,
    at least the first coated portion, the first exposed portion, and the end edge of the steel sheet are disposed in this order on the other surface of the base steel sheet in the first direction, and
    when viewing a cross section parallel to each of the first direction and the thickness direction of the steel sheet, the second coated portion is provided in a lower region which is located on the surface of the base steel sheet and on an inner side of the base steel sheet in the thickness direction of the steel sheet from a virtual line extending in the first direction from a boundary between the first exposed portion and the second coated portion.

2.  A steel sheet comprising:

a base steel sheet;

a first coated portion in which an intermetallic compound layer and an aluminum coating layer are provided on a surface of the base steel sheet in order from the base steel sheet side;

a first exposed portion in which the base steel sheet is exposed; and

a second coated portion in which the intermetallic compound layer and the aluminum coating layer are provided on the surface of the base steel sheet in order from the base steel sheet side,

wherein in a first direction which is perpendicular to a thickness direction of the steel sheet and is directed from the first coated portion to one end edge of the steel sheet, the first coated portion, the first exposed portion, the second coated portion, and the end edge of the steel sheet are disposed in this order on one surface of the base steel sheet,

at least the first coated portion, the first exposed portion, and the end edge of the steel sheet are disposed in this order on the other surface of the base steel sheet in the first direction, and

when viewing a cross section parallel to each of the first direction and the thickness direction of the steel sheet, the second coated portion is provided in an end portion surface of the base steel sheet located on a virtual line extending in the first direction from a boundary between the first exposed portion and the second coated portion or on an outer side in the thickness direction from the virtual line from an inner side of the base steel sheet toward the one surface.

3. The steel sheet according to claim 1 or 2,

wherein when a length from a surface of the second coated portion to the base steel sheet in the thickness direction of the steel sheet is assumed as a coating thickness,

a position of a boundary between the base steel sheet and the intermetallic compound layer in the second coated portion is assumed as a first end,

a position where the second coated portion is present most distant from the first exposed portion in the first direction is assumed as a second end, and

a distance between the first end and the second end in the first direction is assumed as a width of the second coated portion,

the coating thickness at a position separated from the second end to a direction opposite to the first direction by a length of 20% of the width is thicker than the coating thickness at a position separated from the first end to the first direction by a length of 10% of the width.

4. The steel sheet according to any one of claims 1 to 3,

wherein when viewing the cross section, the first exposed portion satisfies the following conditions (A) and (B),

(A) an angle $\alpha$ formed by the following virtual line X and the following virtual line Y is 5.0° to 25.0°, and

(B) a maximum distance h in a vertical direction from the following virtual line Y to the base steel sheet is 1.0 $\mu$m to 5.0 $\mu$m:

virtual line X: a virtual line formed by extending a boundary line between the base steel sheet and the intermetallic compound layer in the first coated portion in the first direction, and

virtual line Y: a virtual line connecting an intersection of a perpendicular line of the virtual line X extending from the virtual line X to the base steel sheet and the base steel sheet, which is an intersection of the perpendicular line from a point where a distance from a boundary point between the first exposed portion and the first coated portion is 0.1 mm on the virtual line X and the base steel sheet, and the boundary point between the first exposed portion and the first coated portion.

5. The steel sheet according to claim 4,

wherein the first exposed portion satisfies the following condition (C),

(C) when a depth of the first exposed portion on the end edge side of the steel sheet from the point where the distance is 0.1 mm on the virtual line X in a depth of the steel sheet in the thickness direction from a virtual line formed by extending a surface of the aluminum coating layer in the first direction to the surface of the base steel sheet is denoted by D ($\mu$m), the D satisfies the following Expression (1-1):

$$D \leq (\text{thickness mm of base steel sheet in first coated portion} \times 0.2)/2 \ldots (1\text{-}1).$$

6. The steel sheet according to claim 4 or 5,

wherein the first exposed portion satisfies the following condition (D),

(D) a curvature radius $R_0$ measured based on the following three points is 260 µm or more:

first point: the boundary point between the first exposed portion and the first coated portion,
second point: the intersection of the perpendicular line from the point where the distance is 0.1 mm on the virtual line X and the base steel sheet, and
third point: a maximum distance point at which the distance in the vertical direction from the virtual line Y to the base steel sheet is a maximum value.

7. The steel sheet according to any one of claims 1 to 6,
wherein the first coated portion, the first exposed portion, the second coated portion, and the end edge of the steel sheet are disposed in this order on the other surface of the base steel sheet in the first direction.

8. The steel sheet according to any one of claims 1 to 7,
wherein in the first direction, the second coated portion is present in a range of 0.9 mm from the end edge of the steel sheet.

9. The steel sheet according to any one of claims 1 to 8,
wherein a width of the first exposed portion in the first direction is 0.1 mm or more and 5.0 mm or less.

10. The steel sheet according to any one of claims 1 to 9,
wherein the base steel sheet includes, as a chemical composition, by mass%,

C: 0.02% to 0.58%,
Mn: 0.20% to 3.00%,
Al: 0.005% to 0.06%
P: 0.03% or less,
S: 0.010% or less,
N: 0.010% or less
Ti: 0% to 0.20%,
Nb: 0% to 0.20%,
V: 0% to 1.0%,
W: 0% to 1.0%,
Cr: 0% to 1.0%,
Mo: 0% to 1.0%,
Cu: 0% to 1.0%,
Ni: 0% to 1.0%,
B: 0% to 0.0100%,
Mg: 0% to 0.05%,
Ca: 0% to 0.05%,
REM: 0% to 0.05%,
Sn: 0% to 0.5%,
Bi: 0% to 0.05%,
Si: 0% to 2.00%, and
a remainder: Fe and impurities.

11. The steel sheet according to any one of claims 1 to 10,
wherein an average thickness of the aluminum coating layer at the first coated portion is 8 µm to 50 µm, and an average thickness of the intermetallic compound layer at the first coated portion is 1 µm to 10 µm.

12. The steel sheet according to any one of claims 1 to 11,
wherein an area Sa mm$^2$ of the second coated portion and a thickness tb mm of the base steel sheet of the first exposed portion of the steel sheet in the cross section parallel to each of the first direction and the thickness direction of the steel sheet satisfy the following Expression (2),

$$Sa \geq 8.51 \times 10^{-4} \times tb \ldots (2).$$

13. The steel sheet according to any one of claims 1 to 12,
wherein the end edge of the steel sheet and the second coated portion are adjacent to each other in the first direction.

14. The steel sheet according to any one of claims 1 to 12, further comprising:
a second exposed portion in which the base steel sheet is exposed between the end edge of the steel sheet and the second coated portion in the first direction.

15. A tailored blank comprising:

a first weld metal portion; and
at least one steel sheet portion connected to another steel sheet portion through the first weld metal portion,
wherein the at least one steel sheet portion includes

a first coated portion in which an intermetallic compound layer and an aluminum coating layer are provided on a surface of a base steel sheet in order from the base steel sheet side, and
a first exposed portion in which the base steel sheet is exposed,

in each of the steel sheet portions, in a second direction which is perpendicular to a thickness direction of each of the steel sheet portions and is directed from the first coated portion to the first weld metal portion, the first coated portion, the first exposed portion, and the first weld metal portion are disposed in this order on the same plane on both surfaces of the base steel sheet, and
a concentration of aluminum of the first weld metal portion is higher than a concentration of aluminum of the steel sheet portion.

16. The tailored blank according to claims 15,
wherein when viewing a cross section parallel to each of the second direction, which is perpendicular to the thickness direction of the steel sheet and is directed from the first coated portion to the first weld metal portion, and the thickness direction of the steel sheet portion, the first exposed portion satisfies the following conditions (A) and (B),

(A) an angle $\alpha$ formed by the following virtual line X and the following virtual line Y is 5.0° to 25.0°, and
(B) a maximum distance h in a vertical direction from the following virtual line Y to the base steel sheet is 1.0 $\mu$m to 5.0 $\mu$m:

virtual line X: a virtual line formed by extending a boundary line between the base steel sheet and the intermetallic compound layer in the first coated portion in the second direction, and
virtual line Y: a virtual line connecting an intersection of a perpendicular line of the virtual line X extending from the virtual line X to the base steel sheet and the base steel sheet, which is an intersection of the perpendicular line from a point where a distance from a boundary point between the first exposed portion and the first coated portion is 0.1 mm on the virtual line X and the base steel sheet, and the boundary point between the first exposed portion and the first coated portion.

17. The tailored blank according to claim 16,
wherein the first exposed portion satisfies the following condition (C),
(C) when a depth of the first exposed portion on the first weld metal portion side from the point where the distance is 0.1 mm on the virtual line X in a depth of the steel sheet in the thickness direction from a virtual line formed by extending a surface of the aluminum coating layer in the second direction to the surface of the base steel sheet is denoted by D ($\mu$m), the D satisfies the following Expression (1-1):

$$D \leq (\text{thickness mm of base steel sheet in first coated portion} \times 0.2)/2 \ldots (1\text{-}1).$$

18. The tailored blank according to claim 16 or 17,
wherein the first exposed portion satisfies the following condition (D),
(D) a curvature radius $R_0$ measured based on the following three points is 260 $\mu$m or more:

first point: the boundary point between the first exposed portion and the first coated portion,
second point: the intersection of the perpendicular line from the point where the distance is 0.1 mm on the virtual line X and the base steel sheet, and

third point: a maximum distance point at which the distance in the vertical direction from the virtual line Y to the base steel sheet is a maximum value.

**19.** The tailored blank according to any one of claims 15 to 18,
wherein a concentration of aluminum contained in the first weld metal portion is 0.065 mass% to 1 mass%.

**20.** A hot stamped product comprising:

a first intermetallic compound portion in which a first intermetallic compound layer is provided on a surface of a first base steel sheet;
a third exposed portion in which the first base steel sheet is exposed;
a second weld metal portion;
a fourth exposed portion in which a second base steel sheet is exposed; and
a second intermetallic compound portion in which a second intermetallic compound layer is provided on a surface of the second base steel sheet,
wherein the first intermetallic compound portion, the third exposed portion, the second weld metal portion, the fourth exposed portion, and the second intermetallic compound portion are disposed in this order along the surface of the first base steel sheet and the surface of the second base steel sheet, and
a concentration of aluminum of the second weld metal portion is higher than a concentration of aluminum of each of the first base steel sheet and the second base steel sheet.

**21.** The hot stamped product according to claim 20,
wherein when viewing a cross section parallel to each of a thickness direction of the steel sheet and a second direction which is perpendicular to the thickness direction of the steel sheet and is directed from the first intermetallic compound portion to the second weld metal portion,
the third exposed portion satisfies the following conditions (A) and (B),

(A) an angle $\alpha$ formed by the following virtual line X and the following virtual line Y is 5.0° to 25.0°, and
(B) a maximum distance h in the vertical direction from the following virtual line Y to the first base steel sheet is 1.0 $\mu$m to 5.0 $\mu$m:

virtual line X: a virtual line formed by extending a boundary line between the first base steel sheet and the first intermetallic compound layer in the first intermetallic compound portion in the second direction, and
virtual line Y: a virtual line connecting an intersection of a perpendicular line of the virtual line X from the virtual line X to the first base steel sheet and the first base steel sheet, which is an intersection of the perpendicular line from a point where a distance from a boundary point between the third exposed portion and the first intermetallic compound portion is 0.1 mm on the virtual line X and the first base steel sheet, and the boundary point between the third exposed portion and the first intermetallic compound portion.

**22.** The hot stamped product according to claim 21,
wherein the third exposed portion satisfies the following condition (C),
(C) when a depth of the third exposed portion on the second weld metal portion side from the point where the distance is 0.1 mm on the virtual line X in a depth of the steel sheet in the thickness direction from a virtual line formed by extending a surface of the first intermetallic compound layer in the second direction to the surface of the first base steel sheet is denoted by D ($\mu$m), the D satisfies the following Expression (1-2):

$$D \leq (\text{thickness mm of first base steel sheet in first intermetallic compound portion} \times 0.2)/2 \ldots (1\text{-}2).$$

**23.** The hot stamped product according to claim 21 or 22,
wherein the third exposed portion satisfies the following condition (D),
(D) a curvature radius $R_0$ measured based on the following three points is 260 $\mu$m or more:

first point: the boundary point between the third exposed portion and the first intermetallic compound portion,
second point: the intersection of the perpendicular line from the point where the distance is 0.1 mm on the virtual line X and the first base steel sheet, and

third point: a maximum distance point at which the distance in the vertical direction from the virtual line Y to the first base steel sheet is a maximum value.

**24.** A steel pipe comprising:

a third weld metal portion; and

a third steel sheet which is formed in an open tubular shape in which two end portions in a circumferential direction face each other, and in which the two end portions are connected to each other through the third weld metal portion,

wherein each of the two end portions of the third steel sheet includes

a first coated portion in which an intermetallic compound layer and an aluminum coating layer are provided on both surfaces of a base steel sheet in order from the base steel sheet side, and

a first exposed portion in which the base steel sheet is exposed,

in the circumferential direction, the first coated portion, the first exposed portion, and the third weld metal portion are disposed in this order, and

a concentration of aluminum of the third weld metal portion is higher than a concentration of aluminum of the base steel sheet.

**25.** The steel pipe according to claim 24,

wherein when viewing a cross section parallel to each of a thickness direction of the steel sheet and a second direction which is perpendicular to the thickness direction of the steel sheet and is directed from the first coated portion to the third weld metal portion,

the first exposed portion satisfies the following conditions (A) and (B),

(A) an angle $\alpha$ formed by the following virtual line X and the following virtual line Y is 5.0° to 25.0°, and

(B) a maximum distance h in a vertical direction from the following virtual line Y to the base steel sheet is 1.0 $\mu$m to 5.0 $\mu$m,

virtual line X: a virtual line formed by extending a boundary line between the base steel sheet and the intermetallic compound layer in the first coated portion in the second direction, and

virtual line Y: a virtual line connecting an intersection of a perpendicular line of the virtual line X extending from the virtual line X to the base steel sheet and the base steel sheet, which is an intersection of the perpendicular line from a point where a distance from a boundary point between the first exposed portion and the first coated portion is 0.1 mm on the virtual line X and the base steel sheet, and the boundary point between the first exposed portion and the first coated portion.

**26.** The steel pipe according to claim 25,

wherein the first exposed portion satisfies the following condition (C),

(C) when a depth of the first exposed portion on the third weld metal portion side from the point where the distance is 0.1 mm on the virtual line X in a depth of the steel sheet in the thickness direction from a virtual line formed by extending a surface of the aluminum coating layer in the second direction to the surface of the base steel sheet in the thickness direction of the steel sheet is denoted by D ($\mu$m), the D satisfies the following Expression (1-1):

$$D \leq (\text{thickness mm of base steel sheet in first coated portion} \times 0.2)/2 \ldots (1\text{-}1).$$

**27.** The steel pipe according to claim 25 or 26,

wherein the first exposed portion satisfies the following condition (D),

(D) a curvature radius $R_0$ measured based on the following three points is 260 $\mu$m or more:

first point: the boundary point between the first exposed portion and the first coated portion,

second point: the intersection of the perpendicular line from the point where the distance is 0.1 mm on the virtual line X and the base steel sheet, and

third point: a maximum distance point at which the distance in the vertical direction from the virtual line Y to the base steel sheet is a maximum value.

**28.** The steel pipe according to any one of claims 24 to 27,
wherein a concentration of aluminum contained in the third weld metal portion is 0.065 mass% to 1 mass%.

**29.** A hollow hot stamped product comprising:

a third intermetallic compound portion in which a third intermetallic compound layer is provided on a surface of a third base steel sheet;
a fifth exposed portion in which the third base steel sheet is exposed;
a third weld metal portion in which a concentration of aluminum contained is 0.065 mass% to 1 mass%;
a sixth exposed portion in which a fourth base steel sheet is exposed; and
a fourth intermetallic compound portion in which a fourth intermetallic compound layer is provided on a surface of the fourth base steel sheet,
wherein the third intermetallic compound portion, the fifth exposed portion, the third weld metal portion, the sixth exposed portion, and the fourth intermetallic compound portion are disposed in this order along each of both surfaces of the third base steel sheet and each of both surfaces of the fourth base steel sheet, and the concentration of aluminum of the third weld metal portion is higher than a concentration of aluminum of each of the third base steel sheet and the fourth base steel sheet.

**30.** The hollow hot stamped product according to claim 29,
wherein when viewing a cross section parallel to each of a thickness direction of the steel sheet and a second direction which is perpendicular to the thickness direction of the steel sheet and is directed from the third intermetallic compound portion to the third weld metal portion,
the fifth exposed portion satisfies the following conditions (A) and (B),

(A) an angle $\alpha$ formed by the following virtual line X and the following virtual line Y is 5.0° to 25.0°, and
(B) a maximum distance h in a vertical direction from the following virtual line Y toward the third base steel sheet is 1.0 $\mu$m to 5.0 $\mu$m:

virtual line X: a virtual line formed by extending a boundary line between the third base steel sheet and the third intermetallic compound layer in the third intermetallic compound portion in the second direction, and
virtual line Y: a virtual line connecting an intersection of a perpendicular line of the virtual line X from the virtual line X to the third base steel sheet and the third base steel sheet, which is an intersection of the perpendicular line from a point where a distance from a boundary point between the fifth exposed portion and the third intermetallic compound portion is 0.1 mm on the virtual line X and the third base steel sheet, and the boundary point between the fifth exposed portion and the third intermetallic compound portion.

**31.** The hollow hot stamped product according to claim 30,
wherein the fifth exposed portion satisfies the following condition (C),
(C) when a depth of the fifth exposed portion on the third weld metal portion side from the point where the distance is 0.1 mm on the virtual line X in a depth of the steel sheet in the thickness direction from a virtual line formed by extending a surface of the third intermetallic compound layer in the second direction to the surface of the third base steel sheet is denoted by D ($\mu$m), the D satisfies the following Expression (1-3):

$$D \leq (\text{thickness mm of third base steel sheet in third intermetallic compound portion} \times 0.2)/2 \ldots (1\text{-}3).$$

**32.** The hollow hot stamped product according to claim 30 or 31,
wherein the fifth exposed portion satisfies the following condition (D),
(D) a curvature radius $R_0$ measured based on the following three points is 260 $\mu$m or more:

first point: the boundary point between the fifth exposed portion and the third intermetallic compound portion,
second point: the intersection of the perpendicular line from the point where the distance is 0.1 mm on the virtual line X and the third base steel sheet, and
third point: a maximum distance point at which the distance in the vertical direction from the virtual line Y to the third base steel sheet is a maximum value.

**33.** A method of manufacturing a steel sheet comprising:

a step of providing a coated steel sheet in which an intermetallic compound layer and an aluminum coating layer are provided on a surface of a base steel sheet in order from the base steel sheet side; and

a removal step of partially removing the aluminum coating layer and the intermetallic compound layer to form a first exposed portion in which the base steel sheet is exposed, a first coated portion in which the intermetallic compound layer and the aluminum coating layer remain on the surface of the base steel sheet in order from the base steel sheet side, and a second coated portion in which the intermetallic compound layer and the aluminum coating layer remain on the surface of the base steel sheet,

wherein in the removal step, in a first direction which is perpendicular to a thickness direction of the coated steel sheet and is directed from a center portion of the coated steel sheet to one end edge of the coated steel sheet in plan view, the first coated portion, the first exposed portion, the second coated portion, and the end edge of the coated steel sheet are disposed in this order on one surface of the base steel sheet, and

in the first direction, at least the first coated portion, the first exposed portion, and the end edge of the coated steel sheet are disposed in this order on the other surface of the base steel sheet.

**34.** The method of manufacturing a steel sheet according to claim 33, further comprising:

a lower portion forming step of forming a lower region on a surface of the base steel sheet of the coated steel sheet by compressing or cutting the coated steel sheet to deform a part of the coated steel sheet before the removal step,

wherein when a direction which is perpendicular to a thickness direction of the coated steel sheet and is directed from a center portion of the coated steel sheet to one end edge of the coated steel sheet in plan view is assumed as a first direction,

the lower region is a region located on an inner side of the base steel sheet in the thickness direction of the coated steel sheet from a virtual line extending in the first direction from a boundary between the first exposed portion and the second coated portion when viewing a cross section parallel to each of the first direction and the thickness direction of the steel sheet, and

in the removal step, at least the aluminum coating layer and the intermetallic compound layer present on an outer side of the coated steel sheet in the thickness direction from the virtual plane are removed to form the second coated portion on the lower region.

**35.** The method of manufacturing a steel sheet according to claim 34,

wherein when a thickness per one surface of the aluminum coating layer is a $\mu$m,

a thickness per one surface of the intermetallic compound layer is denoted by b $\mu$m,

a thickness of the coated steel sheet is denoted by t $\mu$m,

a deepest lower portion depth of the lower region is denoted by x $\mu$m,

the lower portion depth represents a distance from the virtual line to the surface of the base steel sheet in the lower region,

a depth of the coated steel sheet in the thickness direction in a region cut in the removal step is denoted by y $\mu$m, and

a distance between the first coated portion and the second coated portion is denoted by N $\mu$m,

Expressions (5) to (9) are satisfied:

$$9 \leq a + b < 60 \ldots (5)$$

$$2\% \leq (x/t) \leq 15\% \ldots (6)$$

$$a + b < y \ldots (7)$$

$$(y/t) \leq 7\% \ldots (8)$$

$$N \geq 200 \ldots (9).$$

36. The method of manufacturing a steel sheet according to claim 34 or 35,
    wherein in the lower portion forming step, the coated steel sheet is cut by shearing or blanking to form the lower region.

37. The method of manufacturing a steel sheet according to any one of claims 34 to 36,
    wherein in the lower portion forming step, the lower region is formed on each of both surfaces of the coated steel sheet.

38. The method of manufacturing a steel sheet according to claim 33,
    wherein a cutting step of cutting the coated steel sheet is performed, and in the removal step,
    by partially removing the aluminum coating layer and the intermetallic compound layer,
    when viewing a cross section parallel to each of the first direction and the thickness direction of the steel sheet,
    the second coated portion is provided on an end portion surface of the base steel sheet located on a virtual line
    extending in the first direction from a boundary between the first exposed portion and the second coated portion or
    on an outer side in the thickness direction from the virtual line from an inner side of the base steel sheet toward the
    one surface.

39. The method of manufacturing a steel sheet according to any one of claims 33 to 38,
    wherein when a length from a surface of the second coated portion to the base steel sheet in the thickness direction
    of the steel sheet is assumed as a coating thickness,
    a position of a boundary between the base steel sheet and the intermetallic compound layer in the second coated
    portion is assumed as a first end,
    a position where the second coated portion is present most distant from the first exposed portion in the first direction
    is assumed as a second end, and
    a distance between the first end and the second end in the first direction is assumed as a width of the second coated
    portion,
    in the removal step,
    the aluminum coating layer and the intermetallic compound layer are removed such that the coating thickness at a
    position separated from the second end to a direction opposite to the first direction by a length of 20% of the width
    is thicker than the coating thickness at a position separated from the first end to the first direction by a length of 10%
    of the width.

40. The method of manufacturing a steel sheet according to any one of claims 33 to 39,
    wherein in the removal step, in the first direction, the first coated portion, the first exposed portion, the second coated
    portion, and the end edge of the coated steel sheet are disposed in this order on the other surface of the base steel
    sheet.

41. The method of manufacturing a steel sheet according to any one of claims 33 to 40,
    wherein in the removal step, a step of mechanically removing the aluminum coating layer and the intermetallic
    compound layer is performed.

42. The method of manufacturing a steel sheet according to any one of claims 33 to 41,
    wherein in the removal step, the aluminum coating layer, the intermetallic compound layer, and the base steel sheet
    of the coated steel sheet are partially removed such that the first exposed portion satisfies the following conditions
    (A) and (B) when viewing a cross section parallel to each of the thickness direction and the first direction,

    (A) an angle $\alpha$ formed by the following virtual line X and the following virtual line Y is 5.0° to 25.0°, and
    (B) a maximum distance h in a vertical direction from the following virtual line Y to the base steel sheet is 1.0
    $\mu$m to 5.0 $\mu$m:

    virtual line X: a virtual line formed by extending a boundary line between the base steel sheet and the intermetallic
    compound layer in the first coated portion in the first direction, and
    virtual line Y: a virtual line connecting an intersection of a perpendicular line of the virtual line X extending from the
    virtual line X to the base steel sheet and the base steel sheet, which is an intersection of the perpendicular line from
    a point where a distance from a boundary point between the first exposed portion and the first coated portion is 0.1
    mm on the virtual line X and the base steel sheet, and the boundary point between the first exposed portion and
    the first coated portion.

43. The method of manufacturing a steel sheet according to claim 42,
    wherein in the removal step, the aluminum coating layer, the intermetallic compound layer, and the base steel sheet of the coated steel sheet are partially removed such that the first exposed portion satisfies the following condition (C),
(C) when a depth of the first exposed portion on the end edge side of the steel sheet from the point where the distance is 0.1 mm on the virtual line X in a depth of the steel sheet in the thickness direction from a virtual line formed by extending a surface of the aluminum coating layer in the first direction to the surface of the base steel sheet is denoted by D ($\mu$m), the D satisfies the following Expression (1-1):

$$D \leq (\text{thickness mm of base steel sheet in first coated portion} \times 0.2)/2 \ldots (1\text{-}1).$$

44. The method of manufacturing a steel sheet according to claim 42 or 43,
wherein in the removal step, the aluminum coating layer, the intermetallic compound layer, and the base steel sheet of the coated steel sheet are partially removed such that the first exposed portion satisfies the following condition (D),
(D) a curvature radius $R_0$ measured based on the following three points is 260 $\mu$m or more:

first point: the boundary point between the first exposed portion and the first coated portion,
second point: the intersection of the perpendicular line from the point where the distance is 0.1 mm on the virtual line X and the base steel sheet, and
third point: a maximum distance point at which the distance in the vertical direction from the virtual line Y to the base steel sheet is a maximum value.

45. A method of manufacturing a tailored blank comprising:

a step of providing at least one steel sheet according to any one of claims 1 to 14; and
a welding step of butt-welding an end portion of the steel sheet in which the second coated portion is provided and another steel sheet to manufacture a tailored blank,
wherein in the welding step, the steel sheet and the other steel sheet are welded together through a first weld metal portion incorporating the entire second coated portion, and a first exposed portion in which the base steel sheet is exposed is formed between the first weld metal portion and the first coated portion.

46. A method of manufacturing a hot stamped product comprising:
hot press-forming the tailored blank according to any one of claims 15 to 19 to manufacture a hot stamped product.

47. A method of manufacturing a steel pipe comprising:

forming the steel sheet according to any one of claims 1 to 14 into an open tubular shape such that two end portions in a circumferential direction face each other and the second coated portion is disposed in at least one of the two end portions; and
butt-welding the two end portions of the steel sheet to connect the two end portions through a second weld metal portion and incorporate the entire second coated portion melted during butt welding in the second weld metal portion.

48. A method of manufacturing a hollow hot stamped product comprising:
quenching the steel pipe according to any one of claims 24 to 28 to manufacture a hollow hot stamped product.

FIG. 1

EP 3 812 083 A1

FIG. 2

EP 3 812 083 A1

FIG. 3

EP 3 812 083 A1

FIG. 4

EP 3 812 083 A1

FIG. 5

FIG. 6

EP 3 812 083 A1

FIG. 7

EP 3 812 083 A1

FIG. 8

104    104A

104B

FIG. 9

311 (104)    104A

104B

FIG. 10

EP 3 812 083 A1

# FIG. 11

# FIG. 12

FIG. 13

0.8 mm STEEL SHEETS
1.6 mm STEEL SHEETS
2.3 mm STEEL SHEETS
1.8 mm and 1.2 mm STEEL SHEETS

CONCENTRATION OF ALUMINUM CONTAINED IN FIRST WELD METAL PORTION (mass%)

1.0mass%

0.065mass%

CROSS SECTIONAL AREA OF SECOND COATED PORTION
(mm$^2$)

FIG. 14

FIG. 15

EP 3 812 083 A1

FIG. 16

## FIG. 17

EP 3 812 083 A1

FIG. 18

FIG. 19

FIG. 20

EP 3 812 083 A1

FIG. 21

FIG. 22

EP 3 812 083 A1

## FIG. 23

S10

```
        START
```

S11
STEEL SHEET MANUFACTURING STEP

COATED STEEL SHEET
MANUFACTURING STEP — S12

S14
REMOVAL STEP

LOWER PORTION
FORMING STEP — S15 (S31, S36)

CUTTING STEP — S17

BUTT WELDING STEP — S21

```
        END
```

## FIG. 24

400

402

S

t

101

101A

14

16

12

16

14

401a

401

Z

Y

X

## FIG. 25

## FIG. 26

FIG. 27

FIG. 28

## FIG. 29

101

T1

425

14
16
12
16
14
420

R7

420a

Z
Y
X

## FIG. 30

102

42
14  16
22
26
14
16
12
16
14

22

26

26

Z
Y
X

## FIG. 31

## FIG. 32

FIG. 33

FIG. 34

FIG. 35

# FIG. 36

(A)

101

(B)

101

111

(C)

111
(100)

24

22

Z

X

Y

# FIG. 37

(A)

(B)

(C)

(D)

## FIG. 38

(A)  (B)

## FIG. 39

(A)

(B)

FIG. 40

EP 3 812 083 A1

FIG. 41

EP 3 812 083 A1

FIG. 42

EP 3 812 083 A1

# FIG. 43

FIG. 44

EP 3 812 083 A1

## INTERNATIONAL SEARCH REPORT

| | International application No. |
|---|---|
| | PCT/JP2019/019417 |

**A. CLASSIFICATION OF SUBJECT MATTER**
Int.Cl. B23K31/00(2006.01)i, B21C37/08(2006.01)i, C22C38/00(2006.01)i, C22C38/58(2006.01)i, C23C2/12(2006.01)i

According to International Patent Classification (IPC) or to both national classification and IPC

**B. FIELDS SEARCHED**

Minimum documentation searched (classification system followed by classification symbols)
Int.Cl. B23K31/00, B21C37/08, C22C38/00, C22C38/58, C23C2/12

Documentation searched other than minimum documentation to the extent that such documents are included in the fields searched
| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2015-536246 A (SHILOH INDUSTRIES, INC.) 21 December 2015, paragraphs [0009]-[0031], fig. 2-16 & US 2014/0151347 A1 & WO 2014/085818 A1, page 3, line 26 to page 15, line 19, fig. 2-16 & CN 104822485 A & KR 10-2015-0086485 A | 2, 7-9<br>10-13, 45, 47<br>1, 3-6, 14 |
| Y | WO 2015/097891 A1 (NIPPON STEEL & SUMITOMO METAL CORPORATION) 02 July 2015, claim 1 & US 2016/0312325 A1, claim 1 & EP 3088547 A1 & KR 10-2016-0090336 A & CN 105849294 A | 10-13, 45, 47 |
| Y | JP 4-197515 A (NISSHIN STEEL CO., LTD.) 17 July 1992, claim 1 (Family: none) | 47 |

☐ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 01 August 2019 (01.08.2019) | 13 August 2019 (13.08.2019) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

## INTERNATIONAL SEARCH REPORT

International application No.

PCT/JP2019/019417

**Box No. II**    **Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III**    **Observations where unity of invention is lacking (Continuation of item 3 of first sheet)**

This International Searching Authority found multiple inventions in this international application, as follows:
See extra sheet

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.: 1-14, 45, 47

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

**INTERNATIONAL SEARCH REPORT**

| International application No. |
|---|
| PCT/JP2019/019417 |

\<Continuation of Box No. III\>

Document 1: JP 2015-536246 A (SHILOH INDUSTRIES, INC.) 21 December 2015, paragraphs [0009]-[0031], fig. 2-16
    The claims are classified into the five inventions below.
(Invention 1) Claims 1-14, 45, and 47
    Since document 1 (particularly, fig. 6, figs. 8-9, fig. 13) discloses a "steel sheet provided with a base steel sheet; a first plating part having an intermetallic compound layer and an aluminum plating layer which are sequentially provided on the surface of the base steel sheet from the base steel sheet side; a first exposing part which exposes the base steel sheet; and a second plating part having an intermetallic compound layer and an aluminum plating layer which are sequentially provided on the surface of the base steel sheet from the base steel sheet side, wherein in a first direction perpendicular to the thickness direction of the steel sheet and directed toward one end edge of the steel sheet from the first plating part, the first plating part, the exposing part, the second plating part, and the one end edge of the steel sheet are disposed in this order on one sided surface of the base steel sheet, and in the first direction, at least the first plating part, the first exposing part, the second plating part, and the one end edge of the steel sheet are disposed in this order on the other sided surface of the base steel sheet," the invention in claim 1 has the special technical feature in which a steel sheet, "when viewed in sectional views parallel to a first direction and the thickness direction of the steel sheet, respectively, a second plating part is provided on a lower region on the surface of the base steel sheet, the lower portion being positioned at a further inner side of the base steel sheet in the thickness direction of the steel sheet than a virtual line extending in the first direction from a boundary between the first exposing part and the second plating part." In addition, the invention in claims 3-14, 45, and 47 also has the same special technical feature as the invention in claim 1. In addition, as a result of carrying out the international search for claim 1, the international search for the invention in claim 2 could be carried out without substantially additional prior art search and judgment.
    Thus, the invention in claims 1-14, 45, and 47 is classified as invention 1.

(Invention 2) Claims 15-19, 24-28, and 46, 48
    The invention in claim 15 cannot be said to have an identical or corresponding special technical feature to the invention in claim 1 classified as invention 1. In addition, the invention in claim 15 has low technical relevance to the invention in claim 1. Thus, the invention in claim 15 is not considered to be inventively related to the invention in claim 1. In addition, the invention in claim 15 is not substantially identical or equivalent to any of the claims classified as invention 1.
    Thus, the invention in claim 15 cannot be classified as invention 1.
    In addition, the invention in claim 15 has a special technical feature and the invention in claims 16-19, 24-28, 46, and 48 also has the same technical feature to the invention in claim 15.
    Accordingly, the invention in claims 15-19, 24-28, 46, and 48 is classified as invention 2.

Form PCT/ISA/210 (extra sheet) (January 2015)

**INTERNATIONAL SEARCH REPORT**

| International application No. |
|---|
| PCT/JP2019/019417 |

(Invention 3) Claims 20-23

The invention in claim 20 cannot be said to have an identical or corresponding special technical feature to the invention in claim 1 classified as invention 1 or the invention in claim 15 classified as invention 2. In addition, the invention in claim 20 has low technical relevance to the invention in claim 1 or the invention in claim 15. Thus, the invention in claim 20 is not considered to be inventively related to the invention in claim 1 or the invention in claim 15. In addition, the invention in claim 20 is not substantially identical or equivalent to any of the claims classified as invention 1 or 2.

Thus, the invention in claim 20 cannot be classified as invention 1 or 2.

In addition, the invention in claim 20 has a special technical feature and the invention in claims 21-23 also has the same technical feature to the invention in claim 20.

Accordingly, the invention in claims 20-23 is classified as invention 3.

(Invention 4) Claims 29-32

The invention in claim 29 cannot be said to have an identical or corresponding special technical feature to the invention in claim 1 classified as invention 1, the invention in claim 15 classified as invention 2, or the invention in claim 20 classified as invention 3. In addition, the invention in claim 29 has low technical relevance to the invention in claim 1, the invention in claim 15, or the invention in claim 20. Thus, the invention in claim 29 is not considered to be inventively related to the invention in claim 1, the invention in claim 15, or the invention in claim 20. In addition, the invention in claim 29 is not substantially identical or equivalent to any of the claims classified as invention 1, 2 or 3.

Thus, the invention in claim 29 cannot be classified as invention 1, 2 or 3.

In addition, the invention in claim 29 has a special technical feature and the invention in claims 30-32 also has the same technical feature to the invention in claim 29.

Accordingly, the invention in claims 29-32 is classified as invention 4.

(Invention 5) Claims 33-44

The invention in claim 33 cannot be said to have an identical or corresponding special technical feature to the invention in claim 1 classified as invention 1, the invention in claim 15 classified as invention 2, the invention in claim 20 classified as invention 3, or the invention in claim 29 classified as invention 4. In addition, the invention in claim 33 has low technical relevance to the invention in claim 1, the invention in claim 15, the invention in claim 20, or the invention in claim 29. Thus, the invention in claim 33 is not considered to be inventively related to the invention in claim 1, the invention in claim 15, the invention in claim 20 or the invention in claim 29. In addition, the invention in claim 33 is not substantially identical or equivalent to any of the claims classified as invention 1, 2, 3 or 4.

Thus, the invention in claim 33 cannot be classified as invention 1, 2, 3 or 4.

In addition, the invention in claim 33 has a special technical feature and the invention in claims 34-44 also has the same technical feature to the invention in claim 33.

Accordingly, the invention in claims 33-44 is classified as invention 5.

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018119189 A
- JP 2018119190 A
- JP 2018167169 A
- JP 2018202087 A
- JP 2018041553 W
- JP 2019001922 W

- JP 2009534529 W
- JP 2015525677 W
- JP 2015523210 W
- JP 2015536246 W
- CN 106334875